# EUROPEAN PATENT SPECIFICATION

(11) **EP 1 449 699 B1**
(45) Date of publication and mention of the grant of the patent: **15.02.2012**
(21) Application number: 03251041.4
(22) Date of filing: 20.02.2003
(51) Int. Cl.: B60K 6/445, B60K 6/387, B60W 20/00

(54) **Compound power drive system including dynamo-electric units**
Hybridantriebssystem mit dynamo-elektrischen Einheiten
Système de propulsion hybride avec unités dynamo-électriques

(43) Date of publication of application: 25.08.2004
(60) Divisional application: 10185033.7
(73) Proprietor: Yang, Tai-Her, Si-Hu Town, Dzan-Hwa (TW)
(72) Inventor: Yang, Tai-Her, Si-Hu Town, Dzan-Hwa (TW)
(74) Representative: Wright, Howard Hugh Burnby

(56) References cited:
- EP-A- 0 798 844
- EP-A- 0 806 314
- EP-A- 0 826 544
- EP-A- 0 901 922
- EP-A- 1 092 581
- EP-A- 1 142 743
- EP-A- 1 160 117
- EP-A- 1 216 871
- US-A1- 2002 108 373
- US-B1- 6 394 924

## Description

### BACKGROUND OF THE INVENTION

### (a) Field of the Invention

The present invention is related to a drive dynamo-electric unit controlled compound system comprised of one dynamo-electric unit or a primary and a secondary dynamo-electric unit units or more than two dynamo-electric unit units incorporated with engine or other rotating moment device, and one unit or more than one unit of centrifugal clutch, one-way transmission mechanism or output clutch or related transmission mechanism and manual control interface, central controller and storage device to create specific control pattern and to execute the operation of specific compound power function by selection among those units and control of drive control device operation.

### (b) Description of the Prior Art:

The present invention by incorporating an engine to a primary dynamo-electric unit and a transmission mechanism to create new functions as supplementary to a prior art of incorporating an engine to a single dynamo-electric unit under European Patent No. 0826544 (formerly Application No. 96306388.8) invented by the same inventor of this application.

### SUMMARY OF THE INVENTION

The primary purpose of the present invention is to provide an drive dynamo-electric unit controlled compound system comprised of one dynamo-electric unit or a primary and a secondary dynamo-electric unit units or more than two dynamo-electric unit units incorporated with engine or other rotating moment device, and one unit or more than one unit of centrifugal clutch, one-way transmission mechanism or output clutch or related transmission mechanism and manual control interface, central controller and storage device to create specific control pattern and to execute the operation of specific compound power function by selection among those units and control of drive control device operation.

Accordingly, the present invention provides a speed-controlled dynamo-electric compound system comprising: an engine having an output shaft; a primary dynamo-electric unit arranged to rotate a load side shaft directly or through a transmission mechanism; a centrifugal clutch having a first side connected to the load side shaft and a second side connected to the output shaft of the engine; a power generation unit driven by the engine; a manual control interface for controlling the system via a central controller; a storage device for charging by the power generation unit to output electric energy to drive the dynamo-electric unit whereby rotation of the dynamo-electric unit at a preset speed causes the first side of the centrifugal clutch to engage the second side and thereby connect the engine to the load side shaft; a load connected to the load side shaft through an output device; and a one-way transmission providing power transmission between the engine and the load side shaft, the arrangement being such that, when the centrifugal clutch is engaged, the engine drive the load side shaft; and, when the centrifugal clutch is disengaged, the engine drives the dynamo-electric unit via the power generation unit to supply power and/or charges the storage device.

EP-A-0 806 314 discloses the features of the preamble of claim 1.

### BRIEF DESCRIPTION OF THE DRAWINGS

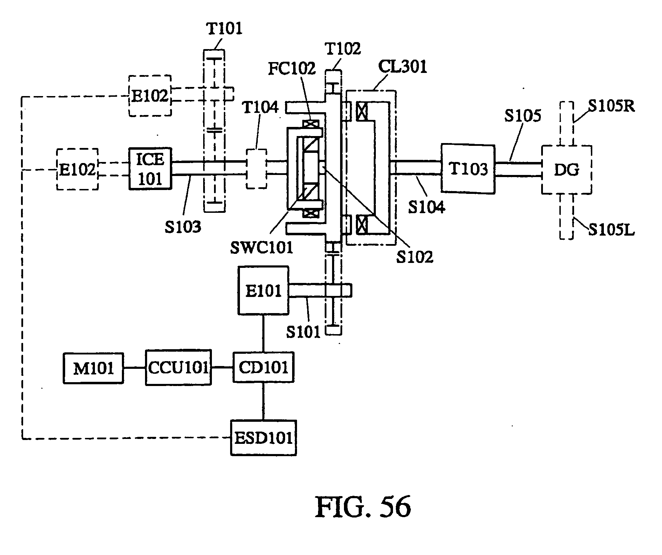

Figures 1 to 21 and 54, 59 to 61 show examples of compound systems which do not form embodiments of the invention. Figures 22 to 53 and 55 to 58 show embodiments of the present invention.
Fig. 1 is a view of a first example of an application system with an centrifugal clutch as the drive control;
Fig. 2 is a view of a second example of an application system with an centrifugal clutch as the drive control;
Fig. 3 is a view of a third example of an application system with an centrifugal clutch as the drive control;
Fig. 4 is a view of a fourth example of an application system with an centrifugal clutch as the drive control;
Fig. 5 is a schematic view showing that a first dynamo-electric unit from the fourth example is replaced by two independent dynamo-electric unit units respectively provided by the side of two output shafts from the differential gear unit;
Fig. 6 is a view showing that the first example is provided with a controllable clutch;
Fig. 7 is a view showing that the first example given in Fig. 6 is provided with an output clutch,
Fig. 8 is a schematic view of an example showing that the primary dynamo-electric unit given in Fig. 7 is further replaced by two independent dynamo-electric unit units respectively provided by the side of two output shafts from the differential gear unit;
Fig. 9 is a view of a first example of an centrifugal clutch as the drive control provided opposite to the acting direction;
Fig. 10 is a view of a second example of an centrifugal clutch as the drive control provided opposite to the acting direction;
Fig. 11 is a view of a third example of an centrifugal clutch as the drive control provided opposite to the acting direction;
Fig. 12 is a view of a fourth example of an centrifugal clutch as the drive control provided opposite to the acting direction;
Fig. 13 is a schematic view showing that in the fourth example, the primary dynamo-electric unit is replaced by two independent dynamo-electric unit units respectively provided by the side of two output shafts from the differential gear unit;
Fig. 14 is a view showing that the example given in Fig. 15 is provided with an output clutch;
Fig. 15 is a view showing that the example given in Fig. 14 is provided with an output clutch;
Fig. 16 is a view showing that the primary dynamo-electric unit of the example given in Fig. 15 is further replaced by two independent dynamo-electric unit units respectively provided by the side of two output shafts from the differential gear unit;
Fig. 17 is a view showing that the primary dynamo-electric unit and a steering shaft on load side of first example from Fig. 9 share the same structure;
Fig. 18 is a view showing that an additional secondary dynamo-electric unit is directly coupled to the engine steering shaft or engaging in mutual transmission with the transmission mechanism;
Fig. 19 is a view showing that the primary dynamo-electric unit in the example taken from Fig. 17 is replaced by two independent dynamo-electric unit units respectively provided by the side of two output shafts from the differential gear unit;
Fig. 20 is a view showing that the primary dynamo-electric unit in the example taken from Fig. 18 is replaced by two independent dynamo-electric unit units respectively provided by the side of two output shafts from the differential gear unit;
Fig. 21 is a view showing that an automatic transmission mechanism provided between the engine and the drive shaft;
Fig. 22 is a first preferred embodiment of an application system of the example taken from Fig. 1 that has a one-way transmission mechanism connected in series with the driven drawing side of the centrifugal clutch as the drive control;
Fig 23 is a second preferred embodiment of an application system of the example taken from Fig. 2 that has a one-way transmission mechanism connected in series with the driven drawing side of the centrifugal clutch as the drive control;
Fig. 24 is a third preferred embodiment of an application system of the example taken from Fig. 3 that has a one-way transmission mechanism connected in series with the driven drawing side of the centrifugal clutch as the drive control;
Fig. 25 is a fourth preferred embodiment of an application system of the example taken from Fig. 4 that has a one-way transmission mechanism connected in series with the driven side of the centrifugal clutch as the drive control;
Fig. 26 is a view showing that the primary dynamo-electric unit in the preferred embodiment taken from Fig. 25 is replaced by two independent dynamo-electric unit units respectively provided by the side of two output shafts from the differential gear unit;
Fig. 27 is a view showing that the preferred embodiment of the present invention given in Fig. 22 is provided with a controllable clutch;
Fig. 28 is a view showing that the preferred embodiment of the present invention given in Fig. 27 is provided with an output clutch;
Fig. 29 is a view showing that the primary dynamo-electric unit in the preferred embodiment taken from Fig. 28 is replaced by two independent dynamo-electric unit units respectively provided by the side of two output shafts from the differential gear unit;
Fig. 30 is a view showing a first preferred embodiment of an application system of the preferred embodiment given in Fig. 22 that has the drive control comprised of an centrifugal clutch provided in opposite to the acting direction and a one-way transmission mechanism with a selected steering direction;
Fig. 31 is a view showing a second preferred embodiment of an application system of the preferred embodiment given in Fig. 23 that has the drive control comprised of an centrifugal clutch provided in opposite to the acting direction and a one-way transmission mechanism with a selected steering direction;
Fig. 32 is a view showing a third preferred embodiment of an application system of the preferred embodiment given in Fig. 24 that has the drive control comprised of an centrifugal clutch provided in opposite to the acting direction and a one-way transmission mechanism with a selected steering direction;
Fig. 33 is a view showing a fourth preferred embodiment of an application system of the preferred embodiment given in Fig. 25 that has the drive control comprised of an centrifugal clutch provided in opposite to the acting direction and a one-way transmission mechanism with a selected steering direction;
Fig. 34 is a view showing that the primary dynamo-electric unit in the preferred embodiment taken from Fig. 33 is replaced by two independent dynamo-electric unit units respectively provided by the side of two output shafts from the differential gear unit;
Fig. 35 is a view showing that the preferred embodiment of the present invention given in Fig. 30 is provided with a controllable clutch;
Fig. 36 is a view showing that the preferred embodiment of the present invention given in Fig. 35 is provided with an output clutch;
Fig. 37 is a view showing that the primary dynamo-electric unit in the preferred embodiment taken from Fig. 36 is replaced by two independent dynamo-electric unit units respectively provided by the side of two output shafts from the differential gear unit;
Fig. 38 is a first preferred embodiment of an application system taken from Fig. 1 changed to that a one-way transmission mechanism provided between a steering shaft having the engine incorporated to the driven drawing side of the centrifugal clutch and the output shaft incorporated by the drive drawing side of the centrifugal clutch;
Fig. 39 is a second preferred embodiment of an application system taken from Fig. 2 changed to that a one-way transmission mechanism provided between a steering shaft having the engine incorporated to the driven drawing side of the centrifugal clutch and the output shaft incorporated by the drive drawing side of the centrifugal clutch;
Fig. 40 is a third preferred embodiment of an application system taken from Fig. 3 changed to that a one-way transmission mechanism provided between a steering shaft having the engine incorporated to the driven drawing side of the centrifugal clutch and the output shaft incorporated by the drive drawing side of the centrifugal clutch;
Fig. 41 is a fourth preferred embodiment of an application system taken from Fig. 4 changed to that a one-way transmission mechanism provided between a steering shaft having the engine incorporated to the driven drawing side of the centrifugal clutch and the output shaft incorporated by the drive drawing side of the centrifugal clutch;
Fig. 42 is a view showing that the primary dynamo-electric unit in the preferred embodiment taken from Fig. 41 is replaced by two independent dynamo-electric unit units respectively provided by the side of two output shafts from the differential gear unit;
Fig. 43 is a view showing that the preferred embodiment of the present invention given in Fig. 38 is provided with a controllable clutch;
Fig. 44 is a view showing that the preferred embodiment of the present invention given in Fig. 43 is provided with an output clutch;
Fig. 45 is a view showing that the primary dynamo-electric unit in the preferred embodiment taken from Fig. 44 is replaced by two independent dynamo-electric unit units respectively provided by the side of two output shafts from the differential gear unit;
Fig. 46 is a view showing a first preferred embodiment of an application system of the preferred embodiment given in Fig. 38 that has the drive control comprised of an centrifugal clutch provided in opposite to the acting direction and a one-way transmission mechanism with a selected steering direction;
Fig. 47 is a view showing a second preferred embodiment of an application system of the preferred embodiment given in Fig. 39 that has the drive control comprised of an centrifugal clutch provided in opposite to the acting direction and a one-way transmission mechanism with a selected steering direction;
Fig. 48 is a view showing a third preferred embodiment of an application system of the preferred embodiment given in Fig. 40 that has the drive control comprised of an centrifugal clutch provided in opposite to the acting direction and a one-way transmission mechanism with a selected steering direction;
Fig. 49 is a view showing a fourth preferred embodiment of an application system of the preferred embodiment given in Fig. 41 that has the drive control comprised of an centrifugal clutch provided in opposite to the acting direction and a one-way transmission mechanism with a selected steering direction;
Fig. 50 is a view showing that the primary dynamo-electric unit in the preferred embodiment taken from Fig. 49 is replaced by two independent dynamo-electric unit units respectively provided by the side of two output shafts from the differential gear unit;
Fig. 51 is a view showing that the preferred embodiment of the present invention given in Fig. 46 is provided with a controllable clutch;
Fig. 52 is a view showing that the preferred embodiment of the present invention given in Fig. 51 is provided with an output clutch;
Fig. 53 is a view showing that the primary dynamo-electric unit in the preferred embodiment taken from Fig. 52 is replaced by two independent dynamo-electric unit units respectively provided by the side of two output shafts from the differential gear unit;
Fig. 54 is a view of a further example of an application system having a one-way transmission mechanism as the drive control provided between the load side steering shaft and the engine power source;
Fig. 55 is a view of a second preferred embodiment of an application system of the prevent invention having a one-way transmission mechanism as the drive control provided between the load side steering shaft and the engine power source;
Fig. 56 is a view of a third preferred embodiment of an application system of the prevent invention having a one-way transmission mechanism as the drive control provided between the load side steering shaft and the engine power source;
Fig. 57 is a view of a fourth preferred embodiment of an application system of the prevent invention having a one-way transmission mechanism as the drive control provided between the load side steering shaft and the engine power source; and
Fig. 58 is a view showing that the primary dynamo-electric unit in the preferred embodiment taken from Fig. 57 is replaced by two independent dynamo-electric unit units respectively provided by the side of two output shafts from the differential gear unit.

### DETAILED DESCRIPTION OF THE PREFERRED EMBODIMENTS

The present invention related to a drive dynamo-electric unit controlled compound system including one dynamo-electric unit or a primary and a secondary dynamo-electric unit units or more than two dynamo-electric unit units incorporated with engine or other rotating moment device, and one unit or more than one unit of centrifugal clutch, one-way transmission mechanism or output clutch or related transmission mechanism and manual control interface, central controller and storage device to create specific control pattern and to execute the operation of specific compound power function by selection among those units and control of drive control device operation, is essentially comprised of the following units:
centrifugal clutches FC101 and FC102: comprised of one centrifugal clutch unit FC101 or of two centrifugal clutch units of FC101 and FC102 being engaged to each other or sharing a same structure, or of a double-acting centrifugal clutch having two independent centrifugal clutch units coupled to each other by means of a transmission device; the structure includes three layers, an inner layer, an intermediate layer and an outer layer, within, the inner layer contains a drive power-locking unit to act outward when the centrifugal force reaches a preset value and is incorporated to draw each other with an output shaft; the intermediate layer incorporated to an engine has a coupling surface or an inner circumference and a drive power-locking unit on its outer side to act outward when the centrifugal force reaches its preset value so to couple to a power-locking inner circumference from the outer layer to execute the function of an output clutch, and the outer layer also incorporated to the output shaft so to temporarily cut off linkage to a load when the engine runs at low rpm;
one-way transmission mechanism SWC101: comprised of various known mechanisms that execute one-way transmission to be directly provided or jointly provided with other transmission mechanism between a primary dynamo-electric unit E101 and a steering shaft S103 driven by an engine ICE 101 for the steering shaft S103 driven by the engine ICE101 to transmit at a pre-selected rotation direction in relation to the rotation part of the primary dynamo-electric unit E101; on the contrary, to execute idling to interrupt the power transmission. That is, if the engine ICE101 drives clockwise (CW), the steering shaft S102 transmits power to the primary dynamo-electric unit E101; and counterclockwise (CCW), to interrupt the power transmission. Meanwhile, if the primary dynamo-electric unit E101 drives counterclockwise (CCW), the steering shaft S102 drives the engine ICE101 in opposite direction; and clockwise (CW), to interrupt the power transmission. With the selection of the direction for the one-way transmission mechanism SWC101, the rotation direction of and whether the transmission to be continued or interrupted between the engine ICE101 and the primary dynamo-electric unit E101 is selected as the case may be;

The one-way transmission mechanism SWC101 is independently provided or provided at the same time with the centrifugal clutch FC101 for the system to indicate various compound power characteristics; as required, the relative locations between the one-way transmission mechanism SWC101 and the centrifugal clutch FC101 has the centrifugal clutch FC101 provided at where close to the side of the steering shaft S103 of the engine ICE101 and the one-way transmission mechanism provided at where close to the side of the primary dynamo-electric unit E101 or the centrifugal clutch; or has both of the centrifugal clutch FC101 and the one-way transmission mechanism SWC101 provided at where between the steering shaft S103 of the engine ICE 101 and the rotation part of the primary dynamo-electric unit while both of the centrifugal clutch FC101 and the one-way transmission mechanism SWC101 is separately provided or sharing the same structure;
primary dynamo-electric unit E101: essentially functioning as a motor and also as a secondary generator, related to a secondary motor of series excitation or pilot compound type secondary dynamo-electric unit with dynamo-electric unit characteristics that the speed becomes higher when the load gets smaller; or an AC or DC brush or brushless device that executes amperage control (including control of constant current) for the input electric energy to generate kinetic energy of rotation mechanical that increases torque as the load increases, or to other AC or DC, brush or brushless, synchronous or asynchronous inner rotor or outer rotor rotation dynamo-electric unit;
secondary dynamo-electric unit E102: essentially functioning as a generator and also as a secondary motor, comprised of an inner rotor or outer rotor rotation dynamo-electric unit generates AC or DC, brush or brushless, synchronous or asynchronous energy to convert kinetic energy of rotation mechanical into electric energy;
engine ICE101: comprised of various known internal combustion engine and its related start-up and operation speed control device and peripheral interface devices including fuel system, air inlet & exhaust system, ignition system and cooling system to directly drive the steering shaft S103 or by way of fixed speed ratio or variable speed ratio or variable steering transmission mechanism or planetary transmission mechanism T 104;
the fixed or variable speed ratio or variable steering transmission or planetary transmission mechanism T104: an optional mechanism comprised of various known coaxial or non-coaxial transmission, e.g. a fixed ratio speed or stage or stageless variable transmission mechanism comprised of a gear set, belt gear set or sprocket gear set or power-locking gear set,
fixed or variable speed ratio or variable steering transmission or planetary transmission mechanisms T101, T102, T103: a structure to executed variable speed ratio or steering function, comprised of gear set, chain and sprocket gear set, power-locking gear set, planetary gear set, or other stage or variable, manual or automatic shift transmission mechanism; the transmission mechanism is optional;
output clutches CL101, CL301: an optional mechanism comprised of output clutches connected in series between the steering shaft S104 on load side and the load controlled by manual, mechanical, electromagnetic or hydraulic or centrifugal force;
differential gear set DG: an optional mechanism comprised of gear or power-locking gear to receive rotation kinetic energy inputted by a steering shaft S 105 for driving two differential steering shafts S105R and S105L;
storage discharging device ESD101: comprised of a (dis)chargeable secondary battery or super capacitor;
central control unit CCU101: comprised of mechanical-electric or solid-state electronic device, or a digital or analog central control circuit comprised of a micro-processor and its related software to be subject operation and setup by a manual control interface M 101 to control the operation of the system;
drive control device CD101: controlled by the manual control interface M101 and the central control unit CCU101 to operate both dynamo-electric units functioning as motors to execute control of startup, stop, speed variation or positive/negative rotation and torque; or as generators to control power generation voltage, amperage, frequency and power performance, charging electric energy inputted to the storage discharging device ESD101 and electric energy outputted from the storage discharging device ESD101; and
manual control interface M101: related to a digital or analog manual control interface comprised of mechanical-electric or solid-state electronic circuit to control the operation of the system via the central control unit CCU101 by manual operation;

By combining those devices and mechanisms described above, the present invention executes some of or all the following functions:
the primary dynamo-electric unit functioning as a starting motor, draws the activating side of the centrifugal clutch to close it and start the engine;
the secondary dynamo-electric unit functioning as a starting motor, starts the engine;
once the engine starts, the load is driven by controlling the operation of the centrifugal clutch or the manual, mechanical or electromagnetic or hydraulic force controlled power-locking or hydraulic force coupled type clutch;
in addition to driving the load, the running engine continues to draw the secondary dynamo-electric unit to operate as a generator for driving the primary dynamo-electric unit to jointly drive the load or to charge the storage discharging device ESD101;
the engine is running to drive the load while the primary dynamo-electric unit functioning as a motor with electric energy supplied from the storage discharging device ESD101 to jointly drive the load;
during the down time of the primary dynamo-electric unit, the engine runs to drive the secondary dynamo-electric unit to function as a generator so to charge the storage discharging device ESD101 or output electric energy to other loads;
the running engine drives the secondary dynamo-electric unit to generate power for driving the primary dynamo-electric unit to further drive the load or to simultaneously charging the batteries or to output electric energy to other loads;
the primary dynamo-electric unit drives the load at low speed as controlled by the electric energy supplied from the storage discharging device via a drive control device while the engine is not running;
the electric energy drive status including the generation braking either by the primary or the secondary dynamo-electric units or both at the same time, the engine becomes a braking resistance as drawn by the closed centrifugal clutch once the sliding speed exceeds the preset value; or
any related functions provided by other structures as described above.

Additional to providing those functions as described in the preceding subparagraphs (1) through (10), preferred embodiments of the application system with drive control by the centrifugal clutch FC101 essentially operates in the following patterns A1, A2 and A3:
A1 : with the system standby and the engine not running, the manual control interface M101 is starts acceleration on the system, the primary dynamo-electric unit E101 is started to execute low speed drive operation to drive the load until the centrifugal clutch FC101 is closed to start the engine as drawn by the centrifugal clutch FC101 for the secondary dynamo-electric unit E102 either engages in generation output or stops generation as required;
   Once the manual control interface M101 is executing acceleration on the throttle of the engine and a centrifugal clutch FC102 is provided for the system, the centrifugal clutch FC 102 is closed to draw the steering shaft S 104 on the load side thus to drive the load; or the closed centrifugal clutch FC101 is used to draw the steering shaft S 104 on the load side to further drive the load;
   As the manual control interface M101 increases to accelerate the throttle, the engine rpm is further promoted to increase the power to drive the load, the primary dynamo-electric unit E101 may stop transmitted power or convert to function as a generator, or to input electric energy to operate as a motor to provide parallel pilot kinetic energy for the engine ICE101.
A2: With the system standby, the engine also is standby at low speed or is driving a peripheral load, e.g. air conditioner or secondary air pump, the secondary dynamo-electric unit E102 executes generation output or stops generation;
   When the manual control interface M101 starts to accelerate the system, the primary dynamo-electric unit E101 is activated to execute drive operation at low speed to drive the load;
   Once the manual control interface M101 performs acceleration drive on the primary dynamo-electric unit E101 by controlling the electric energy supplied from the storage discharging device ESD101 or a generator, the manual control interface M 101 synchronously accelerates the throttle on the engine; if the system is provided with a centrifugal clutch FC102, the engine rpm increases until the centrifugal clutch FC102 is closed to draw the steering shaft S104 on the load side, thus to drive load, or the centrifugal clutch FC102 connects the engine in parallel to drive the load when the primary dynamo-electric unit E101 accelerates until the centrifugal clutch FC101 is closed.
   As the manual control interface M101 increases to accelerate the throttle, the engine rpm is further promoted to increase the power to drive the load, the primary dynamo-electric unit E101 may stop transmitted power or convert to function as a generator, or to input electric energy to operate as a motor to provide parallel pilot kinetic energy for the engine ICE101.
A3: With the system standby, the engine also is standby at constant speed or is driving a peripheral load, e.g. air conditioner or secondary air pump, the secondary dynamo-electric unit E102 executes generation output or stops generation;
   When the manual control interface M101 starts to accelerate the system by controlling the electric energy supplied from the storage discharging device ESD101 or a generator, the manual control interface M101 synchronously accelerates the throttle on the engine; if the system is provided with a centrifugal clutch FC102, the engine rpm increases until the centrifugal clutch FC102 is closed to draw the steering shaft S104 on the load side, thus to drive load, or the centrifugal clutch FC102 connects the engine in parallel to drive the load when the primary dynamo-electric unit E 101 accelerates until the centrifugal clutch FC 102 is closed.

Based on the basic configuration and the application of its operation, multiple preferred embodiments of a compound power system controlled by a drive dynamo-electric unit speed of the present invention are described as follows:

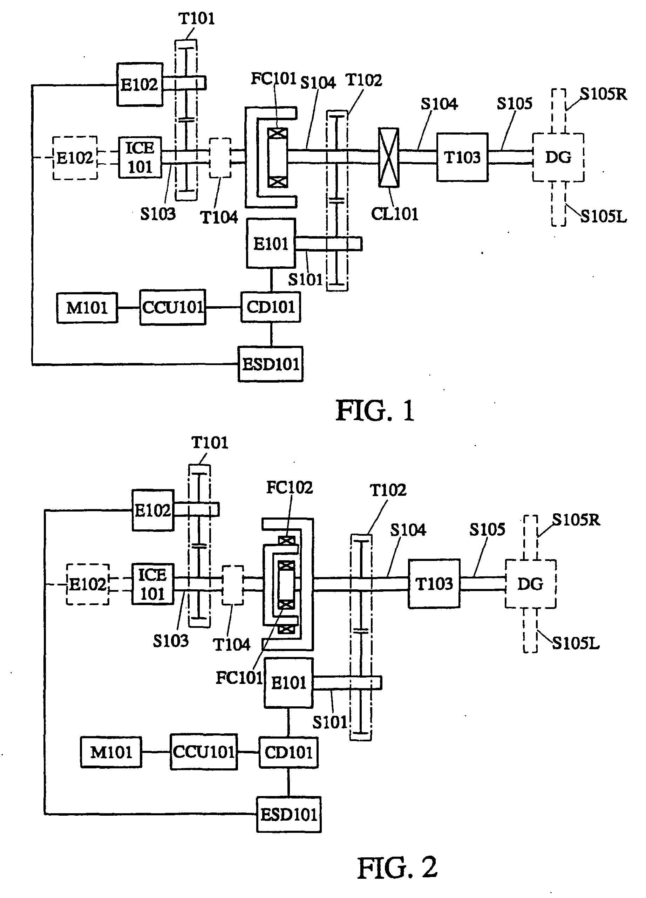

Figs. 1 through 8 shows applications of the system by having the centrifugal clutch FC101 as the drive control for the compound power system controlled by a drive dynamo-electric unit speed of the present invention.

Fig.1 shows a first example of a compound system having a centrifugal clutch as the drive control, essentially comprised of a centrifugal clutch FC101 provided between a steering shaft S103 driven by an engine ICE101 and another steering shaft on the load side S104 for controlling both of the steering shaft S103 and another steering shaft S104 on the load side to couple or interrupt transmission. Within, the steering shaft S103 driven by the engine ICE101 is coupled to the driven draw side of the centrifugal clutch FC101 while another steering shaft S104 on the load side is coupled to the drive draw side of the centrifugal clutch FC101 so that once the steering shaft S104 on the load side reaches the preset rpm, it drives to close the centrifugal clutch FC101, thus to draw the steering shaft S103 which is directly driven by the engine ICE101 or through a fixed speed ratio or variable speed ratio, or variable steering device or planetary transmission mechanism T104. The steering shaft S104 on the load side is provided to drive the load, and a fixed speed ratio or variable speed ratio or variable steering transmission mechanism T102 is provided to the steering shaft S104 on the load side to engage in mutual transmission with a primary dynamo-electric unit E101;
the load side steering shaft S104: is directly outputted to the load, or alternatively, to an output clutch CL101 controlled by manual, mechanical, electromagnetic, hydraulic or centrifugal force before being outputted to the load; or as required, to execute single shaft output through a fixed speed ratio or variable speed ratio, variable steering transmission or planetary transmission mechanism T103, then through a steering shaft S105; or an optional transmission mechanism comprised of a differential gear set DG for differential output through two units of differential steering shafts S105R and S105L;
the engine ICE101: comprised of various known internal combustion engine and its related start-up and operation speed control device and peripheral interface devices including fuel system, air inlet & exhaust system, ignition system and cooling system to directly drive the steering shaft S103 or by way of fixed speed ratio or variable speed ratio or variable steering transmission mechanism or planetary transmission mechanism T104;
the fixed or variable speed ratio or variable steering transmission or planetary transmission mechanism T104: an optional mechanism comprised of various known coaxial or non-coaxial transmission, e.g. a fixed ratio speed or stage or stageless variable transmission mechanism comprised of a gear set, belt gear set or sprocket gear set or power-locking gear set;
the primary dynamo-electric unit E101: essentially functioning as a motor and also as a secondary generator, related to a secondary motor of series excitation or pilot compound type secondary dynamo-electric unit with dynamo-electric unit characteristics that the speed becomes higher when the load gets smaller; or an AC or DC brush or brushless device that executes amperage control (including control of constant current) for the input electric energy to generate kinetic energy of rotation mechanical that increases torque as the load increases, or to other AC or DC, brush or brushless, synchronous or asynchronous inner rotor or outer rotor rotation dynamo-electric unit; the primary dynamo-electric unit E101 is coupled to the load side steering shaft S104 and to the drive draw side of the centrifugal clutch FC101 by means of a fixed or variable speed ratio or variable steering transmission or planetary transmission mechanism T102; and
the secondary dynamo-electric unit E102: essentially functioning as a generator and also as a secondary motor, comprised of an inner rotor or outer rotor rotation dynamo-electric unit generates AC or DC, brush or brushless, synchronous or asynchronous energy to convert kinetic energy of rotation mechanical into electric energy; the secondary dynamo-electric unit E102 is coupled to the steering shaft S103 driven by the engine ICE 101 and the driven draw side of the centrifugal clutch FC102 by means of a fixed or variable speed ratio or variable steering transmission or planetary transmission mechanism T101, or the secondary dynamo-electric unit E102 is directly coupled to the steering shaft S103 of the engine;

The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

Fig. 2 shows a second example having an application system with a centrifugal clutch as the drive control, essentially comprised of having connected in series a centrifugal clutch FC101 then another centrifugal clutch FC102 between the steering shaft S103 and the drive load side steering shaft S104 of the engine ICE 10 1. The double acting centrifugal clutches FC101 and FC102 form to each other or integrated into a 3-layer structure containing an inner layer, an intermediate layer and an outer layer. Within, the inner layer and the inner side of the intermediate layer form the centrifugal clutch FC101, the inner layer incorporated to the load side steering shaft S104 drawn to each other is provided with a drive power-locking unit to act outward when the centrifugal force reaches a preset value; the outer side of the intermediate layer and the inner side of the outer layer form the centrifugal clutch FC102; the intermediate layer being coupled to the steering shaft S103 driven by the engine having its inner side provided with circumferential coupling surface for power-locking and its outer side provided with a drive power-locking unit acting outward when the centrifugal force reaches its preset value performs the functions as an output clutch with the power-locking circumferential coupling surface on the inner side of the outer layer; and the outer layer is also incorporated to the load side steering shaft S104 so to provide linkage with the load when the engine runs at low rpm or is temporarily cut off. The steering shaft S103 either directly driven or driven through a fixed speed ratio or variable speed ratio, or variable steering transmission mechanism or planetary transmission mechanism T104 by the engine is coupled to the driven draw side of the centrifugal clutch FC101 and the load side steering shaft S104 to the drive draw side of the centrifugal clutch FC101 so to forthwith close the centrifugal clutch FC101 and further to draw the steering shaft S103 driven by the engine ICE101 when the load side steering shaft S104 reaches its preset rpm. Alternatively, a fixed speed ratio or variable speed ratio, or variable steering transmission mechanism or planetary transmission mechanism T102 is provided on the load side steering shaft S104 to engage mutual transmission with the primary dynamo-electric unit;
the load side steering shaft S104: is directly outputted to the load, or alternatively, to an output clutch CL101 controlled by manual, mechanical, electromagnetic, hydraulic or centrifugal force before being outputted to the load; or as required, to execute single shaft output through a fixed speed ratio or variable speed ratio, variable steering transmission or planetary transmission mechanism T103, then through a steering shaft S105; or an optional transmission mechanism comprised of a differential gear set DG for differential output through two units of differential steering shafts S 105R and S105L;
the engine ICE 101: comprised of various known internal combustion engine and its related start-up and operation speed control device and peripheral interface devices including fuel system, air inlet & exhaust system, ignition system and cooling system to directly drive the steering shaft S103 or by way of fixed speed ratio or variable speed ratio or variable steering transmission mechanism or planetary transmission mechanism T104;
the fixed or variable speed ratio or variable steering transmission or planetary transmission mechanism T104: an optional mechanism comprised of various known coaxial or non-coaxial transmission, e.g. a fixed ratio speed or stage or stageless variable transmission mechanism comprised of a gear set, belt gear set or sprocket gear set or power-locking gear set;
the primary dynamo-electric unit E101: essentially functioning as a motor and also as a secondary generator, related to a secondary motor of series excitation or pilot compound type secondary dynamo-electric unit with dynamo-electric unit characteristics that the speed becomes higher when the load gets smaller; or an AC or DC brush or brushless device that executes amperage control (including control of constant current) for the input electric energy to generate kinetic energy of rotation mechanical that increases torque as the load increases, or to other AC or DC, brush or brushless, synchronous or asynchronous inner rotor or outer rotor rotation dynamo-electric unit; the primary dynamo-electric unit E101 is coupled to the load side steering shaft S104 and to the drive draw side of the centrifugal clutch FC101 by means of a fixed or variable speed ratio or variable steering transmission or planetary transmission mechanism T102; and
the secondary dynamo-electric unit E102: essentially functioning as a generator and also as a secondary motor, comprised of an inner rotor or outer rotor rotation dynamo-electric unit generates AC or DC, brush or brushless, synchronous or asynchronous energy to convert kinetic energy of rotation mechanical into electric energy; the secondary dynamo-electric unit E102 is coupled to the steering shaft S103 driven by the engine ICE101 and the driven draw side of the centrifugal clutch FC102 by means of a fixed or variable speed ratio or variable steering transmission or planetary transmission mechanism T101, or the secondary dynamo-electric unit E102 is directly coupled to the steering shaft S103 of the engine;

The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

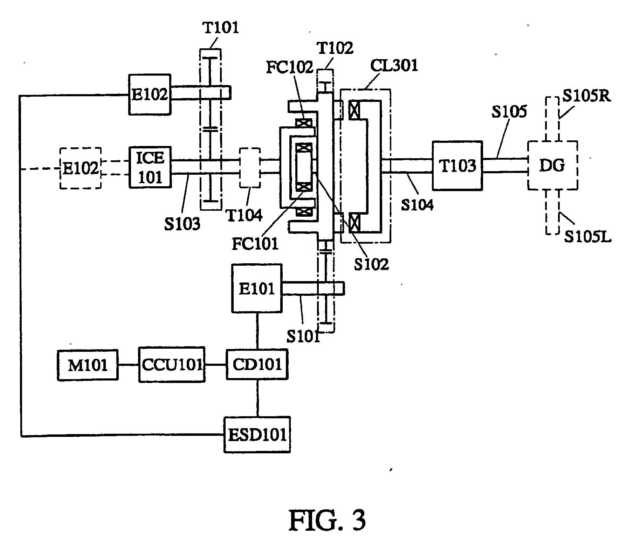

Fig. 3 shows a third example having an application system with a centrifugal clutch as the drive control, essentially comprised of having coupled to an intermediate steering shaft S102 the fixed speed ratio or variable speed ratio or variable steering transmission mechanism or planetary transmission mechanism T102, the power-locking coupling surface on the outer circumference of the double-acting centrifugal clutch FC101 and the outer circumference power-locking surface of the double-acting centrifugal clutch FC102 in the example as illustrated in Fig. 2. Those double-acting centrifugal clutches are comprised of two units of centrifugal clutches FC101 and FC102 incorporated to each other forming a three-layer structure containing the inner, the intermediate and the outer layers. Within, the inner layer and the inner side of the intermediate layer form the centrifugal clutch FC101, the inner layer and the inner side of the intermediate layer incorporated to the intermediate steering shaft S102 drawn to each other is provided with a drive power-locking unit to act outward when the centrifugal force reaches a preset value; the outer side of the intermediate layer and the inner side of the outer layer form the centrifugal clutch FC102; the intermediate layer being coupled to the steering shaft S103 driven by the engine having its inner side provided with circumferential coupling surface for power-locking and its outer side provided with a drive power-locking unit acting outward when the centrifugal force reaches its preset value performs the functions as an output clutch with the power-locking circumferential coupling surface on the inner side of the outer layer; and the outer layer is also incorporated to the intermediate steering shaft S102 so to provide linkage with the load when the engine runs at low rpm or is temporarily cut off. The steering shaft S 103 either directly driven or driven through a fixed speed ratio or variable speed ratio, or variable steering transmission mechanism or planetary transmission mechanism T104 by the engine is coupled to the driven draw side of the centrifugal clutch FC101 and the intermediate steering shaft S102 to the drive draw side of the centrifugal clutch FC101 so to forthwith close the centrifugal clutch FC101 and further to draw the steering shaft S103 driven by the engine ICE 101 when the intermediate steering shaft S102 reaches its preset rpm
the intermediate steering shaft S102: is directly outputted to the load, or alternatively, to an output clutch CL301 controlled by manual, mechanical, electromagnetic, hydraulic or centrifugal force before being outputted to the load; or as required, to execute single shaft output through a fixed speed ratio or variable speed ratio, variable steering transmission or planetary transmission mechanism T103, then through a steering shaft S105; or an optional transmission mechanism comprised of a differential gear set DG for differential output through two units of differential steering shafts S105R and S105L; the additional output clutch CL301is provided between the intermediate steering shaft S102 and the load side steering shaft S104 with both steering shafts driven by the power-locking coupling surfaces on the inner and outer circumferences of the double-acting centrifugal clutches FC101 and FC102;
the engine ICE101: comprised of various known internal combustion engine and its related start-up and operation speed control device and peripheral interface devices including fuel system, air inlet & exhaust system, ignition system and cooling system to directly drive the steering shaft S103 or by way of fixed speed ratio or variable speed ratio or variable steering transmission mechanism or planetary transmission mechanism T104;
the fixed or variable speed ratio or variable steering transmission or planetary transmission mechanism T104: an optional mechanism comprised of various known coaxial or non-coaxial transmission, e.g. a fixed ratio speed or stage or stageless variable transmission mechanism comprised of a gear set, belt gear set or sprocket gear set or power-locking gear set;
the primary dynamo-electric unit E101: essentially functioning as a motor and also as a secondary generator, related to a secondary motor of series excitation or pilot compound type secondary dynamo-electric unit with dynamo-electric unit characteristics that the speed becomes higher when the load gets smaller; or an AC or DC brush or brushless device that executes amperage control (including control of constant current) for the input electric energy to generate kinetic energy of rotation mechanical that increases torque as the load increases, or to other AC or DC, brush or brushless, synchronous or asynchronous inner rotor or outer rotor rotation dynamo-electric unit; the primary dynamo-electric unit E101 is coupled to the intermediate steering shaft S102, which in turn incorporated to the centrifugal clutch FC101 by means of a fixed or variable speed ratio or variable steering transmission or planetary transmission mechanism T102; and
the secondary dynamo-electric unit E102: essentially functioning as a generator and also as a secondary motor, comprised of an inner rotor or outer rotor rotation dynamo-electric unit generates AC or DC, brush or brushless, synchronous or asynchronous energy to convert kinetic energy of rotation mechanical into electric energy; the secondary dynamo-electric unit E102 is coupled to the centrifugal clutch FC101 and the steering shaft S103 of the engine ICE101 by means of a fixed or variable speed ratio or variable steering transmission or planetary transmission mechanism T101, or the secondary dynamo-electric unit E102 is directly coupled to the steering shaft S103 of the engine;

The combination of those structures described above for the system subject to control by the manual control interface M101, the central control unit CCU101, the drive control device CD101 and the storage discharging device ESD101 provides the same functions as those by the example illustrated in Fig. 2 when the output clutch CL301 is closed; and additional functions when the output clutch CL301 is disengaged, including those functions related to subparagraphs (1) through (10) or other specific function, and patterns related to those operation patterns described in A1 through A3 or other specific operation pattern.

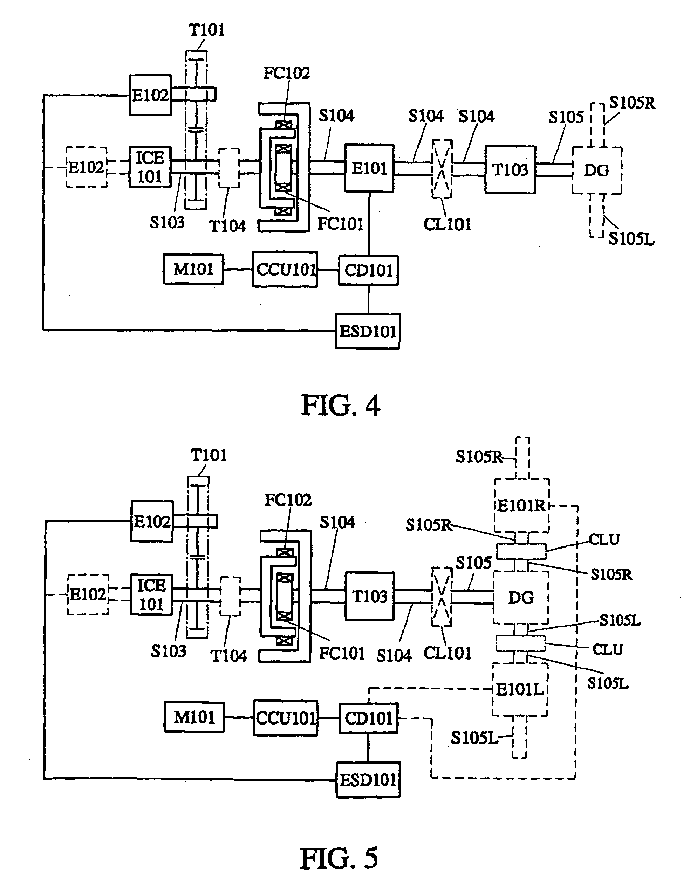

Fig. 4 shows a fourth example having an application system with a centrifugal clutch as the drive control, essentially comprised of having the dynamo-electric unit E 101 and the load side steering shaft S104 to indicate coaxial structure. A structure of the double-acting centrifugal clutches FC101 and FC102 provided between the dynamo-electric unit E101 and the engine ICE101 has its inner layer and outer layer incorporated to the load side steering shaft S104 coupled to the output shaft of the primary dynamo-electric unit E101 and its intermediate layer incorporated to the steering shaft S103 driven by the engine ICE101. The double-acting centrifugal clutches are comprised of two centrifugal FC101 and FC102 incorporated to each other forming a three-layer structure containing the inner, the intermediate and the outer layers. Within, the inner layer and the inner side of the intermediate layer form the centrifugal clutch FC101, the inner layer and the inner side of the intermediate layer incorporated to the intermediate steering shaft S102 drawn to each other is provided with a drive power-locking unit to act outward when the centrifugal force reaches a preset value; the outer side of the intermediate layer and the inner side of the outer layer form the centrifugal clutch FC102; the intermediate layer being coupled to the steering shaft S 103 driven by the engine having its inner side provided with circumferential coupling surface for power-locking and its outer side provided with a drive power-locking unit acting outward when the centrifugal force reaches its preset value performs the functions as an output clutch with the power-locking circumferential coupling surface on the inner side of the outer layer; and the outer layer is also incorporated to the load side steering shaft S 104 so to provide linkage with the load when the engine runs at low rpm or is temporarily cut off. The ICE101 is directly or by means of a steering shaft S103 driven by a fixed speed ratio or variable speed ratio, or variable steering transmission mechanism or planetary transmission mechanism T104 and the load side steering shaft S102 is incorporated to the drive draw side of the centrifugal clutch FC101 so to forthwith close the centrifugal clutch FC101 and further to draw the steering shaft S103 driven by the engine ICE101 when the load side steering shaft S102 reaches its preset rpm;
the engine ICE101: comprised of various known internal combustion engine and its related start-up and operation speed control device and peripheral interface devices including fuel system, air inlet & exhaust system, ignition system and cooling system to directly drive the steering shaft S103 or by way of fixed speed ratio or variable speed ratio or variable steering transmission mechanism or planetary transmission mechanism T 104;
the fixed or variable speed ratio or variable steering transmission or planetary transmission mechanism T104: an optional mechanism comprised of various known coaxial or non-coaxial transmission, e.g. a fixed ratio speed or stage or stageless variable transmission mechanism comprised of a gear set, belt gear set or sprocket gear set or power-locking gear set;
the primary dynamo-electric unit E101: essentially functioning as a motor and also as a secondary generator, related to a secondary motor of series excitation or pilot compound type secondary dynamo-electric unit with dynamo-electric unit characteristics that the speed becomes higher when the load gets smaller; or an AC or DC brush or brushless device that executes amperage control (including control of constant current) for the input electric energy to generate kinetic energy of rotation mechanical that increases torque as the load increases, or to other AC or DC, brush or brushless, synchronous or asynchronous inner rotor or outer rotor rotation dynamo-electric unit; the primary dynamo-electric unit E101 is coupled to the load side steering shaft S104 and to the drive draw side of the centrifugal clutch FC101 by means of a fixed or variable speed ratio or variable steering transmission or planetary transmission mechanism T102; and the load side steering shaft S104 is forthwith outputted to the load, or as required, to execute uniaxial output by a selected fixed speed ratio or variable speed ratio or variable steering transmission mechanism or planetary transmission mechanism T103 through the steering shaft S 105, or alternatively, a transmission mechanism comprised of a differential gear set DG to execute differential output through two units of differential steering shafts S105R and S105L;
the secondary dynamo-electric unit E102: essentially functioning as a generator and also as a secondary motor, comprised of an inner rotor or outer rotor rotation dynamo-electric unit generates AC or DC, brush or brushless, synchronous or asynchronous energy to convert kinetic energy of rotation mechanical into electric energy; the secondary dynamo-electric unit E102 is coupled to the steering shaft S 103 of the engine ICE101 and the centrifugal clutch FC101 by means of a fixed or variable speed ratio or variable steering transmission or planetary transmission mechanism T101, or the secondary dynamo-electric unit E102 is directly coupled to the steering shaft S103 of the engine; and
the output clutch CL101: an optional mechanism provided between the output side of the primary dynamo-electric unit E101 and the fixed or variable speed ratio or variable steering transmission or planetary transmission mechanism T103, the output clutch CL101 is controlled by manual, mechanical, electromagnetic or hydraulic or centrifugal force;

The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

Fig. 5 is a schematic view of the example taken from Fig. 4 wherein, the primary dynamo-electric unit is replaced with two units of dynamo-electric units respectively provided on the output shaft sides of the differential gear set. The primary dynamo-electric unit E101 in the example illustrated in Fig. 4 is replaced by a primary dynamo-electric unit E101R to the right and another primary dynamo-electric unit E101L on the left. The primary dynamo-electric unit E101R is directly connected in series with a steering shaft S105R to the right of a differential gear set DG or alternatively adapted with a one-way or two-way clutch CLU before being connected in series to the steering shaft S105R to the right of the differential gear set DG. The other primary dynamo-electric unit E101L is directly connected in series with a steering shaft S105L to the left of a differential gear set DG or alternatively adapted with a one-way or two-way clutch CLU before being connected in series to the steering shaft S105L to the left of the differential gear set DG. The steering shaft S104 on the load side of the centrifugal clutch FC101 is directly outputted to the steering shaft S105 of the differential gear set DG, or through the fixed or variable speed ratio or variable steering transmission or planetary transmission mechanism T103 before being outputted to the steering shaft S105 of the differential gear set DG, or alternatively, by means of the output clutch CL101 controlled by manual, mechanical, electromagnetic, hydraulic or centrifugal force before being outputted to the steering shaft S105 of the differential gear set DG. Both of the primary dynamo-electric units E101R and another primary dynamo-electric unit E101L are subject to equal speed or differential drive by the drive control device CD101.

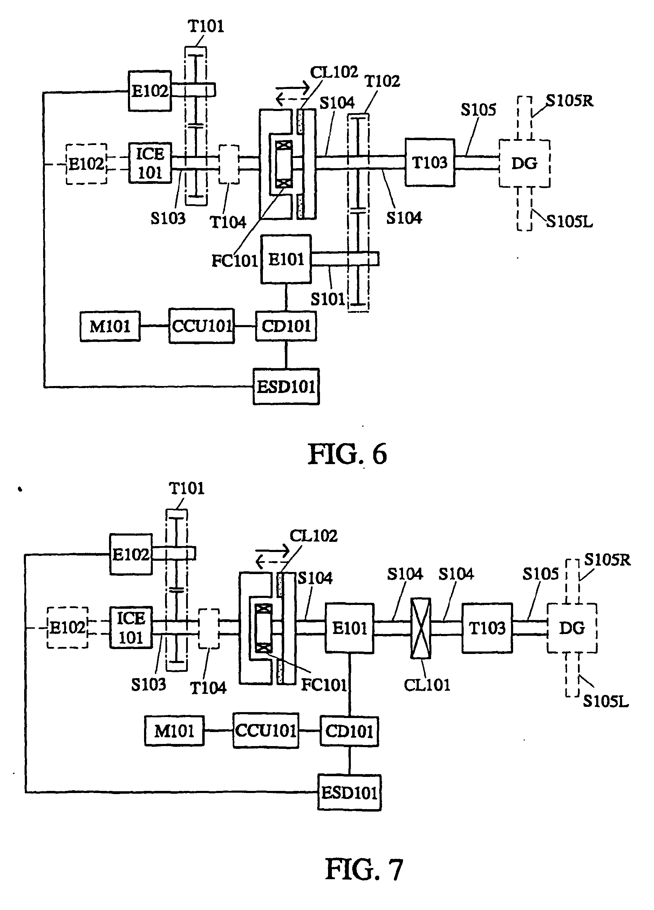

Fig. 6 is a view showing that the first example as illustrated in Fig. 1 is provided with a controllable clutch. Within, the centrifugal clutch FC101 and another clutch CL102 controlled by manual, mechanical, electromagnetic, hydraulic power-locking type of or hydraulic coupling type are provided between the engine steering shaft S103 and the load side steering shaft S104 so to execute power coupling or interruption on both of the engine steering shaft S103 and the load side steering shaft S104 for the system to be equipped with a power-locking type or hydraulic coupling type controllable clutch CL102 and engine throttle, to further acquire another specific function for the engine rotation power driven load. The steering shaft S103 either directly driven by the engine ICE101, or through a fixed or variable speed ratio or variable steering transmission or planetary transmission mechanism T104 is coupled to the driven drawn side of the centrifugal clutch FC101 while the load side steering shaft S104 to the drive draw side of the centrifugal clutch PC101. That is, once the load-side steering shaft S104 reaches the preset rpm, the centrifugal clutch FC101 is forthwith closed to draw the steering shaft S103 driven by the engine ECE101. The centrifugal clutch FC101 and the controllable clutch CL102 is individually provided or sharing the same structure. The example provided with the controllable clutch is essentially comprised of:
the engine ICE 101: comprised of various known internal combustion engine and its related start-up and operation speed control device and peripheral interface devices including fuel system, air inlet & exhaust system, ignition system and cooling system to directly drive the steering shaft S103 or by way of fixed speed ratio or variable speed ratio or variable steering transmission mechanism or planetary transmission mechanism T104;
the fixed or variable speed ratio or variable steering transmission or planetary transmission mechanism T104: an optional mechanism comprised of various known coaxial or non-coaxial transmission, e.g. a fixed ratio speed or stage or stageless variable transmission mechanism comprised of a gear set, belt gear set or sprocket gear set or power-locking gear set;
the primary dynamo-electric unit E101: essentially functioning as a motor and also as a secondary generator, related to a secondary motor of series excitation or pilot compound type secondary dynamo-electric unit with dynamo-electric unit characteristics that the speed becomes higher when the load gets smaller; or an AC or DC brush or brushless device that executes amperage control (including control of constant current) for the input electric energy to generate kinetic energy of rotation mechanical that increases torque as the load increases, or to other AC or DC, brush or brushless, synchronous or asynchronous inner rotor or outer rotor rotation dynamo-electric unit; the steering shaft S101 of the primary dynamo-electric unit E101 is coupled to the load side steering shaft S104 of the centrifugal clutch FC101 by means of a fixed or variable speed ratio or variable steering transmission or planetary transmission mechanism T102; and
the secondary dynamo-electric unit E102: essentially functioning as a generator and also as a secondary motor, comprised of an inner rotor or outer rotor rotation dynamo-electric unit generates AC or DC, brush or brushless, synchronous or asynchronous energy to convert kinetic energy of rotation mechanical into electric energy; the secondary dynamo-electric unit E102 is coupled to the steering shaft S103 of the engine ICE101 and the centrifugal clutch FC101 by means of a fixed or variable speed ratio or variable steering transmission or planetary transmission mechanism T101, or the secondary dynamo-electric unit E102 is directly coupled to the steering shaft S103 of the engine;

The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

Fig. 7 is a view showing that the example given in Fig. 6 is provided with an output clutch. That is, an output clutch CL101 controlled by manual, mechanical, electromagnetic, and hydraulic or centrifugal force is provided to the example illustrated in Fig. 6. The output clutch CL101 is provided between the load side steering shaft S104 driven by the primary dynamo-electric unit E101 and the load. When the output clutch CL101 is closed, it provides the same function as those by the example illustrated in Fig. 6; and additional functions when the output clutch CL101 is disengaged, including being separated from the load to leave the engine to simultaneously drive the first and the second dynamo-electric units E101 and E102 to function as generators, or to drive the primary dynamo-electric E101 alone to operate as a generator while the primary dynamo-electric unit E101 is provided between the output clutch CL101 and the controllable clutch CL102; as well as those functions related to subparagraphs (1) through (10) or other specific function, and patterns related to those operation patterns described in A1 through A3 or other specific operation pattern.

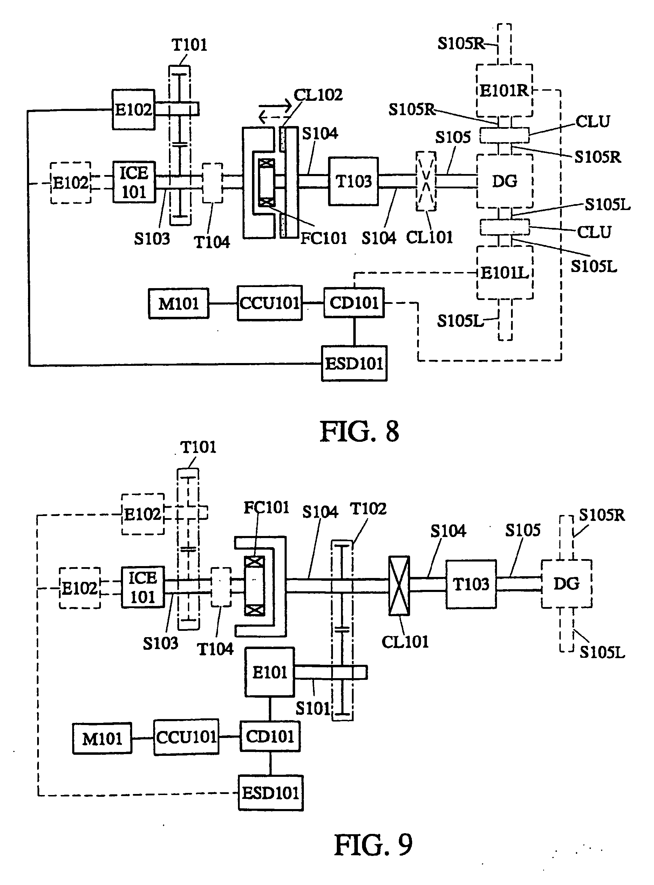

Fig. 8 is a schematic view showing that the example illustrated in Fig. 7 is further having the primary dynamo-electric unit replaced by two independent dynamo-electric units respectively provided on the side of two output shafts of a differential gear set. Within, the primary dynamo-electric unit E101 of the example in Fig. 7 is replaced by a primary dynamo-electric unit E101R to the right and another primary dynamo-electric unit E101L on the left. The primary dynamo-electric unit E101R to the right is directly connected in series with the steering shaft S105R to the right of the differential gear set DG, or alternatively, a one-way or two-way alternatively adapted with a one-way or two-way clutch CLU before being connected in series to the steering shaft S105R to the right of the differential gear set DG. The other primary dynamo-electric unit E101L on the left is directly connected in series with a steering shaft S105L to the left of a differential gear set DG or alternatively adapted with a one-way or two-way clutch CLU before being connected in series to the steering shaft S105L to the left of the differential gear set DG. The steering shaft S104 on the load side of the centrifugal clutch FC101 is directly outputted to the steering shaft S105 of the differential gear set DG, or through the fixed or variable speed ratio or variable steering transmission or planetary transmission mechanism T103 before being outputted to the steering shaft S 105 of the differential gear set DG, or alternatively, by means of the output clutch CL101 controlled by manual, mechanical, electromagnetic, hydraulic or centrifugal force before being outputted to the steering shaft S105 of the differential gear set DG. Both of the primary dynamo-electric unit E101R to the right and the other primary dynamo-electric unit E101L on the left are subject to equal speed or differential drive by a drive control device CD101 to provide the same functions as those by the example given in Fig. 7.

Figs. 9 through 21 show that each of those examples illustrated in Figs. 1 through 8 has those centrifugal clutches disposed between the steering shaft S103 driven by the engine ICE 101 and the load side steering shaft S104 are provided in opposite direction to become drive controlled application systems:
Fig. 9 shows a first example of a drive controlled application system by centrifugal clutch of the present invention, essentially comprised of having provided the centrifugal clutch FC101 between the steering shaft S103 driven by the engine ICE101 and the load side steering shaft S104 to control the operation of coupling or interruption the transmission by both of the steering shafts S103 and S104. Within, the steering shaft S103 driven by the engine ICE101 is coupled to the drive draw side of the centrifugal clutch FC101 and the load side steering shaft S104 is coupled to the driven draw side of the centrifugal clutch FC101 so that once the steering shaft S103 which is directly driven by the engine ICE101 or through a fixed speed ratio or variable speed ratio, or variable steering device or planetary transmission mechanism T104 reaches the preset rpm, it drives to close the centrifugal clutch FC101, thus to draw the load side steering shaft S104. The steering shaft S 104 on the load side is provided to drive the load, and a fixed speed ratio or variable speed ratio or variable steering transmission mechanism T102 is provided to the steering shaft S104 on the load side to engage in mutual transmission with a primary dynamo-electric unit E101;
the load side steering shaft S104: is directly outputted to the load, or alternatively, to an output clutch CL101 controlled by manual, mechanical, electromagnetic, hydraulic or centrifugal force before being outputted to the load; or as required, to execute single shaft output through a fixed speed ratio or variable speed ratio, variable steering transmission or planetary transmission mechanism T103, then through a steering shaft S105; or an optional transmission mechanism comprised of a differential gear set DG for differential output through two units of differential steering shafts S105R and S105L;
the engine ICE101: comprised of various known internal combustion engine and its related start-up and operation speed control device and peripheral interface devices including fuel system, air inlet & exhaust system, ignition system and cooling system to directly drive the steering shaft S103 or by way of fixed speed ratio or variable speed ratio or variable steering transmission mechanism or planetary transmission mechanism T104;
the fixed or variable speed ratio or variable steering transmission or planetary transmission mechanism T104: an optional mechanism comprised of various known coaxial or non-coaxial transmission, e.g. a fixed ratio speed or stage or stageless variable transmission mechanism comprised of a gear set, belt gear set or sprocket gear set or power-locking gear set;
the primary dynamo-electric unit E101: essentially functioning as a motor and also as a secondary generator, related to a secondary motor of series excitation or pilot compound type secondary dynamo-electric unit with dynamo-electric unit characteristics that the speed becomes higher when the load gets smaller; or an AC or DC brush or brushless device that executes amperage control (including control of constant current) for the input electric energy to generate kinetic energy of rotation mechanical that increases torque as the load increases, or to other AC or DC, brush or brushless, synchronous or asynchronous inner rotor or outer rotor rotation dynamo-electric unit; the primary dynamo-electric unit E101 is coupled to the load side steering shaft S104 and to the drive draw side of the centrifugal clutch FC101 by means of a fixed or variable speed ratio or variable steering transmission or planetary transmission mechanism T102; and
the secondary dynamo-electric unit E102: essentially functioning as a generator and also as a secondary motor, comprised of an inner rotor or outer rotor rotation dynamo-electric unit generates AC or DC, brush or brushless, synchronous or asynchronous energy to convert kinetic energy of rotation mechanical into electric energy; the secondary dynamo-electric unit E102 is coupled to the steering shaft S103 driven by the engine ICE101 and the driven draw side of the centrifugal clutch FC102 by means of a fixed or variable speed ratio or variable steering transmission or planetary transmission mechanism T101, or the secondary dynamo-electric unit E102 is directly coupled to the steering shaft S103 of the engine;

The combination of those structures described above for the system are subject to control by the manual control interface M101, the central control unit CCU101, the drive control device CD101 and the storage discharging device ESD 101. The specific system structure described above provides functions related to those described in subparagraphs (I) through (10) or other specific function, it also provides patterns related to those operation patterns described in A1 through A3 or other specific operation pattern.

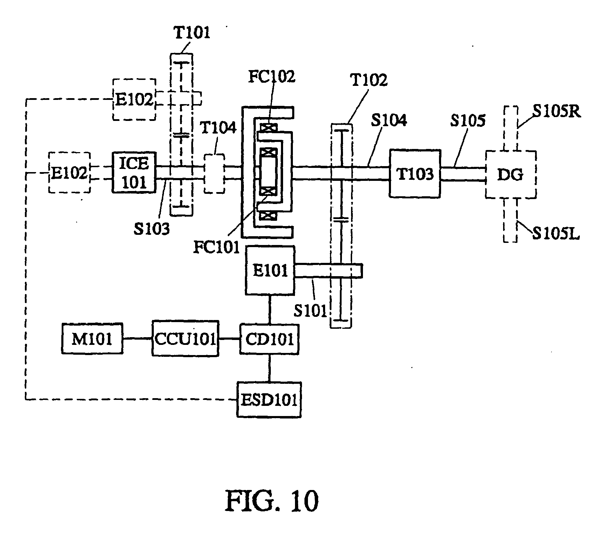

Fig. 10 shows a second example having an application system with a centrifugal clutch provided in the opposite direction as the drive control, essentially comprised of having connected in series a centrifugal clutch FC101 then another centrifugal clutch FC102 between the steering shaft S103 and the drive load side steering shaft S104 of the engine ICE101. The double acting centrifugal clutches FC101 and FC102 form to each other or integrated into a 3-layer structure containing an inner layer, an intermediate layer and an outer layer. Within, the inner layer and the inner side of the intermediate layer form the centrifugal clutch FC101, the inner layer incorporated to the load side steering shaft S103 of the engine ICE101 drawn to each other is provided with a drive power-locking unit to act outward when the centrifugal force reaches a preset value; the outer side of the intermediate layer and the inner side of the outer layer form the centrifugal clutch FC102; the intermediate layer being coupled to the load side steering shaft S104 having its inner side provided with circumferential coupling surface for power-locking and its outer side provided with a drive power-locking unit acting outward when the centrifugal force reaches its preset value performs the functions as an output clutch with the power-locking circumferential coupling surface on the inner side of the outer layer; and the outer layer is also incorporated to the steering shaft S103 on the side of the engine ICE101 so to provide linkage with the load when the engine runs at low rpm or is temporarily cut off. The steering shaft S103 either directly driven or driven through a fixed speed ratio or variable speed ratio, or variable steering transmission mechanism or planetary transmission mechanism T104 by the engine is coupled to the drive draw side of the centrifugal clutch FC101 and the load side steering shaft S104 to the driven draw side of the centrifugal clutch FC101 so to forthwith close the centrifugal clutch FC101 and further to draw the steering shaft S103 driven by the engine ICE101 when the steering shaft S103 on the side of the engine ICE101 reaches its preset rpm. Alternatively, a fixed speed ratio or variable speed ratio, or variable steering transmission mechanism or planetary transmission mechanism T102 is provided on the load side steering shaft S104 to engage mutual transmission with the primary dynamo-electric unit;
the load side steering shaft S104: is directly outputted to the load, or alternatively, to an output clutch CL101 controlled by manual, mechanical, electromagnetic, hydraulic or centrifugal force before being outputted to the load; or as required, to execute single shaft output through a fixed speed ratio or variable speed ratio, variable steering transmission or planetary transmission mechanism T103, then through a steering shaft S105; or an optional transmission mechanism comprised of a differential gear set DG for differential output through two units of differential steering shafts S105R and S105L;
the engine ICE101: comprised of various known internal combustion engine and its related start-up and operation speed control device and peripheral interface devices including fuel system, air inlet & exhaust system, ignition system and cooling system to directly drive the steering shaft S103 or by way of fixed speed ratio or variable speed ratio or variable steering transmission mechanism or planetary transmission mechanism T104;
the fixed or variable speed ratio or variable steering transmission or planetary transmission mechanism T104: an optional mechanism comprised of various known coaxial or non-coaxial transmission, e.g. a fixed ratio speed or stage or stageless variable transmission mechanism comprised of a gear set, belt gear set or sprocket gear set or power-locking gear set;
the primary dynamo-electric unit E101: essentially functioning as a motor and also as a secondary generator, related to a secondary motor of series excitation or pilot compound type secondary dynamo-electric unit with dynamo-electric unit characteristics that the speed becomes higher when the load gets smaller; or an AC or DC brush or brushless device that executes amperage control (including control of constant current) for the input electric energy to generate kinetic energy of rotation mechanical that increases torque as the load increases, or to other AC or DC, brush or brushless, synchronous or asynchronous inner rotor or outer rotor rotation dynamo-electric unit; the primary dynamo-electric unit E101 is coupled to the load side steering shaft S104, the driven draw side of the centrifugal clutch FC101 and the drive draw side of the other centrifugal clutch FC102 by means of a fixed or variable speed ratio or variable steering transmission or planetary transmission mechanism T102; and
the secondary dynamo-electric unit E102: essentially functioning as a generator and also as a secondary motor, comprised of an inner rotor or outer rotor rotation dynamo-electric unit generates AC or DC, brush or brushless, synchronous or asynchronous energy to convert kinetic energy of rotation mechanical into electric energy; the secondary dynamo-electric unit E102 is coupled to the steering shaft S103 driven by the engine ICE101, the drive draw side of the centrifugal clutch FC101 and the driven draw side of the other centrifugal clutch FC102 by means of a fixed or variable speed ratio or variable steering transmission or planetary transmission mechanism T101, or the secondary dynamo-electric unit E102 is directly coupled to the steering shaft S103 of the engine;

The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

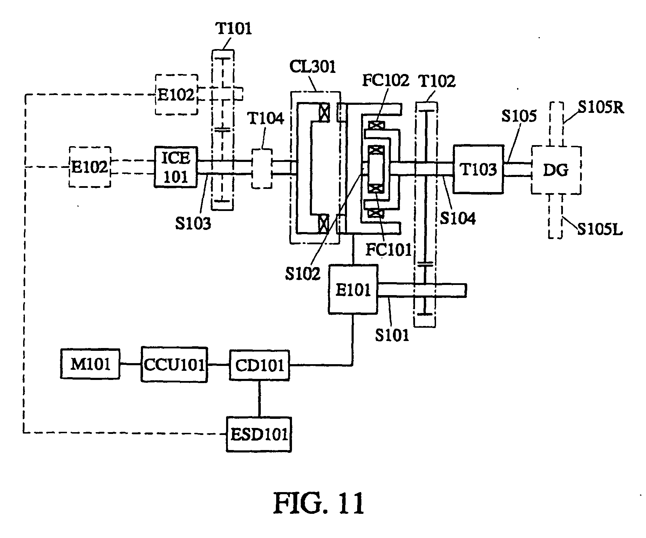

Fig. 11 shows a third example having an application system with a centrifugal clutch provided in the opposite direction as the drive control, essentially comprised of having alternatively provided an output clutch CL301 controlled by manual, mechanical, electromagnetic or hydraulic force between the steering shaft S103 on the side of the engine ICE101 from the example illustrated in Fig. 10 and where between the drive draw side of the double-acting centrifugal clutch FC101 and the driven draw side of the other centrifugal clutch FC102, and subject to the control by the manual control interface M101, the central control unit CCU101, the drive control device CD101 and the storage discharging device ESD101 to provide the same functions as those by the example from Fig. 10 when the output clutch CL301 is closed; and when the output clutch CL301 is disengaged, to provide additional functions, those functions related to subparagraphs (1) through (10) or other specific function, and patterns related to those operation patterns described in A1 through A3 or other specific operation pattern.

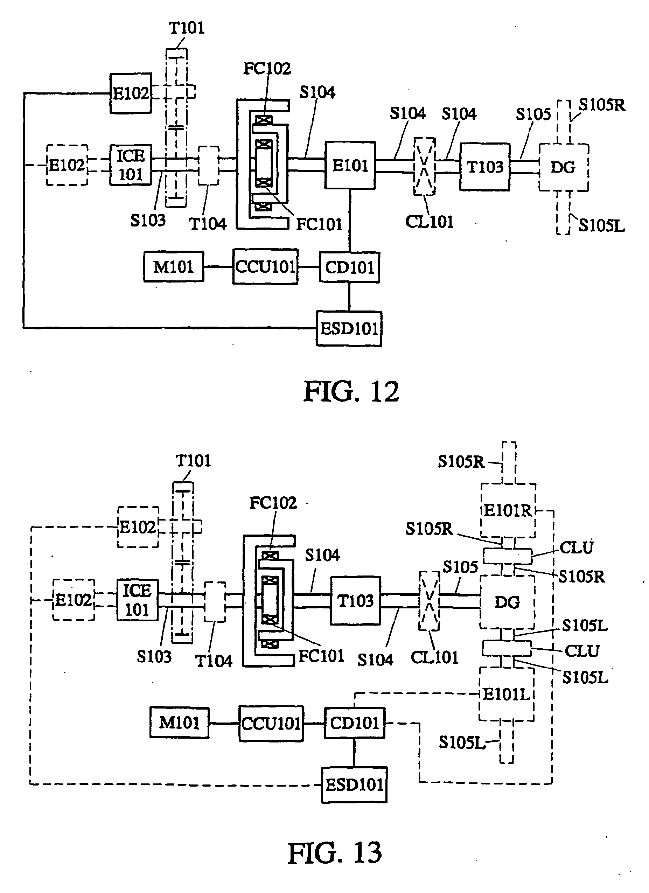

Fig. 12 shows a fourth example of an application system having provided a centrifugal clutch in the opposite direction as the drive control, essentially having the dynamo-electric unit E101 and the load side steering shaft S104 to indicate coaxial structure while the double-acting centrifugal clutches FC101 and FC102 are provided between the dynamo-electric unit E101 and the engine ICE101, within, its intermediate structure is provided to be incorporated to the load side steering shaft S104 in the same structure of the output shaft of the primary dynamo-electric unit E101, and its inner and outer layers incorporated to the engine steering shaft S103. The double acting centrifugal clutches FC101 and FC102 form to each other or integrated into a 3-layer structure containing an inner layer, an intermediate layer and an outer layer. Within, the inner layer and the inner side of the intermediate layer form the centrifugal clutch FC101, the inner layer incorporated to the engine steering shaft S103 drawn to each other is provided with a drive power-locking unit to act outward when the centrifugal force reaches a preset value; the outer side of the intermediate layer and the inner side of the outer layer form the centrifugal clutch FC102; the intermediate layer being coupled to the steering shaft S103 driven by the primary dynamo-electric unit E101 having its inner side provided with circumferential coupling surface for power-locking and its outer side provided with a drive power-locking unit acting outward when the centrifugal force reaches its preset value performs the functions as an output clutch with the power-locking circumferential coupling surface on the inner side of the outer layer. The drive draw side of the centrifugal clutch FC101 is incorporated to the steering shaft S103 on the side of the engine ICE101 so to couple to the engine to drive the load when the engine runs at high rpm, and to cut off the linkage to the load when the engine runs at low rpm. The engine ICE101 is either directly or by means of the steering shaft S103 driven by a fixed speed ratio or variable speed ratio, or variable steering transmission mechanism or planetary transmission mechanism T104, coupled to the drive draw side of the centrifugal clutch FC101 and the driven draw side of the other centrifugal clutch FC102. Meanwhile, the load side steering shaft S104 is coupled to the driven draw side of the centrifugal clutch FC101 and the drive draw side of the other centrifugal clutch FC102 so that when the load side steering shaft S104 reaches its preset rpm, the other centrifugal clutch FC102 is closed thus to draw the steering shaft S103 driven by the engine ICE101, or when the steering shaft S103 on the side of the engine ICE101 reaches its preset rpm, the centrifugal clutch FC101 is closed, thus to draw the load side steering shaft S 104 to drive the load;
the engine ICE101: comprised of various known internal combustion engine and its related start-up and operation speed control device and peripheral interface devices including fuel system, air inlet & exhaust system, ignition system and cooling system to directly drive the steering shaft S103 or by way of fixed speed ratio or variable speed ratio or variable steering transmission mechanism or planetary transmission mechanism T104;
the fixed or variable speed ratio or variable steering transmission or planetary transmission mechanism T104: an optional mechanism comprised of various known coaxial or non-coaxial transmission, e.g. a fixed ratio speed or stage or stageless variable transmission mechanism comprised of a gear set, belt gear set or sprocket gear set or power-locking gear set;
the primary dynamo-electric unit E101: essentially functioning as a motor and also as a secondary generator, related to a secondary motor of series excitation or pilot compound type secondary dynamo-electric unit with dynamo-electric unit characteristics that the speed becomes higher when the load gets smaller; or an AC or DC brush or brushless device that executes amperage control (including control of constant current) for the input electric energy to generate kinetic energy of rotation mechanical that increases torque as the load increases, or to other AC or DC, brush or brushless, synchronous or asynchronous inner rotor or outer rotor rotation dynamo-electric unit; the primary dynamo-electric unit E101 is coupled to load side steering shaft S104 of the centrifugal clutch FC 101 by means of a fixed or variable speed ratio or variable steering transmission or planetary transmission mechanism T102; the load side steering shaft S104 is forthwith outputted to the load, or alternatively, execute uniaxial output through the steering shaft S105 by means of a fixed speed ratio, variable speed ratio or variable steering transmission mechanism or planetary transmission mechanism T103, or to execute differential output through two units of differential steering shafts S105R and S105L by means of a transmission mechanism comprised of the differential gear set DG;
the secondary dynamo-electric unit E102: essentially functioning as a generator and also as a secondary motor, comprised of an inner rotor or outer rotor rotation dynamo-electric unit generates AC or DC, brush or brushless, synchronous or asynchronous energy to convert kinetic energy of rotation mechanical into electric energy; the secondary dynamo-electric unit E102 is coupled to the centrifugal clutch FC101 and the steering shaft S103 of the engine ICE101 by means of a fixed or variable speed ratio or variable steering transmission or planetary transmission mechanism T101, or the secondary dynamo-electric unit E102 is directly coupled to the steering shaft S103 of the engine; and
the output clutch CL101: an optional mechanism provided between the output side of the primary dynamo-electric unit E101 and the fixed or variable speed ratio or variable steering transmission or planetary transmission mechanism T103, the output clutch CL101 is controlled by manual, mechanical, electromagnetic or hydraulic or centrifugal force;

The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

Fig. 13 is a schematic view showing that the primary dynamo-electric unit in the example illustrated in Fig. 12 is replaced by two independent dynamo-electric units respectively provided on two output shafts of the differential gear set; essentially by having the primary dynamo-electric unit E101 in the example illustrated in Fig. 12 to be substituted by two independent primary dynamo-electric units E101R and E101L respectively to the right and left. The primary dynamo-electric unit E101R to the right is directly connected or alternatively through a one-way or two-way clutch CLU in series to the steering shaft S105R to the right of the differential gear set DG; and the primary dynamo-electric unit E101L on the left is directly connected or alternatively through a one-way or two-way clutch CLU in series to the steering shaft S105L to the left of the differential gear set DG. The steering shaft S104 on the load side of the centrifugal clutch FC101 is directly outputted to the steering shaft S105 of the differential gear set DG, or through the fixed or variable speed ratio or variable steering transmission or planetary transmission mechanism T103 before being outputted to the steering shaft S 105 of the differential gear set DG, or alternatively, by means of the output clutch CL101 controlled by manual, mechanical, electromagnetic, hydraulic or centrifugal force before being outputted to the steering shaft S105 of the differential gear set DG. Both of the primary dynamo-electric units E101R and another primary dynamo-electric unit E101L are subject to equal speed or differential drive by the drive control device CD101.

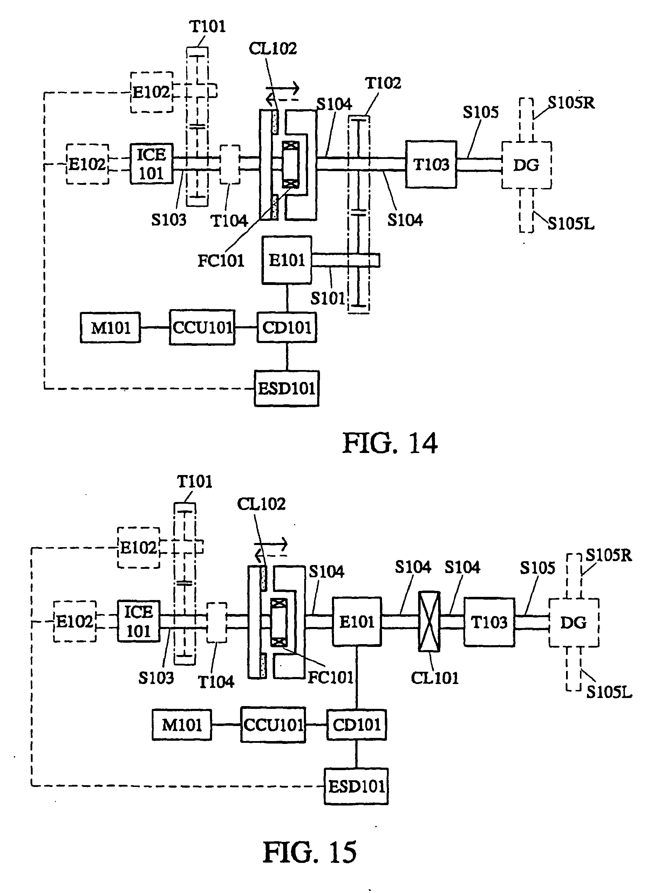

Fig. 14 shows that the example given in Fig. 9 is further provided with a controllable clutch by having provided a centrifugal clutch FC101 and a controllable CL102 controlled by manual, mechanical, electromagnetic, hydraulic power-locking type of or hydraulic coupling type to be provided between the engine steering shaft S103 and the load side steering shaft S104 so to execute power coupling or interruption on both of the engine steering shaft S103 and the load side steering shaft S104 for the system to be equipped with a power-locking type or hydraulic coupling type controllable clutch CL102 and engine throttle, to further acquire another specific function for the engine rotation power driven load. The steering shaft S103 either directly driven by the engine ICE101, or through a fixed or variable speed ratio or variable steering transmission or planetary transmission mechanism T104 is coupled to the driven drawn side of the centrifugal clutch FC101 while the load side steering shaft S104 to the drive draw side of the centrifugal clutch FC101. That is, once the steering shaft S103 on the side of the engine ICE101 reaches its preset rpm, the centrifugal clutch FC101 is forthwith closed to draw the load side steering shaft S104. The centrifugal clutch FC101 and the controllable clutch CL102 is individually provided or sharing the same structure; and other units comprising the system are the same as those provided in the example illustrated in Fig. 1.

The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

Fig. 15 is a view showing that the example given in Fig. 14 is provided with an output clutch. That is, an output clutch CL101 controlled by manual, mechanical, electromagnetic, and hydraulic or centrifugal force is provided to the example illustrated in Fig. 14. The output clutch CL101 is provided between the load side steering shaft S104 driven by the primary dynamo-electric unit E101 and the load. When the output clutch CL101 is closed, it provides the same function as those by the example illustrated in Fig. 14; and additional functions when the output clutch CL101 is disengaged, including being separated from the load to leave the engine to simultaneously drive the first and the second dynamo-electric units E101 and E102 to function as generators, or to drive the primary dynamo-electric E101 alone to operate as a generator while the primary dynamo-electric unit E101 is provided between the output clutch CL101 and the controllable clutch CL102; as well as those functions related to subparagraphs (1) through (10) or other specific function, and patterns related to those operation patterns described in A1 through A3 or other specific operation pattern.

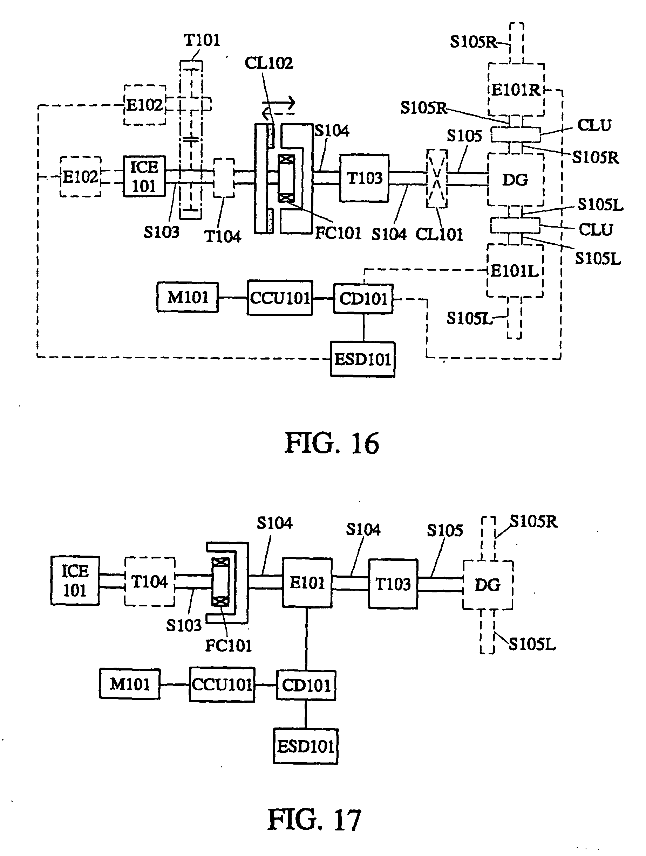

Fig. 16 is a schematic view showing that the example illustrated in Fig. 15 is further having the primary dynamo-electric unit replaced by two independent dynamo-electric units respectively provided on the side of two output shafts of a differential gear set. Within, the primary dynamo-electric unit E101 of the example in Fig. 15 is replaced by a primary dynamo-electric unit E101R to the right and another primary dynamo-electric unit E101L on the left. The primary dynamo-electric unit E101R to the right is directly connected in series with the steering shaft S105R to the right of the differential gear set DG, or alternatively, a one-way or two-way alternatively adapted with a one-way or two-way clutch CLU before being connected in series to the steering shaft S 105R to the right of the differential gear set DG. The other primary dynamo-electric unit E101L on the left is directly connected in series with a steering shaft S105L to the left of a differential gear set DG or alternatively adapted with a one-way or two-way clutch CLU before being connected in series to the steering shaft S105L to the left of the differential gear set DG. The steering shaft S104 on the load side of the centrifugal clutch FC101 is directly outputted to the steering shaft S105 of the differential gear set DG, or through the fixed or variable speed ratio or variable steering transmission or planetary transmission mechanism T103 before being outputted to the steering shaft S105 of the differential gear set DG, or alternatively, by means of the output clutch CL101 controlled by manual, mechanical, electromagnetic, hydraulic or centrifugal force before being outputted to the steering shaft S105 of the differential gear set DG. Both of the primary dynamo-electric unit E101R to the right and the other primary dynamo-electric unit E101L on the left are subject to equal speed or differential drive by a drive control device CD101 to provide the same functions as those by the example given in Fig. 15.

Fig. 17 shows that the primary dynamo-electric unit and the load side steering shaft illustrated in Fig. 9 share the same structure. Within, the example illustrated in Fig. 9 is further to have the primary dynamo-electric unit E101 and the load side steering shaft S104 to be provided in the same structure, essentially comprised of having provided the centrifugal clutch FC101 between the steering shaft S103 and the load side steering shaft S104 of the engine ICE101 to control the operation of coupling or interruption the transmission by both of the steering shafts S103 and S104. Within, the steering shaft S103 driven by the engine ICE101 is coupled to the drive draw side of the centrifugal clutch FC101 and the load side steering shaft S104 is coupled to the driven draw side of the centrifugal clutch FC101 so that once the steering shaft S103 which is directly driven by the engine ICE101 or through a fixed speed ratio or variable speed ratio, or variable steering device or planetary transmission mechanism T104 reaches the preset rpm, it drives to close the centrifugal clutch FC101, thus to draw the load side steering shaft S104. The steering shaft S104 on the load side is provided to drive the load, and shares the coaxial structure with the primary dynamo-electric unit E101;
the load side steering shaft S104: is directly outputted to the load, or alternatively, to an output clutch CL101 controlled by manual, mechanical, electromagnetic, hydraulic or centrifugal force before being outputted to the load; or as required, to execute single shaft output through a fixed speed ratio or variable speed ratio, variable steering transmission or planetary transmission mechanism T103, then through a steering shaft S105; or an optional transmission mechanism comprised of a differential gear set DG for differential output through two units of differential steering shafts S105R and S105L;
the engine ICE101: comprised of various known internal combustion engine and its related start-up and operation speed control device and peripheral interface devices including fuel system, air inlet & exhaust system, ignition system and cooling system to directly drive the steering shaft S103 or by way of fixed speed ratio or variable speed ratio or variable steering transmission mechanism or planetary transmission mechanism T104;
the fixed or variable speed ratio or variable steering transmission or planetary transmission mechanism T104: an optional mechanism comprised of various known coaxial or non-coaxial transmission, e.g. a fixed ratio speed or stage or stageless variable transmission mechanism comprised of a gear set, belt gear set or sprocket gear set or power-locking gear set; and
the primary dynamo-electric unit E101: essentially functioning as a motor and also as a secondary generator, related to a secondary motor of series excitation or pilot compound type secondary dynamo-electric unit with dynamo-electric unit characteristics that the speed becomes higher when the load gets smaller; or an AC or DC brush or brushless device that executes amperage control (including control of constant current) for the input electric energy to generate kinetic energy of rotation mechanical that increases torque as the load increases, or to other AC or DC, brush or brushless, synchronous or asynchronous inner rotor or outer rotor rotation dynamo-electric unit; the primary dynamo-electric unit E101 shares the coaxial structure with the load side steering shaft S104 and is coupled to the driven draw side of the centrifugal clutch FC101;
The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

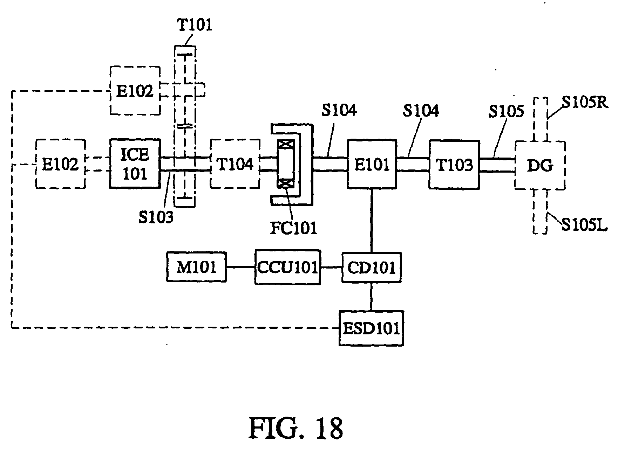

Fig. 18 shows that the example taken from Fig. 17 is provided with a secondary dynamo-electric unit directly coupled to the engine steering shaft or engaging in mutual transmission with the engine steering shaft by means of a transmission mechanism. As illustrated in Fig. 17, the example when required is provided with the secondary dynamo-electric unit E102 which is directly coupled to the steering shaft S103 of the engine ICE101 or engaging in mutual transmission with the steering shaft S103 of the engine ICE101 by means of a variable steering or planetary transmission mechanism T101 with fixed or variable speed ratio so to function at the same time as a generator and as a motor; within,
the secondary dynamo-electric unit E102: essentially functioning as a generator and also as a secondary motor, comprised of an inner rotor or outer rotor rotation dynamo-electric unit generates AC or DC, brush or brushless, synchronous or asynchronous energy to convert kinetic energy of rotation mechanical into electric energy; the secondary dynamo-electric unit E102 is coupled to the centrifugal clutch FC101 and the steering shaft S103 driven by the engine ICE101 and to the drive draw side of the centrifugal clutch FC101 by means of a fixed or variable speed ratio or variable steering transmission or planetary transmission mechanism T101, or the secondary dynamo-electric unit E102 is directly coupled to the steering shaft S103 of the engine;
The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

Figs. 17 and 18 show that the primary dynamo-electric unit E101 is further replaced by two independent units of the primary dynamo-electric unit E101R to the right and another primary dynamo-electric unit E101L on the left. Within, the primary dynamo-electric unit E101R to the right is directly connected in series with the steering shaft S105R to the right of the differential gear set DG, or alternatively, adapted with a one-way or two-way clutch CLU before being connected in series to the steering shaft S105R to the right of the differential gear set DG while the primary dynamo-electric unit E101L on the left is directly connected in series with the steering shaft S105L to the left of the differential gear set DG, or alternatively, adapted with a one-way or two-way clutch CLU before being connected in series to the steering shaft S105L to the left of the differential gear set DG. The load side steering shaft S104 of the centrifugal clutch FC101 is directly or through the fixed ratio or variable speed ratio or variable steering transmission mechanism or planetary transmission mechanism T103 outputted to the steering shaft S105 of the differential gear set DG, or alternatively, outputted to the output clutch CL101 before being outputted to the steering shaft S105 of the differential gear set DG. Meanwhile, both of the primary dynamo-electric units E101R and E101L respectively to the right and the left are subject to drive at equal speed or differential drive by the drive control device CD101.

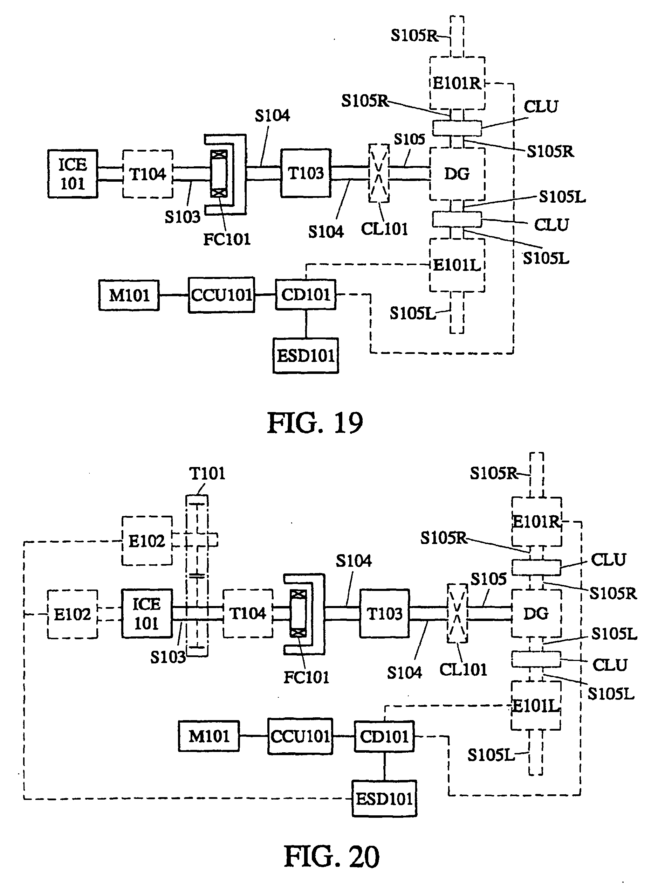

Fig. 19 shows that the example taken from Fig. 17 is further having its primary dynamo-electric unit to be replaced by two independent dynamo-electric units respectively provided on the side of two output shafts of the differential gear set.

Fig. 20 shows that the example taken from Fig. 18 is further having its primary dynamo-electric unit to be replaced by two independent dynamo-electric units respectively provided on the side of two output shafts of the differential gear set.

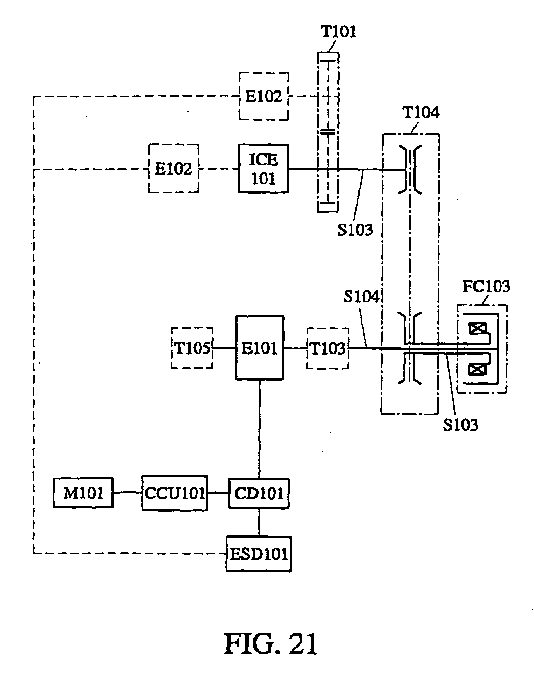

Furthermore, as required, an automatic transmission mechanism T1040 is provided between the engine ICE101 and the drive shaft S103 to copy with demands on performance or structural space. Fig. 21 shows an example of having an automatic transmission mechanism provided between the engine and the drive shaft of the present invention, essentially comprised of:
the automatic transmission mechanism T1040 comprised of automatic transmission belt gear set (CTV) or other known automatic transmission device is provided between the engine ICE101 and the steering shaft S103. A centrifugal clutch FC103 is provided between the steering shaft S103 and the load side steering shaft S104 to control the operation of transmission coupling or transmission interruption of both the steering shaft S103 and the load side steering shaft S104. Within, the steering shaft S103 driven by the engine ICE 101 is provided to drive the automatic transmission mechanism T1040 before being coupled to the drive draw side of the centrifugal clutch FC103 by the structure of the output terminal of the automatic transmission mechanism T1040 while the load side steering shaft S104 is coupled to the driven draw side of the centrifugal clutch FC103 so that the centrifugal clutch FC103 is forthwith closed to draw the load side steering shaft S104 once the structure of the output terminal of the automatic transmission mechanism reaches its preset rpm;
the load side steering shaft S104: configurations of the output structure comprised by the load side steering shaft S104 and the primary dynamo-electric unit E101 include:
   A directly coaxial structure is indicated between the load side steering shaft S104 and the primary dynamo-electric unit E101 for the coaxial structure of the load side steering shaft S104 to directly drive the load; or
   Alternatively, a fixed speed ratio or variable speed ratio or variable steering transmission mechanism or planetary transmission mechanism T103 is provided between the load side steering shaft S104 and the primary dynamo-electric unit E101 for the output terminal of the primary dynamo-electric unit E101 to directly drive the load; or
   A fixed speed ratio or variable speed ratio or variable steering transmission mechanism or planetary or differential transmission mechanism T105 is further provided between the output terminal of the primary dynamo-electric unit E 101 and the load as described in subparagraph 1, then the output terminal is selected as required to drive the load; or
a fixed speed ratio or variable speed ratio or variable steering transmission mechanism or planetary transmission mechanism T103 is provided between the coaxial structure of the load side steering shaft S104 and the primary dynamo-electric unit E101 and the driven load, then as required the fixed speed ratio or variable speed ratio or variable steering transmission mechanism or planetary or differential transmission mechanism T105 is provided, and the output terminal is selected as required to drive the load; within:
   the engine ICE 101: comprised of various known internal combustion engine and its related start-up and operation speed control device and peripheral interface devices including fuel system, air inlet & exhaust system, ignition system and cooling system to directly drive the steering shaft S103 or by way of fixed speed ratio or variable speed ratio or variable steering transmission mechanism or planetary transmission mechanism T104;
   the automatic transmission mechanism T1040: an optional mechanism comprised of various known coaxial or non-coaxial transmission, e.g. a gear set, belt gear set, sprocket gear set, power-locking gear set or hydraulic coupling device, or automatic transmission mechanism, stage or stageless variable, comprised of electromagnetic coupling device;
   the primary dynamo-electric unit E101: essentially functioning as a motor and also as a secondary generator, related to a secondary motor of series excitation or pilot compound type secondary dynamo-electric unit with dynamo-electric unit characteristics that the speed becomes higher when the load gets smaller; or an AC or DC brush or brushless device that executes amperage control (including control of constant current) for the input electric energy to generate kinetic energy of rotation mechanical that increases torque as the load increases, or to other AC or DC, brush or brushless, synchronous or asynchronous inner rotor or outer rotor rotation dynamo-electric unit; the primary dynamo-electric unit E101 is directly coupled to the driven draw side of the centrifugal clutch FC101, or alternatively, by means of a fixed or variable speed ratio or variable steering transmission or planetary transmission mechanism T103, coupled to the load side steering shaft S104 driven by the driven draw side of the centrifugal clutch FC101. The primary dynamo-electric unit E101 directly drives the load, or alternatively, a transmission mechanism of fixed speed ratio or variable speed ratio or variable steering, or a fixed speed, variable speed ratio, variable steering, planetary, or differential transmission mechanism T105 is provided to drive the load; and
   the secondary dynamo-electric unit E102: essentially functioning as a generator and also as a secondary motor, comprised of an inner rotor or outer rotor rotation dynamo-electric unit generates AC or DC, brush or brushless, synchronous or asynchronous energy to convert kinetic energy of rotation mechanical into electric energy; the secondary dynamo-electric unit E102 is coupled to the centrifugal clutch FC101 and the steering shaft S103 driven by the engine ICE101 and to the drive draw side of the centrifugal clutch FC101 by means of a fixed or variable speed ratio or variable steering transmission or planetary transmission mechanism T101, or the secondary dynamo-electric unit E102 is directly coupled to the steering shaft S103 of the engine;

   The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

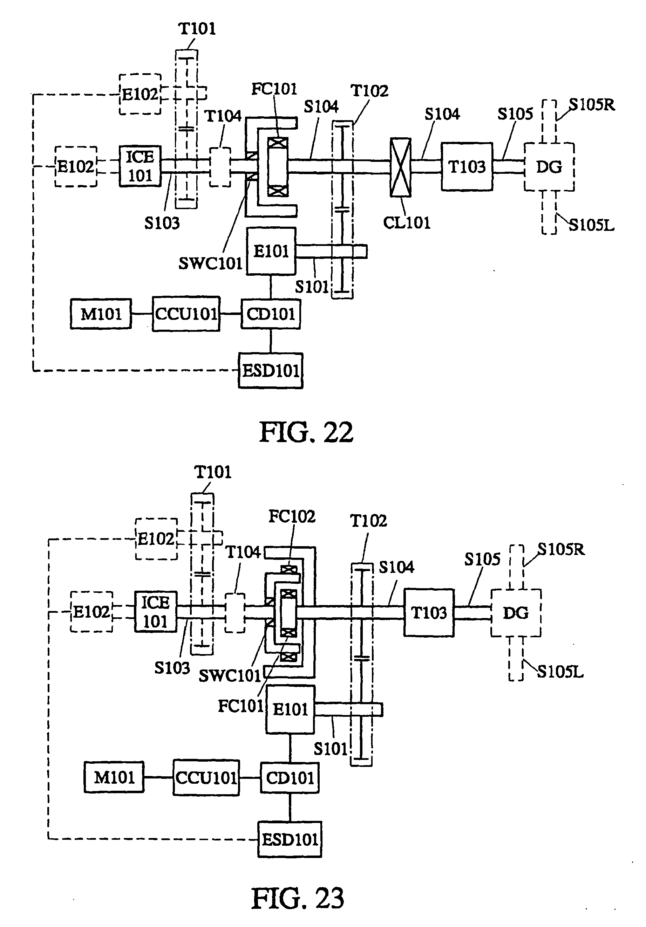

C. Figs. 22 through 29 respectively show an application system having a one-way transmission mechanism SWC101 as a drive control connected in series with the driven draw side of the centrifugal clutch FC101 taken from examples of Figs. 1 through 8.

Fig. 22 is a view showing a first preferred embodiment of the application system taken from Fig. 1 that has a one-way transmission mechanism SWC101 as a drive control connected in series with the driven draw side of the centrifugal clutch FC101, essentially comprised of having provided the centrifugal clutch FC101 between the steering shaft S103 driven by the engine ICE101 and the load side transmission shaft S104 for controlling the operation of the steering shaft S103 and the load side steering shaft S104 to couple or interrupt transmission, and a one-way transmission mechanism SWC101 selected for steering operation. Within, the steering shaft S 103 driven by the engine ICE101 is coupled to the driven draw side of the centrifugal clutch FC101 through the one-way transmission mechanism SWC101 selected for steering operation while the load side steering shaft S104 is coupled to the drive draw side of the centrifugal clutch FC101 so that when the load side steering shaft S104 reaches its preset rpm, the centrifugal clutch FC101 is forthwith closed, thus to draw the steering shaft S103 directly driven by the engine ICE101 or through the fixed speed ratio or variable speed ratio or variable steering transmission mechanism or planetary transmission mechanism T104. The load side steering shaft S104 to drive the load is provided with another fixed speed ratio or variable speed ratio or variable steering transmission mechanism or planetary transmission mechanism T102 to engage in mutual transmission with the first primary dynamo-electric unit E101 while other units comprising the system are the same as those provided in the example illustrated in Fig 1;

The combination of those structures described above for the system are subject to control by the manual control interface M101, the central control unit CCU101, the drive control device CD101 and the storage discharging device ESD 101. The specific system structure described above provides functions related to those described in subparagraphs (1) through (10) or other specific function, it also provides patterns related to those operation patterns described in A1 through A3 or other specific operation pattern.

Fig. 23 is a view showing a second preferred embodiment of an application system, within, one-way transmission mechanism as the driven control is connected in series with the driven draw side of the centrifugal clutch of the example taken from Fig. 2, essentially comprised of double-acting centrifugal clutches FC101 and FC102 and the one-way transmission mechanism SWC 101 selected for steering operation connected in sequence between the steering shaft S103 and the drive load side steering shaft S104 of the engine ICE101. The double-acting centrifugal clutches is comprised of two units of centrifugal clutches FC101 and FC102 in a three-layer structure, an inner, an intermediate and an out layers, either by insertion to each other or integrated. Within, the inner layer and the inner side of the intermediate layer form the centrifugal clutch FC101. The inner layer incorporated to the load side steering shaft S104 drawn to each other is provided with a drive power-locking unit to act outward when the centrifugal force reaches a preset value. The outer side of the intermediate layer and the inner side of the outer layer form the centrifugal clutch FC102. The intermediate layer related to the one-way transmission mechanism SWC101 selected for steering operation is coupled to the steering shaft S103 driven by the engine. The inner side of the intermediate layer is provided with a circumferential coupling surface for power-locking and its outer side is provided with a drive power-locking unit acting outward when the centrifugal force reaches its preset value performs the functions as an output clutch with the power-locking circumferential coupling surface on the inner side of the outer layer. The outer layer is also incorporated to the load side steering shaft S104 so to provide linkage with the load when the engine runs at low rpm or is temporarily cut off. The steering shaft S103 either directly driven or driven through a fixed speed ratio or variable speed ratio, or variable steering transmission mechanism or planetary transmission mechanism T104 by the engine is coupled to the driven draw side of the centrifugal clutch FC101 and the load side steering shaft S104 to the drive draw side of the centrifugal clutch FC101 so to forthwith close the centrifugal clutch FC101 and further to draw the steering shaft S103 driven by the engine ICE101 when the load side steering shaft S104 reaches its preset rpm. Alternatively, a fixed speed ratio or variable speed ratio, or variable steering transmission mechanism or planetary transmission mechanism T102 is provided on the load side steering shaft S104 to engage mutual transmission with the primary dynamo-electric unit while other units comprising the system are the same as those provided in the example illustrated in Fig. 2.

The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

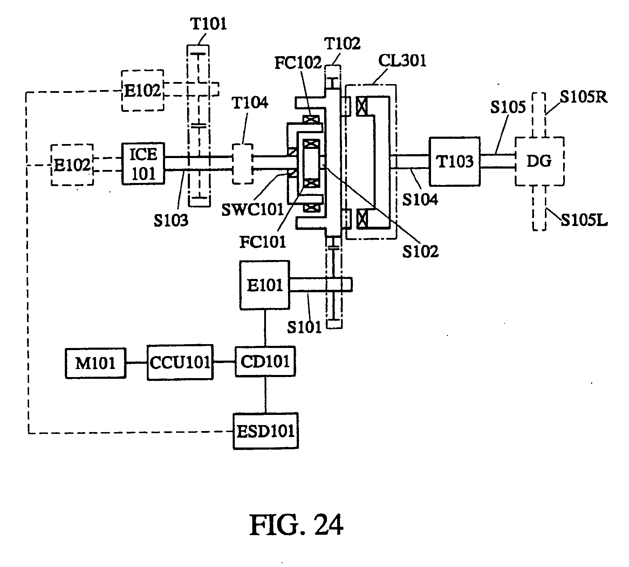

Fig. 24 is a view showing a third preferred embodiment of an application system that has a one-way transmission mechanism as the driven control connected in series with the driven draw side of the centrifugal clutch of the example taken from Fig. 3. Within, the fixed speed ratio or variable speed ratio, or variable steering transmission mechanism or planetary transmission mechanism T102, the inner circumference of coupling surface for power-locking of the double-acting centrifugal clutch FC101 and the outer circumference of coupling surface for power-locking of the double-acting centrifugal clutch FC102 are jointly incorporated to an intermediate steering shaft S102. The double-acting centrifugal clutches are comprised of two units of centrifugal clutches FC101 and FC102 inserted to each other in a three-layer structure, an inner, an intermediate and an out layers. Within, the inner layer and the inner side of the intermediate layer form the centrifugal clutch FC101. The inner layer incorporated to the intermediate steering shaft S102 drawn to each other is provided with a drive power-locking unit to act outward when the centrifugal force reaches a preset value. The outer side of the intermediate layer and the inner side of the outer layer form the centrifugal clutch FC102. The intermediate layer related to the one-way transmission mechanism SWC101 selected for steering operation is coupled to the steering shaft S103 driven by the engine. The inner side of the intermediate layer is provided with a circumferential coupling surface for power-locking and its outer side is provided with a drive power-locking unit acting outward when the centrifugal force reaches its preset value performs the functions as an output clutch with the power-locking circumferential coupling surface on the inner side of the outer layer. The outer layer is also incorporated to the intermediate steering shaft S104 so to provide linkage with the load when the engine runs at low rpm or is temporarily cut off. The steering shaft S103 either directly driven or driven through a fixed speed ratio or variable speed ratio, or variable steering transmission mechanism or planetary transmission mechanism T104 by the engine is coupled to the driven draw side of the centrifugal clutch FC101 and the intermediate steering shaft S102 to the drive draw side of the centrifugal clutch FC101 so to forthwith close the centrifugal clutch FC101 and further to draw the steering shaft S103 driven by the engine ICE101 when the intermediate steering shaft S102 reaches its preset rpm,
the intermediate steering shaft S102: is directly outputted to the load, or alternatively, to an output clutch CL301 controlled by manual, mechanical, electromagnetic, hydraulic or centrifugal force before being outputted to the load via the load side steering shaft S104; or as required, to execute single shaft output through a fixed speed ratio or variable speed ratio, variable steering transmission or planetary transmission mechanism T103, then through a steering shaft S105; or an optional transmission mechanism comprised of a differential gear set DG for differential output through two units of differential steering shafts S105R and S105L; the additional output clutch CL301 is provided between the intermediate steering shaft S102 and the load side steering shaft S104 with both steering shafts driven by the power-locking coupling surfaces on the inner and outer circumferences of the double-acting centrifugal clutches FC101 and FC102 while the other units comprising the system are the same as those provided in the example illustrated in Fig. 3.

The combination of those structures described above for the system are subject to control by the manual control interface M101, the central control unit CCU101, the drive control device CD101 and the storage discharging device ESD 101. The specific system structure described above provides functions same as those by the preferred embodiment illustrated in Fig. 23 when the output clutch CL301 is closed; and provides additional function when the output clutch CL301 is disengaged, including functions related to those described in subparagraphs (1) through (10) or other specific function, and operation patterns related to those operation patterns described in A1 through A3 or other specific operation pattern.

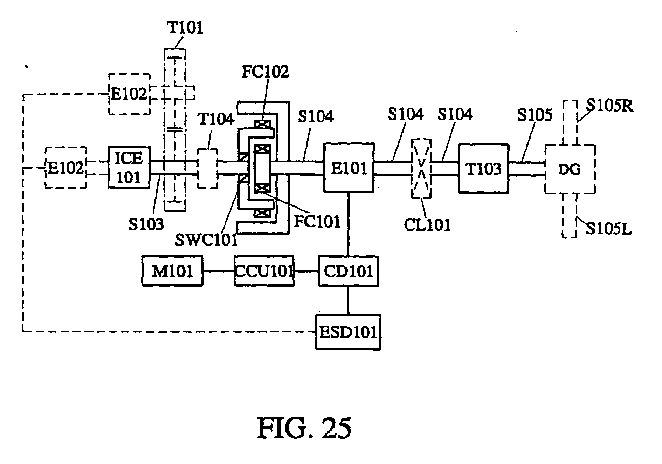

Fig. 25 is a view showing a fourth preferred embodiment of an application system that has a one-way transmission mechanism as the driven control connected in series with the driven draw side of the centrifugal clutch of the example taken from Fig. 4. Within, the primary dynamo-electric unit E101 and the load side steering shaft S104 indicate a coaxial structure, and where between the dynamo-electric unit E101 and the engine ICE101 are provided with the double-acting centrifugal clutches FC101 and FC102, and the one-way transmission mechanism SWC101 selected for steering operation. Both of the inner and the outer structures of the double-acting centrifugal clutches FC101 and FC102 are incorporated to the load side steering shaft S104 coupled to the output shaft of the primary dynamo-electric unit E101 and its intermediate layer structure is mutually incorporated to the steering shaft S103 driven by the engine ICE101. The double-acting centrifugal clutches is comprised of two units of centrifugal clutches FC101 and FC102 inserted to each other in a three-layer structure, an inner, an intermediate and an out layers. Within, the inner layer and the inner side of the intermediate layer form the centrifugal clutch FC101. The inner layer incorporated to the load side steering shaft S104 drawn to each other is provided with a drive power-locking unit to act outward when the centrifugal force reaches a preset value. The outer side of the intermediate layer and the inner side of the outer layer form the centrifugal clutch FC102. The intermediate layer related to the one-way transmission mechanism SWC101 selected for steering operation is coupled to the steering shaft S103 driven by the engine. The inner side of the intermediate layer is provided with a circumferential coupling surface for power-locking and its outer side is provided with a drive power-locking unit acting outward when the centrifugal force reaches its preset value performs the functions as an output clutch with the power-locking circumferential coupling surface on the inner side of the outer layer. The outer layer is also incorporated to the load side steering shaft S103 so to provide linkage with the load when the engine runs at low rpm or is temporarily cut off. The steering shaft S103 either directly driven or driven through a fixed speed ratio or variable speed ratio, or variable steering transmission mechanism or planetary transmission mechanism T104 by the engine is coupled to the driven draw side of the centrifugal clutch FC101 and the load side steering shaft S103 to the drive draw side of the centrifugal clutch FC101 so to forthwith close the centrifugal clutch FC101 and further to draw the steering shaft S103 driven by the engine ICE101 when the load side steering shaft S102 reaches its preset rpm. The output clutch CL101 when required is provided between the output side of the primary dynamo-electric unit E101 and the fixed speed ratio or variable speed ratio, or variable steering transmission mechanism or planetary transmission mechanism T103. The output clutch CL101 is controlled by manual, mechanical, electromagnetic, hydraulic or centrifugal force while the other units comprising the system are the same as those provided in the example illustrated in Fig. 4.

The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

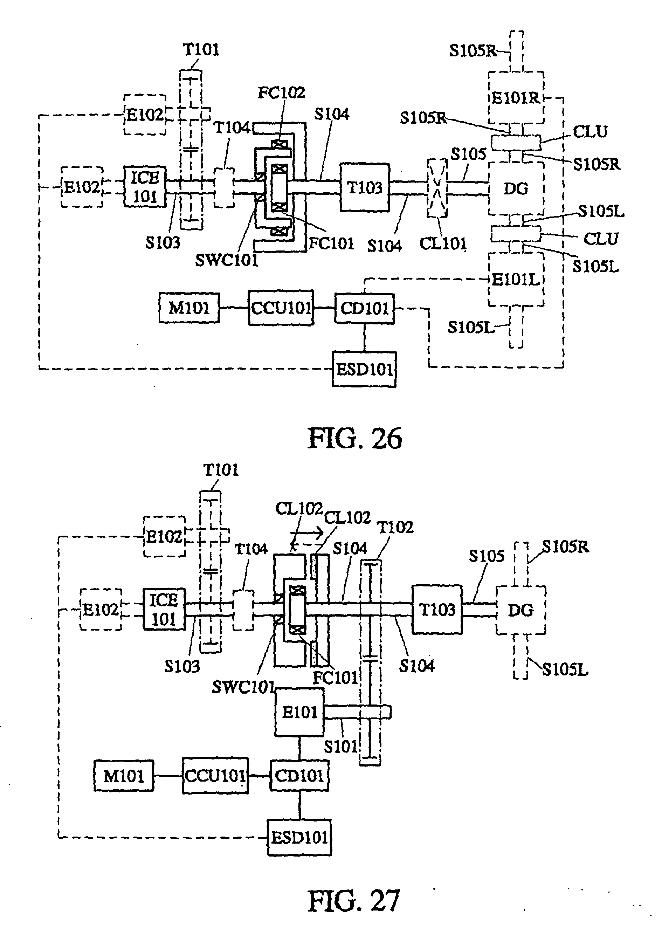

Fig. 26 is a schematic view showing the primary dynamo-electric unit in the preferred embodiment illustrated in Fig. 25 is replaced by two independent dynamo-electric units respectively provided on the side of two output shafts of a differential gear set. Within, the primary dynamo-electric unit E101 of the preferred embodiment in Fig. 25 is replaced by a primary dynamo-electric unit E101R to the right and another primary dynamo-electric unit E101L on the left. The primary dynamo-electric unit E 101 R to the right is directly connected in series with the steering shaft S105R to the right of the differential gear set DG, or alternatively, a one-way or two-way alternatively adapted with a one-way or two-way clutch CLU before being connected in series to the steering shaft S105R to the right of the differential gear set DG. The other primary dynamo-electric unit E101L on the left is directly connected in series with a steering shaft S105L to the left of a differential gear set DG or alternatively adapted with a one-way or two-way clutch CLU before being connected in series to the steering shaft S105L to the left of the differential gear set DG. The steering shaft S104 on the load side of the centrifugal clutch FC101 is directly outputted to the steering shaft S105 of the differential gear set DG, or through the fixed or variable speed ratio or variable steering transmission or planetary transmission mechanism T103 before being outputted to the steering shaft S105 of the differential gear set DG, or alternatively, by means of the output clutch CL101 controlled by manual, mechanical, electromagnetic, hydraulic or centrifugal force before being outputted to the steering shaft S105 of the differential gear set DG. Both of the primary dynamo-electric unit E101R to the right and the other primary dynamo-electric unit E101L on the left are subject to equal speed or differential drive by a drive control device CD101.

Fig. 27 is a view showing that the preferred embodiment of the present invention illustrated in Fig. 22 is provided with a controllable clutch. Within, the centrifugal clutch FC101 and a clutch CL102 controlled by manual, mechanical, electromagnetic, hydraulic power-locking type of or hydraulic coupling type are provided between the engine steering shaft S103 and the load side steering shaft S104 so to execute power coupling or interruption on both of the engine steering shaft S103 and the load side steering shaft S104 for the system to be equipped with a power-locking type or hydraulic coupling type controllable clutch CL102 and engine throttle, to further acquire another specific function for the engine rotation power driven load. The steering shaft S103 either directly driven by the engine ICE101, or through a fixed or variable speed ratio or variable steering transmission or planetary transmission mechanism T104 is coupled to the driven drawn side of the centrifugal clutch FC101 while the load side steering shaft S104 to the drive draw side of the centrifugal clutch FC101. That is, once the load-side steering shaft S104 reaches the preset rpm, the centrifugal clutch FC101 is forthwith closed to draw the steering shaft S103 driven by the engine ECE101. The centrifugal clutch FC101 and the controllable clutch CL102 is individually provided or sharing the same structure.

The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

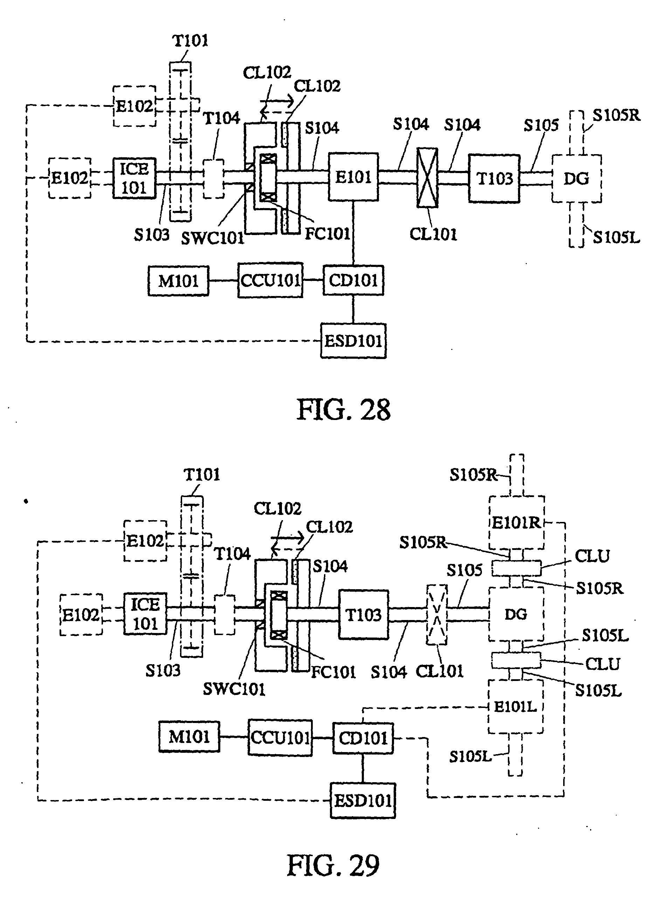

Fig. 28 shows the preferred embodiment illustrated in Fig. 27 is provided with an output clutch. Within the preferred embodiment illustrated in Fig. 27 is provided with an output clutch CL101 controlled by manual, mechanical, electromagnetic, hydraulic or centrifugal force. The output clutch CL101 is provided between the load side steering shaft S104 driven by the primary dynamo-electric unit E101 and the load. When the output clutch CL101 is closed, it provides the same function as those by the preferred embodiment illustrated in Fig. 27 and additional functions when the output clutch CL101 is disengaged, including being separated from the load to leave the engine to simultaneously drive the first and the second dynamo-electric units E101 and E102 to function as generators, or to drive the primary dynamo-electric E101 alone to operate as a generator, as well as those functions related to subparagraphs (1) through (10) or other specific function, and patterns related to those operation patterns described in A1 through A3 or other specific operation pattern.

Fig. 29 is a schematic view showing that the preferred embodiment given in Fig. 28 has the primary dynamo-electric unit to be replaced by two independent dynamo-electric units respectively provided on the side of two output shafts of the differential gear set. The primary dynamo-electric unit E101 of the preferred embodiment in Fig. 28 is replaced by a primary dynamo-electric unit E101R to the right and another primary dynamo-electric unit E101L on the left. The primary dynamo-electric unit E101R to the right is directly connected in series with the steering shaft S105R to the right of the differential gear set DG, or alternatively, a one-way or two-way alternatively adapted with a one-way or two-way clutch CLU before being connected in series to the steering shaft S105R to the right of the differential gear set DG. The other primary dynamo-electric unit E101L on the left is directly connected in series with a steering shaft S105L to the left of a differential gear set DG or alternatively adapted with a one-way or two-way clutch CLU before being connected in series to the steering shaft S105L to the left of the differential gear set DG. The steering shaft S 104 on the load side of the centrifugal clutch FC101 is directly outputted to the steering shaft S 105 of the differential gear set DG, or through the fixed or variable speed ratio or variable steering transmission or planetary transmission mechanism T103 before being outputted to the steering shaft S105 of the differential gear set DG, or alternatively, by means of the output clutch CL101 controlled by manual, mechanical, electromagnetic, hydraulic or centrifugal force before being outputted to the steering shaft S105 of the differential gear set DG. Both of the primary dynamo-electric unit E101R to the right and the other primary dynamo-electric unit E101L on the left are subject to equal speed or differential drive by a drive control device CD101 to provide the same functions as those by the preferred embodiment given in Fig. 28.

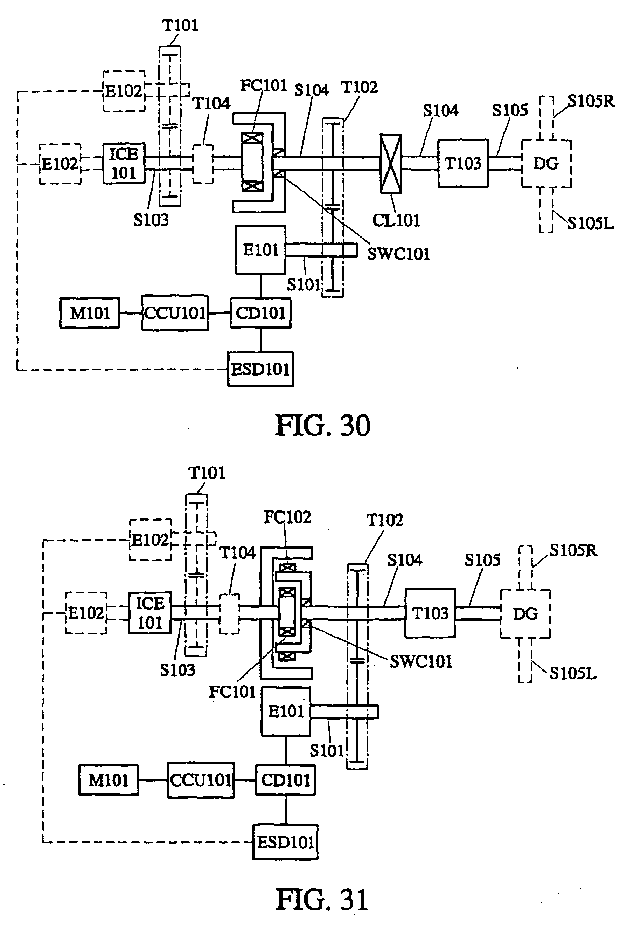

D. In Figs. 30 through 37, those centrifugal clutches disposed between the steering shafts S103 driven by the engine ICE101 and the load side steering shaft S104 of the examples given in Figs. 9 through 16 are provided in opposite direction to function as the drive application systems.

Fig. 30 shows that a first preferred embodiment of a drive application system the present invention is comprised of having the centrifugal clutch from the preferred embodiment of Fig. 22 to be provided in opposite direction and a one-way transmission mechanism selected for steering operation. Wherein, the centrifugal clutch FC101 is provided between the steering shaft S103 driven by the engine ICE101 and the load side steering shaft S104 to control the operation of coupling or interruption the transmission by both of the steering shafts S103 and S104. The steering shaft S103 driven by the engine ICE 101 is coupled to the drive draw side of the centrifugal clutch FC101 and the load side steering shaft S104 is coupled to the driven draw side of the centrifugal clutch FC101 so that once the steering shaft S103 which is directly driven by the engine ICE101 or through a fixed speed ratio or variable speed ratio, or variable steering device or planetary transmission mechanism T104 reaches the preset rpm, it drives to close the centrifugal clutch FC101, thus to draw the load side steering shaft S104. The steering shaft S104 on the load side is provided to drive the load, and a fixed speed ratio or variable speed ratio or variable steering transmission mechanism T102 is provided to the steering shaft S104 on the load side to engage in mutual transmission with a primary dynamo-electric unit E101 while the other units comprising the system are the same as those provided in the example illustrated in Fig. 9;

The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

Fig. 31 shows that a second preferred embodiment of a drive application system the present invention is comprised of having the centrifugal clutch from the preferred embodiment of Fig. 23 to be provided in opposite direction and a one-way transmission mechanism selected for steering operation. Wherein, the double-acting centrifugal clutches FC101 and FC102 are connected in series between the steering shaft S103 and the drive load side steering shaft S104 of the engine ICE101. The double acting centrifugal clutches FC101 and FC102 form to each other by insertion or are integrated into a 3-layer structure containing an inner layer, an intermediate layer and an outer layer. The inner layer and the inner side of the intermediate layer form the centrifugal clutch FC101, the inner layer incorporated to the steering shaft S103 on the side of the engine ICE101 drawn to each other is provided with a drive power-locking unit to act outward when the centrifugal force reaches a preset value; the outer side of the intermediate layer and the inner side of the outer layer form the centrifugal clutch FC102; the intermediate layer being coupled to the load side steering shaft S103 having its inner side provided with circumferential coupling surface for power-locking and its outer side provided with a drive power-locking unit acting outward when the centrifugal force reaches its preset value performs the functions as an output clutch with the power-locking circumferential coupling surface on the inner side of the outer layer; and the outer layer is also incorporated to the steering shaft S103 on the side of the engine ICE101 so to provide linkage with the load when the engine runs at low rpm or is temporarily cut off. The load side steering shaft S103 either directly driven or driven through a fixed speed ratio or variable speed ratio, or variable steering transmission mechanism or planetary transmission mechanism T104 by the engine is coupled through the one-way transmission mechanism SWC101 selected for steering operation to the drive draw side of the centrifugal clutch FC101 and the load side steering shaft S 104 to the driven draw side of the centrifugal clutch FC101 so to forthwith close the centrifugal clutch FC101 and further to draw the load side steering shaft S104 when the load side steering shaft S104 reaches its preset rpm. Alternatively, a fixed speed ratio or variable speed ratio, or variable steering transmission mechanism or planetary transmission mechanism T102 is provided on the load side steering shaft S104 to engage mutual transmission with the primary dynamo-electric unit; while the other units comprising the system are the same as those provided in the example illustrated in Fig. 10;

The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern;

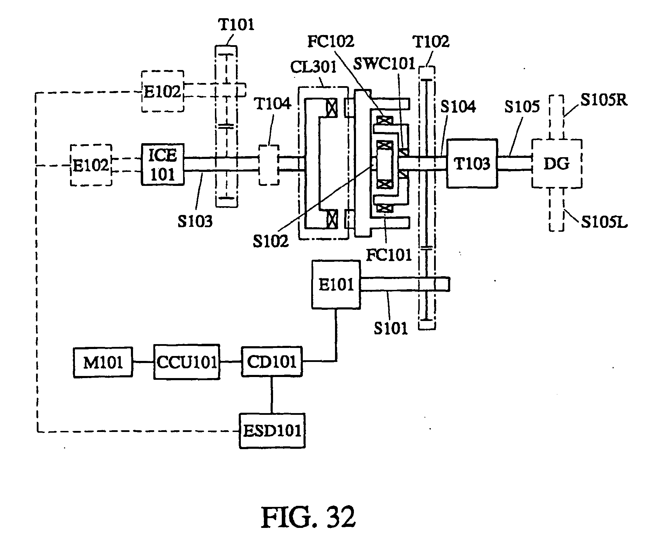

Fig. 32 shows that a third preferred embodiment of a drive application system the present invention is comprised of having the centrifugal clutch from the preferred embodiment of Fig. 24 to be provided in opposite direction and a one-way transmission mechanism selected for steering operation. Wherein, an output clutch CL301 controlled by manual, mechanical, electromagnetic or hydraulic force is alternatively provided between the steering shaft S103 on the side of the engine ICE101 and the double-acting centrifugal clutches at where between the drive draw side of the centrifugal clutch FC101 and the driven draw side of the centrifugal clutch FC102 while the other units comprising the system are the same as those provided in the example illustrated in Fig. 11;

The combination of those structures described above for the system are subject to control by the manual control interface M101, the central control unit CCU101, the drive control device CD101 and the storage discharging device ESD101. The specific system structure described above provides same functions same as those by the preferred embodiment illustrated in Fig. 31 when the output clutch CL301 is closed; and when the output clutch CL301 is disengaged, the specific system structure described above provides additional functions related to those described in subparagraphs (1) through (10) or other specific function, it also provides patterns related to those operation patterns described in A1 through A3 or other specific operation pattern.

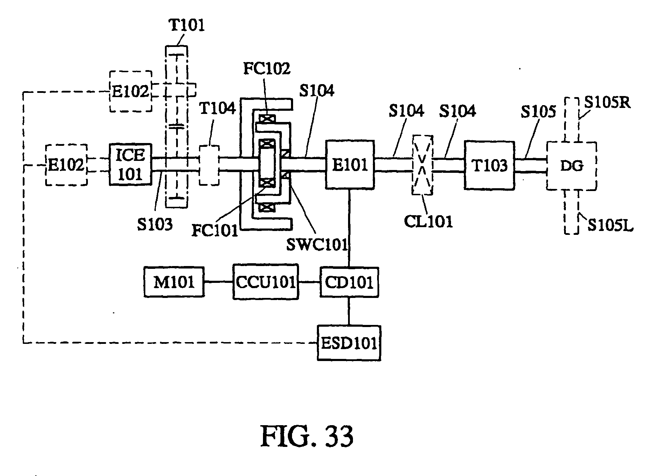

Fig. 33 shows that a fourth preferred embodiment of a drive application system the present invention is comprised of having the centrifugal clutch from the preferred embodiment of Fig. 25 to be provided in opposite direction and a one-way transmission mechanism selected for steering operation. Wherein, the dynamo-electric unit E101 and the load side steering shaft S104 indicate a coaxial structure with the double-acting centrifugal clutches FC101 and FC102 provided between the dynamo-electric unit E101 and the engine ICE101. The intermediate structure is provided to be incorporated to the load side steering shaft S104 in the same structure of the output shaft of the primary dynamo-electric unit E101, and its inner and outer layers incorporated to the engine steering shaft S103. The double acting centrifugal clutches FC101 and FC102 form to each other or integrated into a 3-layer structure containing an inner layer, an intermediate layer and an outer layer. Within, the inner layer and the inner side of the intermediate layer form the centrifugal clutch FC101, the inner layer incorporated to the engine steering shaft S103 drawn to each other is provided with a drive power-locking unit to act outward when the centrifugal force reaches a preset value; the outer side of the intermediate layer and the inner side of the outer layer form the centrifugal clutch FC102; the intermediate layer being coupled to the steering shaft S 103 driven by the primary dynamo-electric unit E101 having its inner side provided with circumferential coupling surface for power-locking and its outer side provided with a drive power-locking unit acting outward when the centrifugal force reaches its preset value performs the functions as an output clutch with the power-locking circumferential coupling surface on the inner side of the outer layer. The drive draw side of the centrifugal clutch FC101 is incorporated to the steering shaft S103 on the side of the engine ICE101 so to couple to the engine to drive the load when the engine runs at high rpm, and to cut off the linkage to the load when the engine runs at low rpm. The engine ICE101 is either directly or by means of the steering shaft S103 driven by a fixed speed ratio or variable speed ratio, or variable steering transmission mechanism or planetary transmission mechanism T104, coupled to the drive draw side of the centrifugal clutch FC101 and the driven draw side of the other centrifugal clutch FC102. Meanwhile, the load side steering shaft S104 is coupled to the driven draw side of the centrifugal clutch FC101 and the drive draw side of the other centrifugal clutch FC102 so that when the load side steering shaft S104 reaches its preset rpm, the other centrifugal clutch FC102 is closed thus to draw the steering shaft S103 driven by the engine ICE101, or when the steering shaft S103 on the side of the engine ICE101 reaches its preset rpm, the centrifugal clutch FC101 is closed, thus to draw the load side steering shaft S104 to drive the load; as required, the output clutch CL101 is provided at where between the output side of the primary dynamo-electric unit E101 and the fixed speed, or variable speed ratio or variable steering transmission mechanism or planetary transmission mechanism T103. The output clutch CL101 is controlled by manual, mechanical, electromagnetic, hydraulic or centrifugal force while the other units comprising the system are the same as those provided in the example illustrated in Fig. 12;

The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

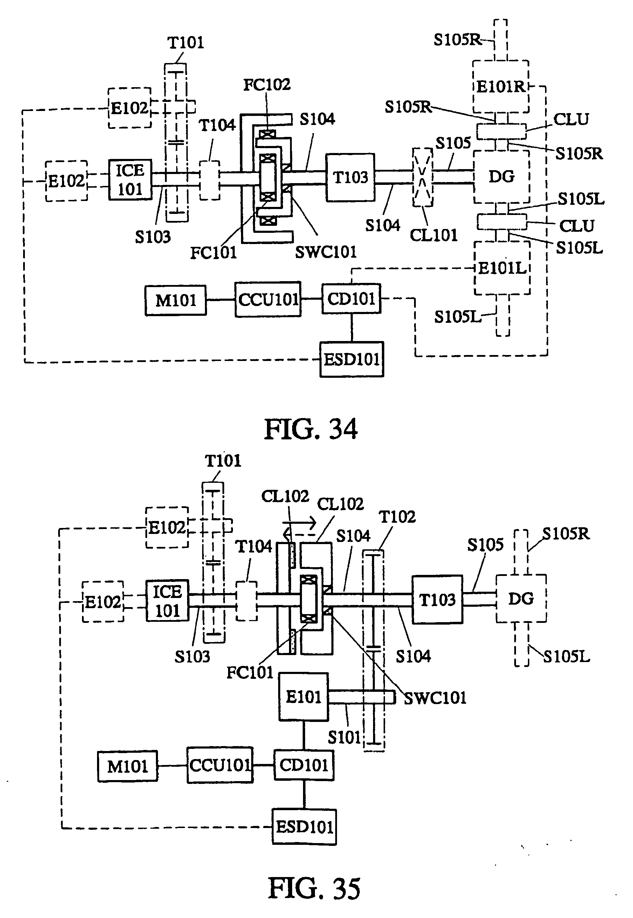

Fig. 34 is a schematic view showing that the primary dynamo-electric unit in the preferred embodiment taken from Fig. 33 is replaced by two independent dynamo-electric units respectively provided on the side of two output shafts of the differential gear set. Within, the primary dynamo-electric unit E101 of the preferred embodiment in Fig. 33 is replaced by a primary dynamo-electric unit E101R to the right and another primary dynamo-electric unit E101L on the left. The primary dynamo-electric unit E101R to the right is directly connected in series with the steering shaft S105R to the right of the differential gear set DG, or alternatively, a one-way or two-way alternatively adapted with a one-way or two-way clutch CLU before being connected in series to the steering shaft S105R to the right of the differential gear set DG. The other primary dynamo-electric unit E101L on the left is directly connected in series with a steering shaft S105L to the left of a differential gear set DG or alternatively adapted with a one-way or two-way clutch CLU before being connected in series to the steering shaft S105L to the left of the differential gear set DG. The steering shaft S 104 on the load side of the centrifugal clutch FC101 is directly outputted to the steering shaft S105 of the differential gear set DG, or through the fixed or variable speed ratio or variable steering transmission or planetary transmission mechanism T103 before being outputted to the steering shaft S 105 of the differential gear set DG, or alternatively, by means of the output clutch CL101 controlled by manual, mechanical, electromagnetic, hydraulic or centrifugal force before being outputted to the steering shaft S105 of the differential gear set DG. Both of the primary dynamo-electric unit E101R to the right and the other primary dynamo-electric unit E101L on the left are subject to equal speed or differential drive by a drive control device CD101.

Fig. 35 shows that the preferred embodiment of Fig. 30 is provided with a controllable clutch. Wherein, a centrifugal the centrifugal clutch FC101 and another clutch CL102 controlled by manual, mechanical, electromagnetic, hydraulic power-locking type of or hydraulic coupling type are provided between the engine steering shaft S103 and the load side steering shaft S104 so to execute power coupling or interruption on both of the engine steering shaft S103 and the load side steering shaft S104 for the system to be equipped with a power-locking type or hydraulic coupling type controllable clutch CL102 and engine throttle, to further acquire another specific function for the engine rotation power driven load. The steering shaft S103 either directly driven by the engine ICE 101, or through a fixed or variable speed ratio or variable steering transmission or planetary transmission mechanism T104 is coupled to the drive drawn side of the centrifugal clutch FC101 while the load side steering shaft S104 to the driven draw side of the centrifugal clutch FC101. That is, once the steering shaft S103 on the side of the engine ICE101 reaches the preset rpm, the centrifugal clutch FC101 is forthwith closed to draw the load side steering shaft S104. The centrifugal clutch FC101 and the controllable clutch CL102 is individually provided or sharing the same structure, while the other units comprising the system are the same as those provided in the preferred embodiment illustrated in Fig. 30.

The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

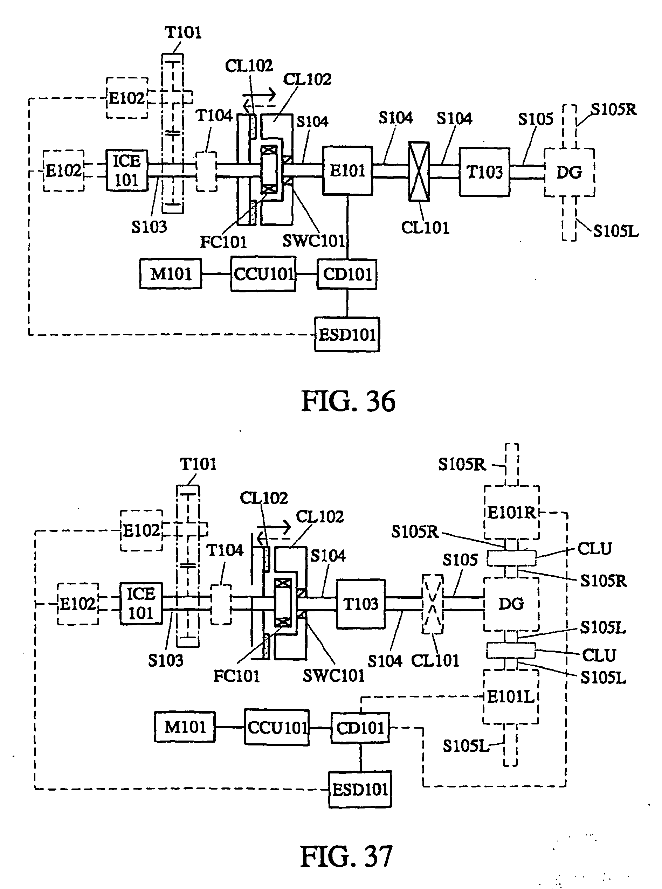

Fig. 36 shows that the preferred embodiment of Fig. 35 is provided with an output clutch. Wherein, the preferred embodiment taken from Fig. 35 being further provided with an output clutch CL101 controlled by manual, mechanical, electromagnetic, hydraulic or centrifugal force is disposed at where between the load side steering S104 driven by the primary dynamo-electric unit E101 and the load. When the output shaft CL101 is closed, it provides the same functions as those by the preferred embodiment given in Fig. 35; and when it is disengaged, the engine ICE101 simultaneously drives the primary dynamo-electric unit E101 and the secondary dynamo-electric unit E102 to operate as a generator or the primary dynamo-electric unit E101 is driven alone to operate as a generator and also provides additional functions related to those described in subparagraphs (1) through (10) or other specific function, it also provides patterns related to those operation patterns described in A1 through A3 or other specific operation pattern.

Fig. 37 is a schematic view showing that the primary dynamo-electric unit in the preferred embodiment taken from Fig. 36 is replaced by two independent dynamo-electric units respectively provided on the side of two output shafts of the differential gear set. Within, the primary dynamo-electric unit E101 of the preferred embodiment in Fig. 36 is replaced by a primary dynamo-electric unit E101R to the right and another primary dynamo-electric unit E101L on the left. The primary dynamo-electric unit E101R to the right is directly connected in series with the steering shaft S105R to the right of the differential gear set DG, or alternatively, a one-way or two-way alternatively adapted with a one-way or two-way clutch CLU before being connected in series to the steering shaft S105R to the right of the differential gear set DG. The other primary dynamo-electric unit E101L on the left is directly connected in series with a steering shaft S105L to the left of a differential gear set DG or alternatively adapted with a one-way or two-way clutch CLU before being connected in series to the steering shaft S105L to the left of the differential gear set DG. The steering shaft S104 on the load side of the centrifugal clutch FC101 is directly outputted to the steering shaft S105 of the differential gear set DG, or through the fixed or variable speed ratio or variable steering transmission or planetary transmission mechanism T103 before being outputted to the steering shaft S105 of the differential gear set DG, or alternatively, by means of the output clutch CL101 controlled by manual, mechanical, electromagnetic, hydraulic or centrifugal force before being outputted to the steering shaft S105 of the differential gear set DG. Both of the primary dynamo-electric unit E101R to the right and the other primary dynamo-electric unit E101L on the left are subject to equal speed or differential drive by a drive control device CD101, while providing the same functions as those provided in the preferred embodiment illustrated in Fig. 36.

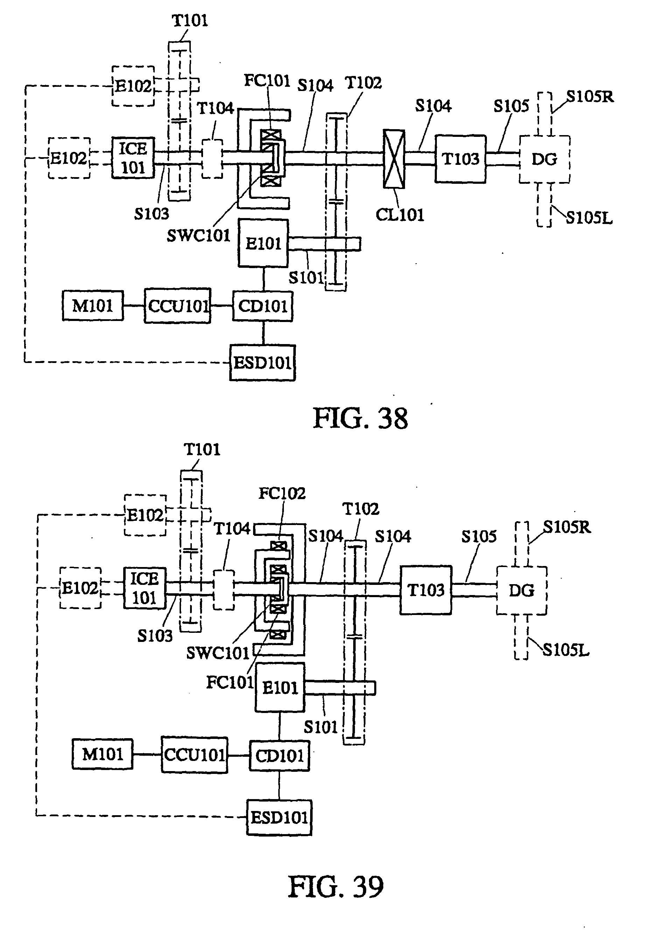

E. Fig. 38 through 45 show that preferred embodiments of the application system are provided in each preferred embodiment with a one-way transmission mechanism SWC101between the steering shaft S103 incorporated to the engine ICE101 and the driven draw side of the centrifugal clutch FC101, and the output shaft S104 incorporated to the drive draw side of the centrifugal clutch FC101.

Fig, 38 shows a first preferred embodiment of an application system taken from the example illustrated in Fig. 1, which is changed to that a one-way transmission mechanism is provided between the steering shaft of the engine incorporated to the driven draw side of the centrifugal clutch and the output shaft incorporated to the drive draw side of the centrifugal clutch. Wherein, the centrifugal clutch FC101 and the one-way transmission mechanism SWC101 selected for steering operation to control the operation of both steering shafts S103 and S104 to couple or interrupt transmission is provided between the steering shaft S103 driven by the engine ICE101 and the load side steering shaft S104. The steering shaft S103 driven by the engine ICE101 is coupled to the driven draw side of the centrifugal clutch FC101 while the load side steering shaft S104 is coupled to the drive draw side of the centrifugal clutch FC101 so that when the load side steering shaft S104 reaches its preset rpm, the centrifugal clutch FC101 is forthwith closed, thus to draw the steering shaft S103 either directly driven by the engine ICE101 or via the fixed or variable speed ratio or variable steering transmission or planetary transmission mechanism T104; the load side steering shaft S104 is provided to drive the load and a fixed or variable speed ratio or variable steering transmission or planetary transmission mechanism T102 may be provided on the load side steering shaft S104 to engage mutual transmission with the primary dynamo-electric unit E 101 while the other units comprising the system are the same as those provided in the example illustrated in Fig. 1;

The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

Fig, 39 shows a second preferred embodiment of an application system taken from the example illustrated in Fig. 2. Wherein a one-way transmission mechanism is provided between the steering shaft of the engine incorporated to the driven draw side of the centrifugal clutch and the output shaft incorporated to the drive draw side of the centrifugal clutch. The double-acting centrifugal clutches FC101 and FC 102 are connected in series and in sequence between the steering shaft S 103 and the load side steering shaft S104 of the engine ICE 101, and on the one-way transmission mechanism SWC101 selected for steering operation. The double acting centrifugal clutches FC101 and FC102 form to each other or integrated into a 3-layer structure containing an inner layer, an intermediate layer and an outer layer. Within, the inner layer and the inner side of the intermediate layer form the centrifugal clutch FC101, the inner layer incorporated to the load side steering shaft S 104 drawn to each other is provided with a drive power-locking unit to act outward when the centrifugal force reaches a preset value; the outer side of the intermediate layer and the inner side of the outer layer form the centrifugal clutch FC 102; the intermediate layer being coupled to the steering shaft S103 driven by the engine having its inner side provided with circumferential coupling surface for power-locking and its outer side provided with a drive power-locking unit acting outward when the centrifugal force reaches its preset value performs the functions as an output clutch with the power-locking circumferential coupling surface on the inner side of the outer layer; and the outer layer is also incorporated to the load side steering shaft S104 so to provide linkage with the load when the engine runs at low rpm or is temporarily cut off. The steering shaft S103 either directly driven or driven through a fixed speed ratio or variable speed ratio, or variable steering transmission mechanism or planetary transmission mechanism T 104 by the engine is coupled to the driven draw side of the centrifugal clutch FC101 and the load side steering shaft S104 to the drive draw side of the centrifugal clutch FC101 so to forthwith close the centrifugal clutch FC101 and further to draw the steering shaft S103 driven by the engine ICE101 when the load side steering shaft S104 reaches its preset rpm. Alternatively, a fixed speed ratio or variable speed ratio, or variable steering transmission mechanism or planetary transmission mechanism T102 is provided on the load side steering shaft S104 to engage mutual transmission with the primary dynamo-electric unit while the other units comprising the system are the same as those disclosed in the example illustrated in Fig. 2;

The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

Fig, 40 shows a third preferred embodiment of an application system taken from the example illustrated in Fig. 3. Wherein a one-way transmission mechanism is provided between the steering shaft of the engine incorporated to the driven draw side of the centrifugal clutch and the output shaft incorporated to the drive draw side of the centrifugal clutch. The fixed speed ratio or variable speed ratio, or variable steering transmission mechanism or planetary transmission mechanism T102 taken from the preferred embodiment illustrated I Fig. 39 are jointly incorporated to the intermediate steering shaft S102 with the coupling surface of the inner circumference of the double-acting centrifugal clutch FC101 for power locking and the coupling surface of the outer circumference of the double-acting centrifugal clutch FC102. The double-acting centrifugal clutches are comprised of two units of centrifugal clutches FC101 and FC102 inserted to each other in a three-layer structure, an inner, an intermediate and an out layers. Within, the inner layer and the inner side of the intermediate layer form the centrifugal clutch FC101. The inner layer incorporated to the intermediate steering shaft S102 drawn to each other is provided with a drive power-locking unit to act outward when the centrifugal force reaches a preset value. The outer side of the intermediate layer and the inner side of the outer layer form the centrifugal clutch FC102. The intermediate layer related to the one-way transmission mechanism SWC101 selected for steering operation is coupled to the steering shaft S103 driven by the engine. The inner side of the intermediate layer is provided with a circumferential coupling surface for power-locking and its outer side is provided with a drive power-locking unit acting outward when the centrifugal force reaches its preset value performs the functions as an output clutch with the power-locking circumferential coupling surface on the inner side of the outer layer. The outer layer is also incorporated to the intermediate steering shaft S104 so to provide linkage with the load when the engine runs at low rpm or is temporarily cut off. The steering shaft S103 either directly driven or driven through a fixed speed ratio or variable speed ratio, or variable steering transmission mechanism or planetary transmission mechanism T104 by the engine is coupled to the driven draw side of the centrifugal clutch FC101, and the one-way transmission mechanism SWC101 selected for steering operation is provided between the steering shaft S103 and the intermediate shaft S102 while the intermediate shaft S102 is coupled to the drive draw side of the centrifugal clutch FC101 so to forthwith close the centrifugal clutch FC101 and further to draw the steering shaft S103 driven by the engine ICE101 when the intermediate steering shaft S102 reaches its preset rpm;
the intermediate steering shaft S102: is directly outputted to the load, or alternatively, to an output clutch CL301 controlled by manual, mechanical, electromagnetic, hydraulic or centrifugal force before being outputted to the load via the load side steering shaft S104; or as required, to execute single shaft output through a fixed speed ratio or variable speed ratio, variable steering transmission or planetary transmission mechanism T103, then through a steering shaft S105; or an optional transmission mechanism comprised of a differential gear set DG for differential output through two units of differential steering shafts S105R and S105L; the additional output clutch CL301 is provided between the intermediate steering shaft S102 and the load side steering shaft S104 with both steering shafts driven by the power-locking coupling surfaces on the inner and outer circumferences of the double-acting centrifugal clutches FC101 and FC102 while the other units comprising the system are the same as those disclosed in the example illustrated in Fig. 3;

The combination of those structures described above for the system are subject to control by the manual control interface M101, the central control unit CCU101, the drive control device CD101 and the storage discharging device ESD101. The specific system structure described above provides same functions same as those by the preferred embodiment illustrated in Fig. 39 when the output clutch CL301 is closed; and when the output clutch CL301 is disengaged, the specific system structure described above provides additional functions related to those described in subparagraphs (1) through (10) or other specific function, it also provides patterns related to those operation patterns described in A1 through A3 or other specific operation pattern.

Fig, 41 shows a fourth preferred embodiment of an application system taken from the example illustrated in Fig. 4. Wherein a one-way transmission mechanism is provided between the steering shaft of the engine incorporated to the driven draw side of the centrifugal clutch and the output shaft incorporated to the drive draw side of the centrifugal clutch. The primary dynamo-electric unit E101 and the load side steering shaft S104 indicate coaxial structure and the double-acting centrifugal clutches FC101 and FC102 are provided between the dynamo-electric unit E101 and the engine ICE101 with its inner and outer structures to be incorporated to the load side steering shaft S104 incorporated to the output terminal of the primary dynamo-electric unit E101 and its intermediate structure is incorporated to the steering shaft S103 driven by the engine ICE101. The double-acting centrifugal clutches is comprised of two units of centrifugal clutches FC101 and FC102 inserted to each other in a three-layer structure, an inner, an intermediate and an out layers. Within, the inner layer and the inner side of the intermediate layer form the centrifugal clutch FC101. The inner layer incorporated to the load side steering shaft S104 drawn to each other is provided with a drive power-locking unit to act outward when the centrifugal force reaches a preset value. The outer side of the intermediate layer and the inner side of the outer layer form the centrifugal clutch FC102. The intermediate layer related to the one-way transmission mechanism SWC101 selected for steering operation is coupled to the steering shaft S103 driven by the engine. The inner side of the intermediate layer is provided with a circumferential coupling surface for power-locking and its outer side is provided with a drive power-locking unit acting outward when the centrifugal force reaches its preset value performs the functions as an output clutch with the power-locking circumferential coupling surface on the inner side of the outer layer. The outer layer is also incorporated to the load side steering shaft S104 so to provide linkage with the load when the engine runs at high speed and to cut off the linkage to the load when the engine runs at low speed. The steering shaft S103 either directly driven or driven through a fixed speed ratio or variable speed ratio, or variable steering transmission mechanism or planetary transmission mechanism T104 by the engine is coupled to the driven draw side of the centrifugal clutch FC101 and the load side steering shaft S 103 to the driven draw side of the centrifugal clutch FC 101. The one-way transmission mechanism SWC101 selected for steering operation is provided between the steering shaft S103 and the load side steering shaft S104 and the load side steering shaft S104 is incorporated to the drive draw side of the centrifugal clutch FC101 so that once the load side steering shaft S104 reaches its rpm, the centrifugal clutch FC101 is closed thus to draw the steering shaft S103 driven by the engine ICE101. The output clutch CL101 when required is provided between the output side of the primary dynamo-electric unit E101 and the fixed speed ratio or variable speed ratio, or variable steering transmission mechanism or planetary transmission mechanism T103. The output clutch CL101 is controlled by manual, mechanical, electromagnetic, hydraulic or centrifugal force while the other units comprising the system are the same as those provided in the example illustrated in Fig. 4;
The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

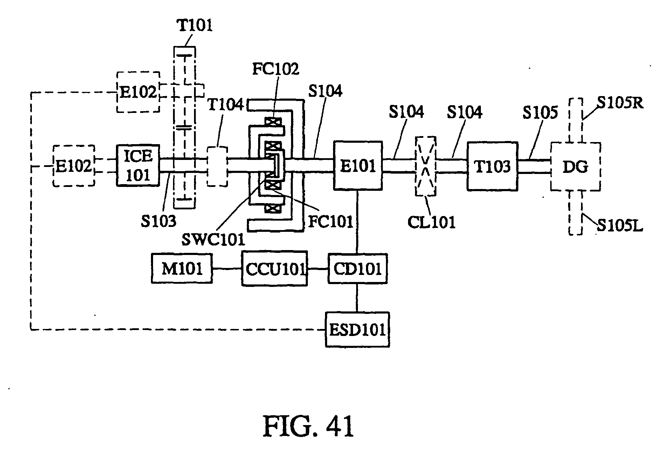

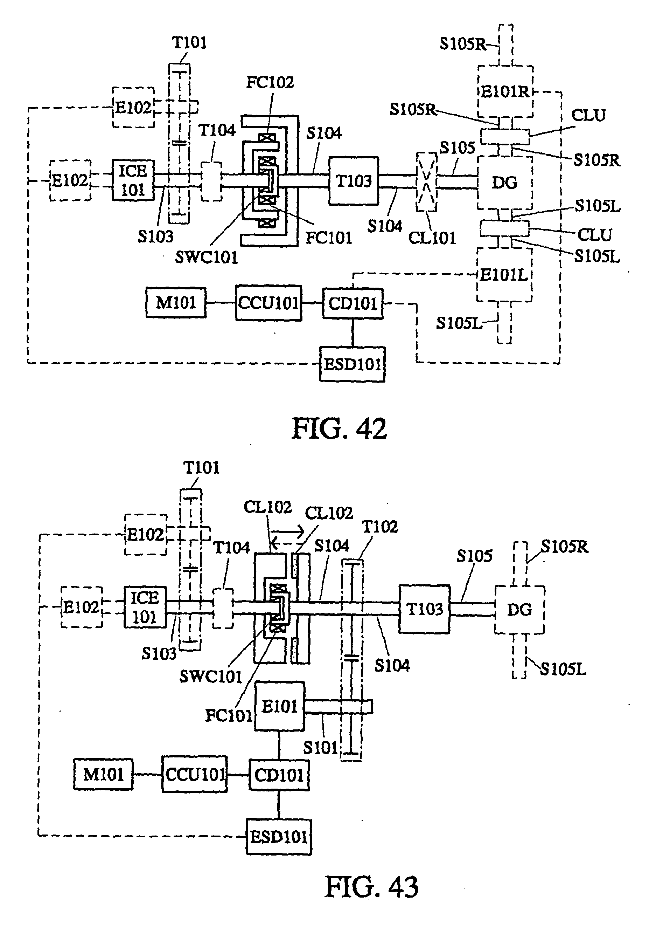

Fig. 42 is a schematic view showing that the preferred embodiment illustrated in Fig. 41 is further having the primary dynamo-electric unit replaced by two independent dynamo-electric units respectively provided on the side of two output shafts of a differential gear set. Within, the primary dynamo-electric unit E101 of the preferred embodiment in Fig. 41 is replaced by a primary dynamo-electric unit E101R to the right and another primary dynamo-electric unit E101L on the left. The primary dynamo-electric unit E101R to the right is directly connected in series with the steering shaft S105R to the right of the differential gear set DG, or alternatively, a one-way or two-way alternatively adapted with a one-way or two-way clutch CLU before being connected in series to the steering shaft S105R to the right of the differential gear set DG. The other primary dynamo-electric unit E101L on the left is directly connected in series with a steering shaft S105L to the left of a differential gear set DG or alternatively adapted with a one-way or two-way clutch CLU before being connected in series to the steering shaft S105L to the left of the differential gear set DG. The steering shaft S104 on the load side of the centrifugal clutch FC101 is directly outputted to the steering shaft S105 of the differential gear set DG, or through the fixed or variable speed ratio or variable steering transmission or planetary transmission mechanism T103 before being outputted to the steering shaft S105 of the differential gear set DG, or alternatively, by means of the output clutch CL101 controlled by manual, mechanical, electromagnetic, hydraulic or centrifugal force before being outputted to the steering shaft S105 of the differential gear set DG. Both of the primary dynamo-electric unit E101R to the right and the other primary dynamo-electric unit E101L on the left are subject to equal speed or differential drive by a drive control device CD101.

Fig. 43 is a view showing that the preferred embodiment taken from Fig. 38 of the present invention is provided with a controllable clutch. Within, the centrifugal clutch FC101 and another clutch CL102 controlled by manual, mechanical, electromagnetic, hydraulic power-locking type of or hydraulic coupling type are provided between the engine steering shaft S103 and the load side steering shaft S104 so to execute power coupling or interruption on both of the engine steering shaft S103 and the load side steering shaft S104 for the system to be equipped with a power-locking type or hydraulic coupling type controllable clutch CL102 and engine throttle, to further acquire another specific function for the engine rotation power driven load. The steering shaft S103 either directly driven by the engine ICE101, or through a fixed or variable speed ratio or variable steering transmission or planetary transmission mechanism T104 is coupled to the driven drawn side of the centrifugal clutch FC101 while the load side steering shaft S104 to the drive draw side of the centrifugal clutch FC101. That is, once the load-side steering shaft S104 reaches the preset rpm, the centrifugal clutch FC101 is forthwith closed to draw the steering shaft S103 driven by the engine ICE101. The centrifugal clutch FC101 and the controllable clutch CL102 is individually provided or sharing the same structure;

The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

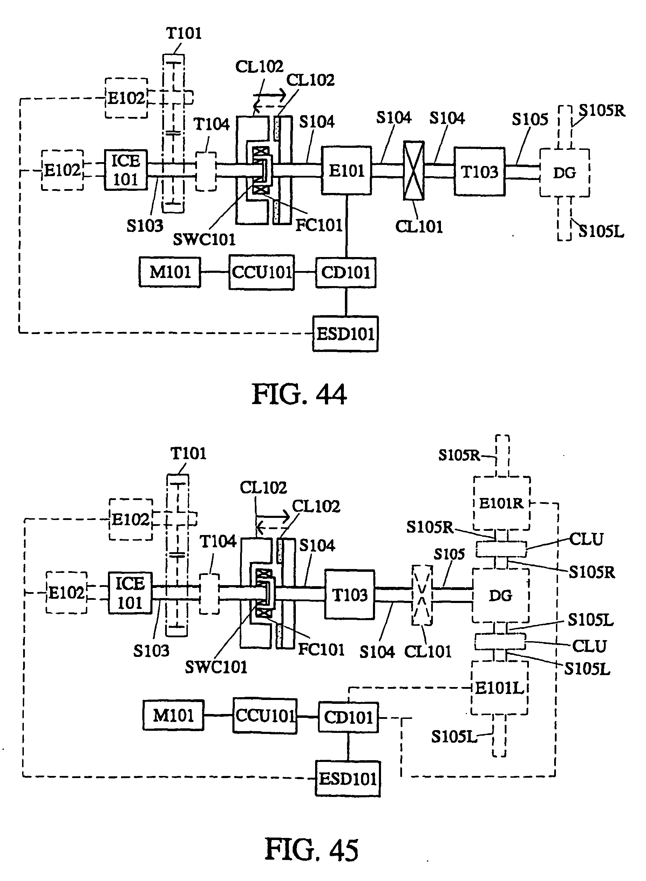

Fig. 44 is a view showing that the preferred embodiment given in Fig. 43 is provided with an output clutch. Wherein, an output clutch CL101 controlled by manual, mechanical, electromagnetic, and hydraulic or centrifugal force is provided to the preferred embodiment illustrated in Fig. 43. The output clutch CL101 is provided between the load side steering shaft S104 driven by the primary dynamo-electric unit E101 and the load. When the output clutch CL101 is closed, it provides the same function as those by the preferred embodiment illustrated in Fig. 43; and additional functions when the output clutch CL101 is disengaged, including being separated from the load to leave the engine to simultaneously drive the first and the second dynamo-electric units E101 and E102 to function as generators, or to drive the primary dynamo-electric E101 alone to operate as a generator while the primary dynamo-electric unit E101 is provided between the output clutch CL101 and the controllable clutch CL102; as well as those functions related to subparagraphs (1) through (10) or other specific function, and patterns related to those operation patterns described in A1 through A3 or other specific operation pattern.

Fig. 45 is a schematic view showing that the preferred embodiment illustrated in Fig. 44 is further having the primary dynamo-electric unit replaced by two independent dynamo-electric units respectively provided on the side of two output shafts of a differential gear set. Within, the primary dynamo-electric unit E101 of the preferred embodiment in Fig. 44 is replaced by a primary dynamo-electric unit E101R to the right and another primary dynamo-electric unit E101L on the left. The primary dynamo-electric unit E101R to the right is directly connected in series with the steering shaft S 105R to the right of the differential gear set DG, or alternatively, a one-way or two-way alternatively adapted with a one-way or two-way clutch CLU before being connected in series to the steering shaft S105R to the right of the differential gear set DG. The other primary dynamo-electric unit E101L on the left is directly connected in series with a steering shaft S105L to the left of a differential gear set DG or alternatively adapted with a one-way or two-way clutch CLU before being connected in series to the steering shaft S105L to the left of the differential gear set DG. The steering shaft S 104 on the load side of the centrifugal clutch FC101 is directly outputted to the steering shaft S105 of the differential gear set DG, or through the fixed or variable speed ratio or variable steering transmission or planetary transmission mechanism T103 before being outputted to the steering shaft S105 of the differential gear set DG, or alternatively, by means of the output clutch CL101 controlled by manual, mechanical, electromagnetic, hydraulic or centrifugal force before being outputted to the steering shaft S105 of the differential gear set DG. Both of the primary dynamo-electric unit E101R to the right and the other primary dynamo-electric unit E101L on the left are subject to equal speed or differential drive by a drive control device CD101 for providing functions same as those described for the preferred embodiment illustrated in Fig. 44.

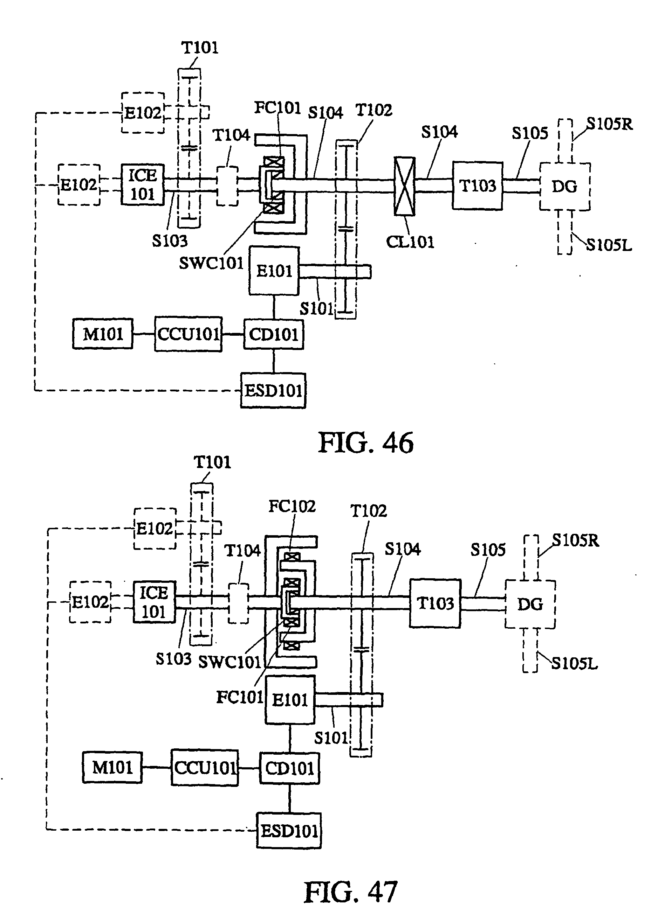

F. As illustrated in Figs. 46 through 53, those preferred embodiments taken from Figs. 38 through 45 have further to provide various centrifugal clutches and the one-way transmission mechanism SWC101 between the steering shaft S103 and the load side steering shaft S104 driven by the engine ICE 101 in opposition direction to function as the drive application system:

Fig. 46 shows that a first preferred embodiment of a drive application system the present invention is comprised of having the centrifugal clutch from the preferred embodiment of Fig. 38 to be provided in opposite direction and a one-way transmission mechanism selected for steering operation. Wherein, the centrifugal clutch FC101 is provided between the steering shaft S103 driven by the engine ICE101 and the load side steering shaft S104 to control the operation of coupling or interruption the transmission by both of the steering shafts S103 and S104. The steering shaft S103 driven by the engine ICE101 is coupled to the drive draw side of the centrifugal clutch FC101 and the load side steering shaft S 104 is coupled to the driven draw side of the centrifugal clutch FC101. The one-way transmission mechanism SWC 101 is provided between the drive steering shaft S103 and the load side steering shaft S104 driven by the engine ICE101 so that once the steering shaft S103 which is directly driven by the engine ICE101 or through a fixed speed ratio or variable speed ratio, or variable steering device or planetary transmission mechanism T104 reaches the preset rpm, it drives to close the centrifugal clutch FC101, thus to draw the load side steering shaft S104. The steering shaft S104 on the load side is provided to drive the load, and a fixed speed ratio or variable speed ratio or variable steering transmission mechanism T102 is provided to the steering shaft S104 on the load side to engage in mutual transmission with a primary dynamo-electric unit E101 while the other units comprising the system are the same as those provided in the preferred embodiment illustrated in Fig. 38;

The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.;

Fig. 47 shows that a second preferred embodiment of a drive application system the present invention is comprised of having the centrifugal clutch from the preferred embodiment of Fig. 39 to be provided in opposite direction and a one-way transmission mechanism selected for steering operation. Wherein, the double-acting centrifugal clutches FC101 and FC102 are connected in series between the steering shaft S103 and the drive load side steering shaft S104 of the engine ICE 101. The double-acting centrifugal clutches FC101 and FC102 form to each other by insertion or are integrated into a 3-layer structure containing an inner layer, an intermediate layer and an outer layer. The inner layer and the inner side of the intermediate layer form the centrifugal clutch FC101, the inner layer incorporated to the steering shaft S103 on the side of the engine ICE101 drawn to each other is provided with a drive power-locking unit to act outward when the centrifugal force reaches a preset value; the outer side of the intermediate layer and the inner side of the outer layer form the centrifugal clutch FC102; the intermediate layer being coupled to the load side steering shaft S104 having its inner side provided with circumferential coupling surface for power-locking and its outer side provided with a drive power-locking unit acting outward when the centrifugal force reaches its preset value performs the functions as an output clutch with the power-locking circumferential coupling surface on the inner side of the outer layer; and the outer layer is also incorporated to the steering shaft S103 on the side of the engine ICE101 so to provide linkage with the load when the engine runs at low rpm or is temporarily cut off. The load side steering shaft S103 either directly driven or driven through a fixed speed ratio or variable speed ratio, or variable steering transmission mechanism or planetary transmission mechanism T104 by the engine is coupled through the one-way transmission mechanism SWC101 selected for steering operation to the drive draw side of the centrifugal clutch FC101 and the load side steering shaft S104 to the driven draw side of the centrifugal clutch FC101 so to forthwith close the centrifugal clutch FC101 and further to draw the load side steering shaft S104 when the load side steering shaft S104 reaches its preset rpm. Alternatively, a fixed speed ratio or variable speed ratio, or variable steering transmission mechanism or planetary transmission mechanism T102 is provided on the load side steering shaft S104 to engage mutual transmission with the primary dynamo-electric unit E101; while the other units comprising the system are the same as those provided in the preferred embodiment illustrated in Fig. 39;

The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

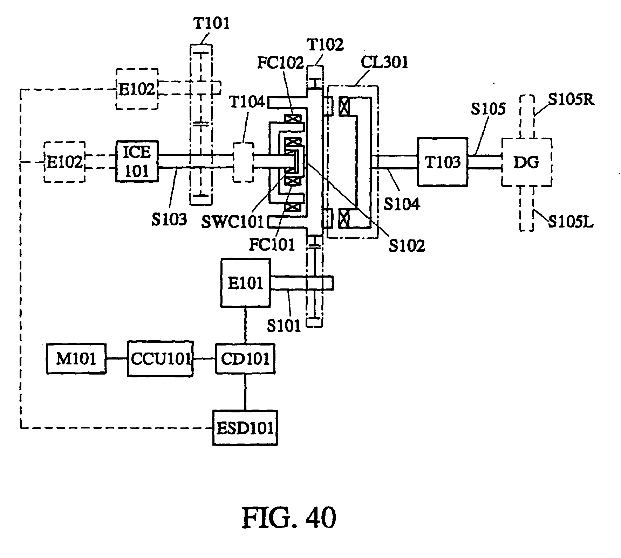

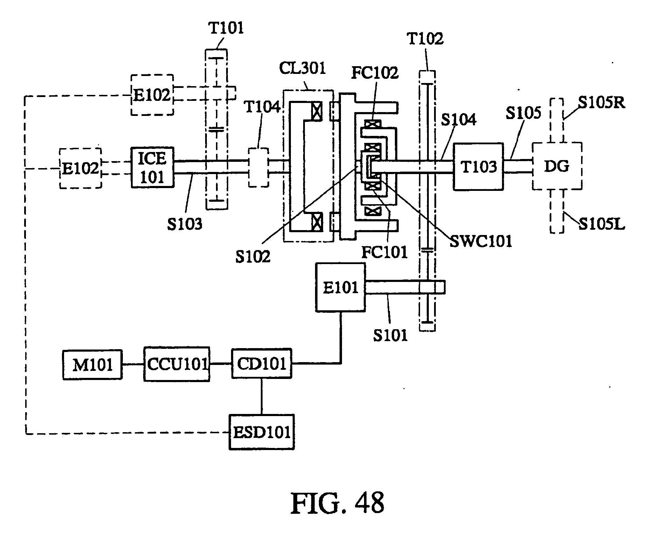

Fig. 48 shows that a third preferred embodiment of a drive application system the present invention is comprised of having the centrifugal clutch from the preferred embodiment of Fig. 40 to be provided in opposite direction and a one-way transmission mechanism selected for steering operation. Wherein, an output clutch CL301 controlled by manual, mechanical, electromagnetic or hydraulic force is alternatively provided between the steering shaft S103 on the side of the engine ICE101 and the double-acting centrifugal clutches at where between the drive draw side of the centrifugal clutch FC101 and the driven draw side of the centrifugal clutch FC102 while the other units comprising the system are the same as those provided in the preferred embodiment illustrated in Fig. 40;

The combination of those structures described above for the system are subject to control by the manual control interface M101, the central control unit CCU101, the drive control device CD101 and the storage discharging device ESD101. The specific system structure described above provides same functions same as those by the preferred embodiment illustrated in Fig. 47 when the output clutch CL301 is closed; and when the output clutch CL301 is disengaged, the specific system structure described above provides additional functions related to those described in subparagraphs (1) through (10) or other specific function, it also provides patterns related to those operation patterns described in A1 through A3 or other specific operation pattern.

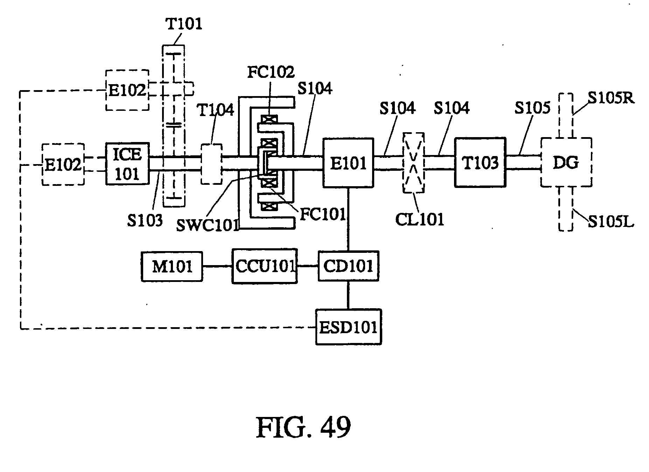

Fig. 49 shows that a fourth preferred embodiment of a drive application system the present invention is comprised of having the centrifugal clutch from the preferred embodiment of Fig. 41 to be provided in opposite direction and a one-way transmission mechanism selected for steering operation. Wherein, the dynamo-electric unit E101 and the load side steering shaft S104 indicate a coaxial structure with the double-acting centrifugal clutches FC101 and FC102 provided between the dynamo-electric unit E101 and the engine ICE 101. The intermediate structure is provided to be incorporated to the load side steering shaft S104 in the same structure of the output shaft of the primary dynamo-electric unit E101, and its inner and outer layers incorporated to the engine steering shaft S103. The double acting centrifugal clutches FC101 and FC102 form to each other or integrated into a 3-layer structure containing an inner layer, an intermediate layer and an outer layer. Within, the inner layer and the inner side of the intermediate layer form the centrifugal clutch FC101, the inner layer incorporated to the engine steering shaft S103 drawn to each other is provided with a drive power-locking unit to act outward when the centrifugal force reaches a preset value; the outer side of the intermediate layer and the inner side of the outer layer form the centrifugal clutch FC102; the intermediate layer being coupled to the steering shaft S103 driven by the primary dynamo-electric unit E101 having its inner side provided with circumferential coupling surface for power-locking and its outer side provided with a drive power-locking unit acting outward when the centrifugal force reaches its preset value performs the functions as an output clutch with the power-locking circumferential coupling surface on the inner side of the outer layer. The drive draw side of the centrifugal clutch FC101 is incorporated to the steering shaft S103 on the side of the engine ICE 101 so to couple to the engine to drive the load when the engine runs at high rpm, and to cut off the linkage to the load when the engine runs at low rpm. The engine ICE101 is either directly or by means of the steering shaft S103 driven by a fixed speed ratio or variable speed ratio, or variable steering transmission mechanism or planetary transmission mechanism T104, coupled to the drive draw side of the centrifugal clutch FC101 and the driven draw side of the other centrifugal clutch FC102. Meanwhile, the load side steering shaft S104 is coupled to the driven draw side of the centrifugal clutch FC101 and the drive draw side of the other centrifugal clutch FC102 so that when the load side steering shaft S104 reaches its preset rpm, the other centrifugal clutch FC102 is closed thus to draw the steering shaft S103 driven by the engine ICE101, or when the steering shaft S103 on the side of the engine ICE101 reaches its preset rpm, the centrifugal clutch FC101 is closed, thus to draw the load side steering shaft S104 to drive the load; as required, the output clutch CL101 is provided at where between the output side of the primary dynamo-electric unit E101 and the fixed speed, or variable speed ratio or variable steering transmission mechanism or planetary transmission mechanism T103. The output clutch CL101 is controlled by manual, mechanical, electromagnetic, hydraulic or centrifugal force while the other units comprising the system are the same as those provided in the preferred embodiment illustrated in Fig. 41;

The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

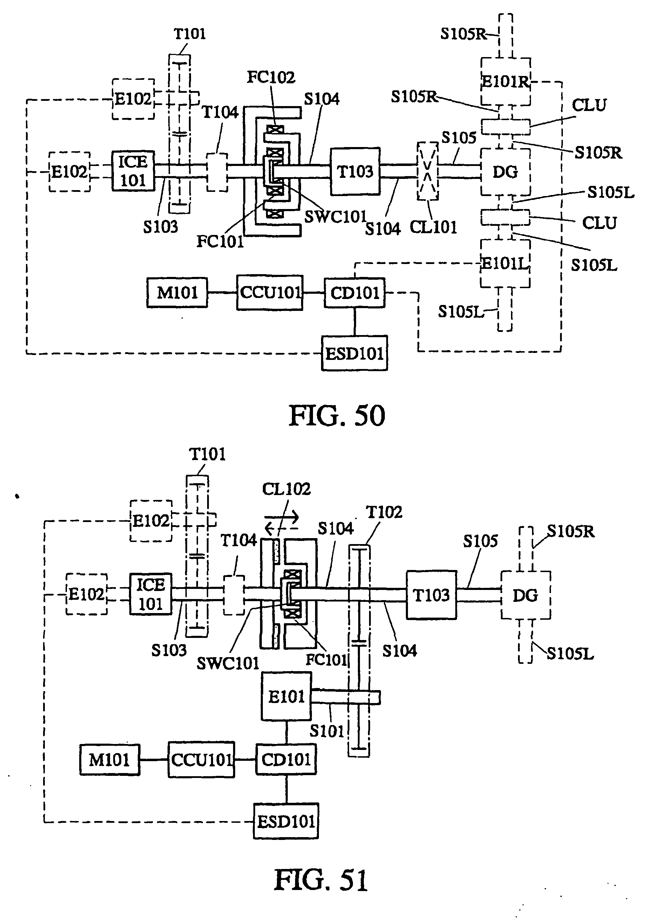

Fig. 50 is a schematic view showing that the primary dynamo-electric unit in the preferred embodiment taken from Fig. 49 is replaced by two independent dynamo-electric units respectively provided on the side of two output shafts of the differential gear set. Within, the primary dynamo-electric unit E101 of the preferred embodiment in Fig. 49 is replaced by a primary dynamo-electric unit E101R to the right and another primary dynamo-electric unit E101L on the left. The primary dynamo-electric unit E101R to the right is directly connected in series with the steering shaft S105R to the right of the differential gear set DG, or alternatively, a one-way or two-way alternatively adapted with a one-way or two-way clutch CLU before being connected in series to the steering shaft S105R to the right of the differential gear set DG. The other primary dynamo-electric unit E101L on the left is directly connected in series with a steering shaft S105L to the left of a differential gear set DG or alternatively adapted with a one-way or two-way clutch CLU before being connected in series to the steering shaft S105L to the left of the differential gear set DG. The steering shaft S104 on the load side of the centrifugal clutch FC101 is directly outputted to the steering shaft S105 of the differential gear set DG, or through the fixed or variable speed ratio or variable steering transmission or planetary transmission mechanism T103 before being outputted to the steering shaft S105 of the differential gear set DG, or alternatively, by means of the output clutch CL101 controlled by manual, mechanical, electromagnetic, hydraulic or centrifugal force before being outputted to the steering shaft S105 of the differential gear set DG. Both of the primary dynamo-electric unit E101R to the right and the other primary dynamo-electric unit E101L on the left are subject to equal speed or differential drive by a drive control device CD101.

Fig. 51 shows that the preferred embodiment of Fig. 46 is provided with a controllable clutch. Wherein, a centrifugal the centrifugal clutch FC101 and another clutch CL102 controlled by manual, mechanical, electromagnetic, hydraulic power-locking type of or hydraulic coupling type are provided between the engine steering shaft S103 and the load side steering shaft S104 so to execute power coupling or interruption on both of the engine steering shaft S103 and the load side steering shaft S104 for the system to be equipped with a power-locking type or hydraulic coupling type controllable clutch CL102 and engine throttle, to further acquire another specific function for the engine rotation power driven load. The steering shaft S103 either directly driven by the engine ICE 101, or through a fixed or variable speed ratio or variable steering transmission or planetary transmission mechanism T 104 is coupled to the drive drawn side of the centrifugal clutch FC101 while the load side steering shaft S104 to the driven draw side of the centrifugal clutch FC101. That is, once the steering shaft S103 on the side of the engine ICE101 reaches the preset rpm, the centrifugal clutch FC101 is forthwith closed to draw the load side steering shaft S104. The centrifugal clutch FC101 and the controllable clutch CL102 is individually provided or sharing the same structure, while the other units comprising the system are the same as those provided in the preferred embodiment illustrated in Fig. 46;

The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

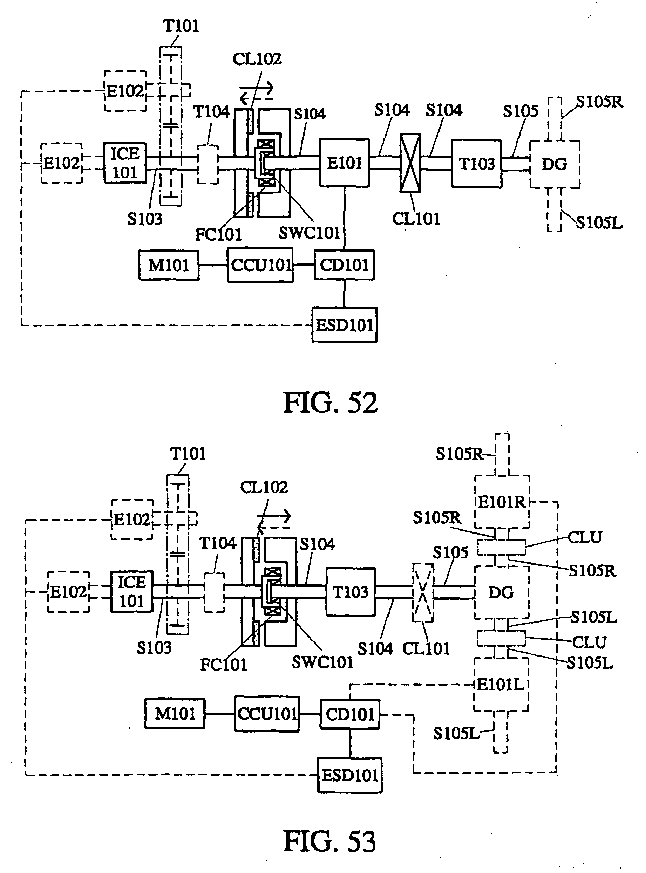

Fig. 52 shows that the preferred embodiment of Fig. 51 is provided with an output clutch. Wherein, the preferred embodiment taken from Fig. 51 being further provided with an output clutch CL101 controlled by manual, mechanical, electromagnetic, hydraulic or centrifugal force is disposed at where between the load side steering S104 driven by the primary dynamo-electric unit E101 and the load. When the output shaft CL101 is closed, it provides the same functions as those by the preferred embodiment given in Fig. 51; and when it is disengaged, the engine ICE101 simultaneously drives the primary dynamo-electric unit E101 and the secondary dynamo-electric unit E102 to operate as a generator or the primary dynamo-electric unit E101 is driven alone to operate as a generator and also provides additional functions related to those described in subparagraphs (1) through (10) or other specific function, it also provides patterns related to those operation patterns described in A1 through A3 or other specific operation pattern.

Fig. 53 is a schematic view showing that the primary dynamo-electric unit in the preferred embodiment taken from Fig. 52 is replaced by two independent dynamo-electric units respectively provided on the side of two output shafts of the differential gear set. Within, the primary dynamo-electric unit E101 of the preferred embodiment in Fig. 52 is replaced by a primary dynamo-electric unit E101R to the right and another primary dynamo-electric unit E101L on the left. The primary dynamo-electric unit E101R to the right is directly connected in series with the steering shaft S105R to the right of the differential gear set DG, or alternatively, a one-way or two-way alternatively adapted with a one-way or two-way clutch CLU before being connected in series to the steering shaft S105R to the right of the differential gear set DG. The other primary dynamo-electric unit E101L on the left is directly connected in series with a steering shaft S105L to the left of a differential gear set DG or alternatively adapted with a one-way or two-way clutch CLU before being connected in series to the steering shaft S105L to the left of the differential gear set DG. The steering shaft S104 on the load side of the centrifugal clutch FC101 is directly outputted to the steering shaft S105 of the differential gear set DG, or through the fixed or variable speed ratio or variable steering transmission or planetary transmission mechanism T103 before being outputted to the steering shaft S105 of the differential gear set DG, or alternatively, by means of the output clutch CL101 controlled by manual, mechanical, electromagnetic, hydraulic or centrifugal force before being outputted to the steering shaft S105 of the differential gear set DG. Both of the primary dynamo-electric unit E101R to the right and the other primary dynamo-electric unit E101L on the left are subject to equal speed or differential drive by a drive control device CD101, while providing the same functions as those provided in the preferred embodiment illustrated in Fig. 52;
Fig, 54 shows a first preferred embodiment of an application system that provides a one-way transmission mechanism between the load side steering shaft and the engine power source. Wherein, the one-way transmission mechanism SWC101 is provided between the steering shaft S103 and the load side steering shaft S104 driven by the engine ICE 101. When the rpm of the load side steering shaft S104 is higher than that of the steering shaft S103 driven directly by the engine ICE101 or through a fixed speed ratio, variable speed ration or variable transmission mechanism or planetary transmission mechanism T104, the one-way transmission mechanism SWC101 is idling without transmitting the rotation kinetic energy, and the rpm of the steering shaft S103 driven directly by the engine ICE101 or through a fixed speed ratio, variable speed ration or variable transmission mechanism, or planetary transmission mechanism T104 is higher than that of the load side steering shaft S 104, the rotation kinetic energy from the steering shaft S103 is transmitted through the one-way transmission mechanism SWC101 to the load side steering shaft S104. The load side steering shaft S104 is provided for driving the load and the steering shaft S103 driven directly by the engine ICE101 or through a fixed speed ratio, variable speed ration or variable transmission mechanism or planetary transmission mechanism T102 is provided on the load side steering shaft S104 to provide mutual transmission with the primary dynamo-electric unit E101 while the other units comprising the system are the same as those described in the example illustrated in Fig. 1;
The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

Fig, 55 shows a second preferred embodiment of an application system that provides a one-way transmission mechanism between the load side steering shaft and the engine power source. Wherein, the one-way transmission mechanism SWC101 and the centrifugal clutch FC 102 are provided between the steering shaft S 103 and the load side steering shaft S104 driven by the engine ICE101. The steering shaft S103 driven directly by the engine ICE 101 or through a fixed speed ratio, variable speed ration or variable transmission mechanism or planetary transmission mechanism T104 is coupled to the drive draw side of the centrifugal clutch FC102 and the load side steering shaft S104 is couple to the driven draw side of the centrifugal clutch FC102 so that when the rpm of the load side steering shaft S104 is higher than that of the steering shaft S103 driven by the fixed speed ratio, variable speed ration or variable transmission mechanism or planetary transmission mechanism T104, the one-way transmission mechanism SWC101 is idling without transmitting rotation kinetic energy, and the rpm of the steering shaft S103 driven directly by the engine ICE101 or through a fixed speed ratio, variable speed ration or variable transmission mechanism, or planetary transmission mechanism T104 is higher than that of the load side steering shaft S104, the rotation kinetic energy from the steering shaft S103 is transmitted through the one-way transmission mechanism SWC101 to the load side steering shaft S104. When the steering shaft S103 directly driven by engine ICE101 or through the fixed speed ratio, variable speed ration or variable transmission mechanism or planetary transmission mechanism T104 reaches its preset rpm, the centrifugal clutch FC102 is forthwith closed to draw the load side steering shaft S104. Alternatively, the fixed speed ratio, variable speed ration or variable transmission mechanism or planetary transmission mechanism T 102 is provided on the load side steering shaft S104 to provide mutual transmission with the primary dynamo-electric unit E101 while the other units comprising the system are the same as those described in the example illustrated in Fig. 2;

The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

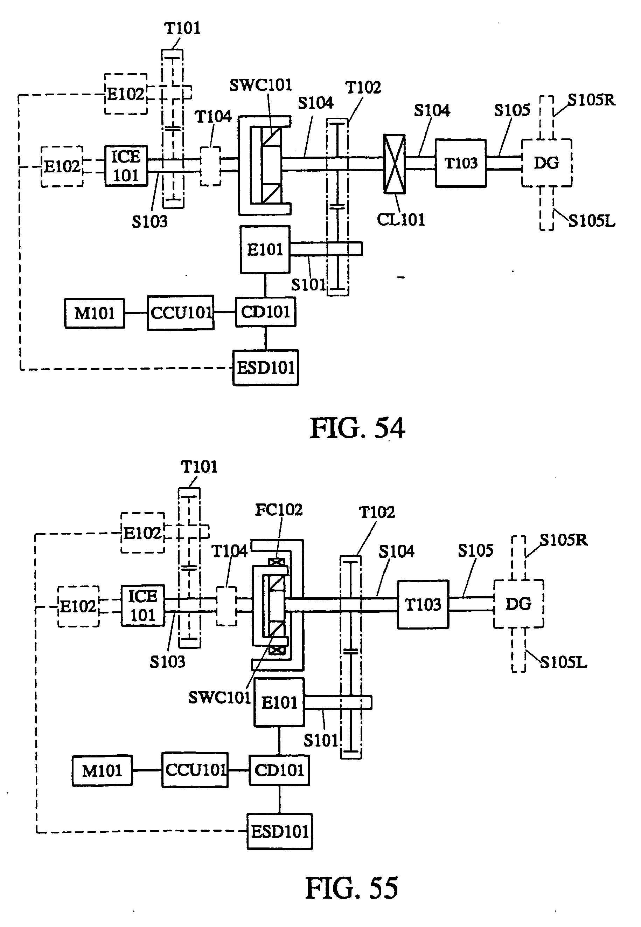

Fig, 56 shows a third preferred embodiment of an application system that provides a one-way transmission mechanism between the load side steering shaft and the engine power source. Wherein, the fixed speed ratio, variable speed ration or variable transmission mechanism or planetary transmission mechanism T102 given in the preferred embodiment illustrated in Fig. 55 is jointly incorporated to the intermediate steering shaft S102 with the coupling surface on the outer circumference on the driven draw side of the centrifugal clutch FC102. Its intermediate layer is provided with a drive power-locking unit acting outward when the centrifugal force reaches its preset value. The intermediate layer is coupled to the steering shaft S103 driven by the engine ICE101, and the one-way transmission mechanism SWC101 selected for steering operation is provided in the inner side to be coupled to the intermediate steering shaft S102 so to cut off the linkage to the load when the engine stops or runs at low rpm. The steering shaft S103 directly driven or through the fixed speed ratio, variable speed ration or variable transmission mechanism or planetary transmission mechanism T104 is incorporated to the drive draw side of the centrifugal clutch FC102 and the intermediate steering shaft S102 is coupled to the driven draw side of the centrifugal clutch FC 102 so that once the rpm of the intermediate steering shaft S102 is higher than the steering shaft S103 directly driven or through the fixed speed ratio, variable speed ration or variable transmission mechanism or planetary transmission mechanism T104, the one-way transmission mechanism SWC101 is idling without transmitting rotation kinetic energy, and the rpm of the steering shaft S103 driven directly by the engine ICE101 or through a fixed speed ratio, variable speed ration or variable transmission mechanism, or planetary transmission mechanism T104 is higher than that of the load side steering shaft S104, the rotation kinetic energy from the steering shaft S103 is transmitted through the one-way transmission mechanism SWC101 to the intermediate steering shaft S102. The intermediate steering shaft S102 is directly outputted to the load, or alternatively via the load side steering shaft S104 before being outputted to the load by means of an optional output clutch CL301 controlled by manual, mechanical, electromagnetic, or hydraulic force; or alternatively, via the steering shaft S 105 for single axial output by means of the fixed speed ratio, variable speed ration or variable transmission mechanism or planetary transmission mechanism T102; or alternatively, through two units of differential steering shafts S105R and S105L for differential output by means of the transmission mechanism comprised of the differential gear set DG. The optional output clutch CL301 may be provided at where between the intermediate steering shaft S102 drawn by the power-locking coupling surface on the outer circumference of the centrifugal clutch FC102 and the load side steering shaft S104;
the intermediate steering shaft S102: is directly outputted to the load, or alternatively, to an output clutch CL301 controlled by manual, mechanical, electromagnetic, hydraulic or centrifugal force before being outputted to the load; or as required, to execute single shaft output through a fixed speed ratio or variable speed ratio, variable steering transmission or planetary transmission mechanism T103, then through a steering shaft S105; or an optional transmission mechanism comprised of a differential gear set DG for differential output through two units of differential steering shafts S105R and S105L; the additional output clutch CL301 is provided between the intermediate steering shaft S102 and the load side steering shaft S104 with both steering shafts driven by the power-locking coupling surfaces on the inner and outer circumferences of the double-acting centrifugal clutches FC101 and FC102 while the other unit comprising the system are the same with those described in the example illustrated in Fig. 3;

The combination of those structures described above for the system are subject to control by the manual control interface M101, the central control unit CCU101, the drive control device CD101 and the storage discharging device ESD101. The specific system structure described above provides functions same as those by the preferred embodiment given in Fig. 55 when the output clutch CL301 is closed; and when the output clutch CL301 is disengaged, it provides functions related to those described in subparagraphs (1) through (10) or other specific function, it also provides patterns related to those operation patterns described in A1 through A3 or other specific operation pattern.

Fig, 57 shows a fourth preferred embodiment of an application system that provides a one-way transmission mechanism between the load side steering shaft and the engine power source. Wherein, the dynamo-electric unit E101 and the load side steering shaft S104 indicate a coaxial structure and the centrifugal clutch FC102 is provided between the primary dynamo-electric unit E101 and the engine ICE101. The driven draw side of the centrifugal clutch FC102 is incorporated to the load side steering shaft S104 coupled to the output shaft of the primary dynamo-electric unit E101 and the drive draw side of the centrifugal clutch FC102 is coupled to the steering shaft S103 driven by the engine ICE101. The one-way transmission mechanism SWC101 selected for steering operation is provided between the steering shaft S103 and the load side steering shaft S104. The drive draw side is provided with drive power-locking unit acting outward once the centrifugal force reaches its preset value thus to provide the function of an output clutch jointly with the inner circumference coupling surface for power-locking on the driven draw side. The engine ICE101 is directly incorporated or through the steering shaft S103 driven by the fixed speed ratio, variable speed ratio or variable transmission mechanism or planetary transmission mechanism T104, to the drive draw side of the centrifugal clutch FC101 while the load side steering shaft S104 is incorporated to the driven draw side of the centrifugal clutch FC101 so that once the rpm of the steering shaft S103 driven by the engine Ice101 is higher than that of the load side steering shaft S104, rotation kinetic energy from the engine ICE101 drives the load side steering shaft S104 by means of the transmission from the one-way transmission mechanism SWC101, or when the steering shaft S103 driven by the engine ICE101 reaches its preset rpm, the centrifugal clutch FC102 is closed to couple the engine ICE101 and the load side steering side S104. As required, the output clutch CL101 is provided between the output side of the primary dynamo-electric unit E101 and the fixed speed ratio, variable speed ratio, variable steering transmission mechanism or planetary transmission mechanism T103. The output clutch CL101 is controlled by manual, mechanism, electromagnetic, hydraulic or centrifugal force while the other units comprising the system are the same as those described in the example illustrated in Fig. 4;

The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

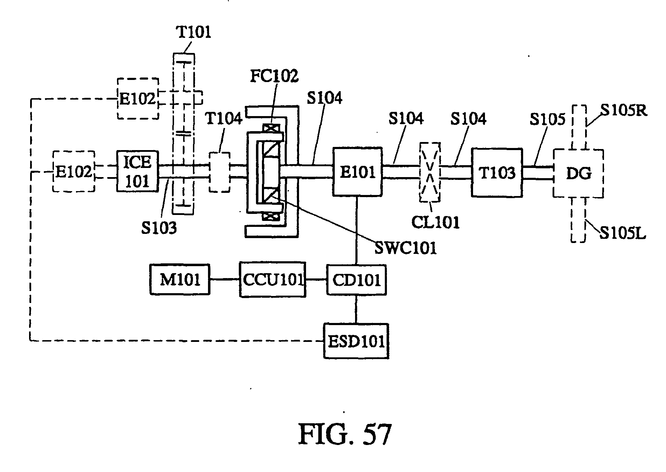

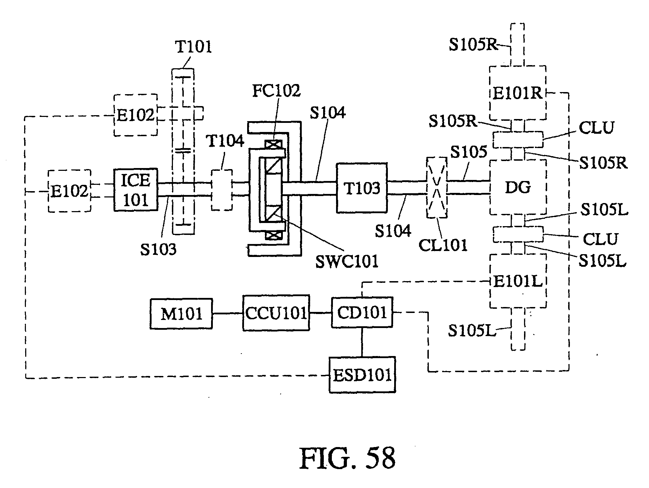

Fig. 58 is a schematic view showing that the primary dynamo-electric unit in the preferred embodiment taken from Fig. 57 is replaced by two independent dynamo-electric units respectively provided on the side of two output shafts of the differential gear set. Within, the primary dynamo-electric unit E101 of the preferred embodiment in Fig. 57 is replaced by a primary dynamo-electric unit E101R to the right and another primary dynamo-electric unit E101L on the left. The primary dynamo-electric unit E101R to the right is directly connected in series with the steering shaft S105R to the right of the differential gear set DG, or alternatively, a one-way or two-way alternatively adapted with a one-way or two-way clutch CLU before being connected in series to the steering shaft S105R to the right of the differential gear set DG. The other primary dynamo-electric unit E101L on the left is directly connected in series with a steering shaft S105L to the left of a differential gear set DG or alternatively adapted with a one-way or two-way clutch CLU before being connected in series to the steering shaft S105L to the left of the differential gear set DG. The load side steering shaft S104 coaxial with the primary dynamo-electric unit E101 driven by the controllable clutch CL102 is directly outputted to the steering shaft S105 of the differential gear set DG, or through the fixed or variable speed ratio or variable steering transmission or planetary transmission mechanism T103 before being outputted to the steering shaft S105 of the differential gear set DG, or alternatively, by means of the output clutch CL101 controlled by manual, mechanical, electromagnetic, hydraulic or centrifugal force before being outputted to the steering shaft S105 of the differential gear set DG. Both of the primary dynamo-electric unit E101R to the right and the other primary dynamo-electric unit E101L on the left are subject to equal speed or differential drive by a drive control device CD101.

In the system, for those examples illustrated in Figs. 1∼8, and the preferred embodiments shown in Figs. 22∼37 and 39∼58, the load is driven by the output directly from the steering shaft S103 or via the variable steering or planetary transmission mechanism T104 with fixed or variable speed ratio; and the originally disclosed load side steering shaft S104 is provided to directly coupled or through the variable steering or planetary transmission mechanism T102 with fixed or variable speed ratio, to the primary dynamo-electric unit E101. Meanwhile, the output clutch CL101 driven by the load side steering shaft S104, the variable steering or planetary transmission mechanism T103 with fixed or variable speed ratio, and the load side device of the differential gear set DG can be all or partially reserved or removed.

Furthermore, each of those systems illustrated in Figs. 1∼58, the load is driven by the output directly from the steering shaft S103 or via the variable steering or planetary transmission mechanism T104 with fixed or variable speed ratio and the primary dynamo-electric unit E101 driven by the engine ICE101 operates as a generator; or the electric energy generated by the secondary dynamo-electric unit E102 driven directly by the electric energy from the storage discharging ESD101 or from the engine or via the load is driven by the output directly from the steering shaft S103 or via the variable steering or planetary transmission mechanism T101 with fixed or variable speed ratio is controlled by the manual control interface M101, the central control unit CCU101, the drive control device CD101 for the primary dynamo-electric unit E101 to operate as a motor, thus to start the engine ICE101, or drive only the load with or without the engine ICE101.

As disclosed above, the prevention of drive motor speed controlled compound power system and its devices characterized by that through the control of the operation of the engine ICE101 and the operation of both of the primary and the secondary dynamo-electric units E101 and E102 to function as a motor or a generator in conjunction with the primary centrifugal clutch FC101 or the secondary centrifugal clutch FC102, the one-way transmission mechanism SWC101 and other optional peripherals to be subject to the control by the manual control interface M101, the central control unit CCU101, and the drive control device CD101 to create diversified operational functions is innovative and practical. Therefore this application is duly filed accordingly.

## Claims

1. A speed-controlled dynamo-electric compound system comprising:
an engine (ICE101) having an output shaft (S103);
a primary dynamo-electric unit (E101) arranged to rotate a load side shaft (S104) directly or through a transmission mechanism (T102);
a centrifugal clutch (FC101) having a first side connected to the load side shaft (S104) and a second side connected to the output shaft (S103) of the engine;
a power generation unit (E102) driven by the engine;
a manual control interface (M101) for controlling the system via a central controller (CCU101);
a storage device (ESD101) for charging by the power generation unit to output electric energy to drive the dynamo-electric unit (E101) whereby rotation of the dynamo-electric unit (E101) at a preset speed causes the first side of the centrifugal clutch (FC101) to engage the second side and thereby connect the engine to the load side shaft (S104);
a load connected to the load side shaft (S104) through an output device (T103); and
a one-way transmission (SWC101) **characterised in that** the one-way transmission (SWC 101) provides power transmission between the engine and the load side shaft (104), the arrangement being such that, when the centrifugal clutch (FC101) is engaged, the engine (IC101) drive the load side shaft (S104); and, when the centrifugal clutch (FC101) is disengaged, the engine (IC101) drives the dynamo-electric unit (E101) via the power generation unit (E102) to supply power and/or charges the storage device (ESD101).

2. A system as claimed in claim 1, further comprising a second centrifugal clutch (FC102) arranged to engage the load when the speed of the engine (ICE101) is above a preset value, and to disengage the load when the speed of the engine is below the preset value.

3. A system as claimed in claim 2, wherein the first and second centrifugal clutches (FC101, FC102) form a three-layer structure including an inner layer, an intermediate layer, and an outer layer, and wherein the intermediate layer is connected to the engine (ICE 101) and the inner layer is connected to the shaft (S104), the inner layer expanding outwardly to engage the intermediate layer when the primary dynamo-electric unit (E101) exceeds said preset speed, and the intermediate layer acting outwardly to engage an inner surface of the outer layer when the speed of said engine exceeds said preset value.

4. A system as claimed in claim 2, wherein the first and second centrifugal clutches (FC101, FC102) form a three-layer structure including an inner layer, an intermediate layer, and an outer layer, and wherein the intermediate layer is connected to the shaft (S104) and the inner layer is connected to the engine (ICE 101), the inner layer expanding outwardly to engage the intermediate layer when the speed of the engine (ICE101) exceeds said preset value, and the intermediate layer acting outwardly to engage an inner surface of the outer layer, the outer layer being arranged to connect to the engine (ICE 101) when the speed of said primary dynamo-electric unit (E101) exceeds said preset speed.

5. A system as claimed in any one of claims 1 to 4, wherein the output device (T103) comprises an output clutch.

6. A system as claimed in any one of claims 1 to 4, wherein the output device (T103) comprises an output transmission mechanism and an output clutch.

7. A system as claimed in any one of claims 1 to 6, further comprising a shaft (S105) connected to the output device (T103), a differential gear set (DG) connected to that shaft, and a plurality of differential shafts (S105R, S105L) connected to the differential gear set.

8. A system as claimed in any one of claims 1 to 7, further comprising a secondary dynamo-electric unit (E102) coupled to the engine (ICE101);
an electrical energy storage device (ESD101) connected to the secondary dynamo-electric unit (E102) and the primary dynamo-electric unit (E101); and
a controller.

9. A system as claimed in claim 8, wherein, when the primary dynamo-electric unit (E101) is supplied with electricity from the electrical energy storage device (ESD101) and is caused to rotate at below said preset speed, the dynamo-electric unit drives the shaft (S104) selectively to drive the output device (T103); and, when the primary dynamo-electric unit (E101) is caused to rotate at above said preset speed, the driving side of the first centrifugal clutch (FC101) engages the driven side, thereby connecting the engine (ICE101) to the primary dynamo-electric unit (E101).

10. A system as claimed in claim 8 or claim 9, wherein the controller includes a central control unit (CCU101), a drive control device (CD101) connected to the primary and secondary dynamo-electric units (E101, E102), and a manual control interface (M101), the drive control device (CD101) being arranged to control the speed of the primary dynamo-electric unit (E101), and further to control whether the primary and secondary dynamo-electric units function as motors, or generators, or one of each.

11. A system as claimed in any one of claims 1 to 10, wherein the output device comprises an output transmission mechanism (T103).

12. A system as claimed in claim 11, wherein the output transmission mechanism (T103) comprises a transmission selected from the group consisting of a fixed speed ratio transmission, a variable speed ratio transmission, and a planetary transmission.

13. A system as claimed in any one of claims 1 to 10, wherein the output device comprises an output clutch (CL 101).

14. A system as claimed in any one of claims 1 to 10, wherein the output device comprises an output transmission mechanism (T103) and an output clutch (CL101).

15. A system as claimed in any one of claims 1 to 14, further comprising a transmission mechanism (T104) connected between the centrifugal clutch (FC101) and the engine (ICE101).

16. A system as claimed in claim 15, wherein the transmission mechanism (T104) connected between the centrifugal clutch (FC101) and the engine (ICE101) is a transmission selected from the group consisting of a fixed speed ratio transmission, a variable speed ratio transmission, a variable steering transmission, a multistage variable transmission, and a stageless variable transmission.

17. A system as claimed in any one of claims 1 to 16, wherein the engine (ICE101) is an internal combustion engine.

18. A system as claimed in claim 17, wherein the engine (ICE101) further includes start-up and operation speed control devices.

19. A system as claimed in any one of claims 1 to 18, wherein the engine (ICE101) further includes peripheral interface devices including a fuel system, air inlet and exhaust system, an ignition system, and a cooling system.

20. A system as claimed in any one of claims 1 to 19, wherein the primary dynamo-electric unit (E101) has a characteristic that the speed of the primary dynamo-electric unit (E101) becomes higher when the load becomes smaller.

21. A system as claimed in any one of claims 1 to 20, wherein the primary dynamo-electric unit (E101) is arranged to execute amperage control of input electric energy to generate kinetic energy of rotation that increases torque as the load increases.

22. A system as claimed in any one of claims 1 to 21, wherein the primary dynamo-electric unit (E101) is selected from the group consisting of an AC, DC, brush, brushless, synchronous, asynchronous, inner rotor, and outer rotator motor/generator.

23. A system as claimed in claim 8, or in any one of claims 9 to 22, when appendant to claim 8, wherein the secondary dynamo-electric unit (E102) is selected from the group consisting of an AC, DC, brush, brushless, synchronous, asynchronous, inner rotor, and outer rotator motor/generator.

24. A system as claimed in claim 23, wherein the secondary dynamo-electric unit (E102) is a starter motor for the engine (ICE101).

25. A system as claimed in any one of claims 1 to 18, further comprising a transmission mechanism (T102) for connecting the primary dynamo-electric unit (E101) to the shaft (S 104 and/or S105).

26. A system as claimed in claim 25, wherein the transmission mechanism (T102) connected between the primary dynamo-electric unit (E101) and the shaft (S104 and/or S105) is a transmission selected from the group consisting of a fixed speed ratio transmission, a variable speed ratio transmission, a variable steering transmission, a multistage variable transmission, and a stageless variable transmission.

27. A system as claimed in claim 25 or claim 26, wherein the output device comprises an output transmission mechanism (T103) connected between the shaft (S104) and the load.

28. A system as claimed in claim 27, wherein the output transmission mechanism (T103) comprises a transmission selected from the group consisting of a fixed speed ratio transmission, a variable speed ratio transmission, and a planetary transmission.

29. A system as claimed in claim 1, wherein a first end of the one-way transmission (SWC101) is coupled to the load side shaft (S104), and a second end of the one-way transmission (SWC 101) is coupled to the first side of the centrifugal clutch (FC101).

30. A system as claimed in claim 4, or in any one of claims 5 to 28 when appendant to claim 4, wherein the one-way transmission (SWC101) is coupled to the dynamo-electric unit (E101) via the loads side shaft (S104).

31. A system as claimed in claim 7 when dependent on claim 4, wherein the dynamo-electric unit comprises first and second dynamo-electric unit components (E101L, E101R), the first dynamo-electric unit component (E101L) being arranged to drive the differential shaft (S105L) and the second dynamo-electric unit component (E101R) being arranged to drive the differential shaft (S105R).

32. A system as claimed in claim 29, further comprising a controllable clutch (CL102), coupled to or forming part of the centrifugal clutch (FC101), for enabling controllable engagement and/or disengagement of the output shaft (S103) of the engine (ICE101) with the load side shaft (S104).

33. A system as claimed in claim 32, further comprising an output clutch (CL101).

34. A system as claimed in claim 33, further comprising a shaft (S105) connected to the output device (T103), a differential gear set (DG) connected to that shaft, and a plurality of differential shafts (S105R, S105L) connected to the differential gear set, and wherein the dynamo-electric unit comprises first and second dynamo-electric unit components (E101L, E101R), the first dynamo-electric unit component (E101L) being arranged to drive the differential shaft (S105L) and the second dynamo-electric unit component (E101R) being arranged to drive the differential shaft (S105R).

35. A system as claimed in claim 3 or claim 4, wherein the one-way transmission (SWC101) is coupled between the output shaft (S103) of the engine (ICE101) and the load side shaft (S104).

36. A system as claimed in claim 1, wherein the one-way transmission (SWC101) is coupled between the output shaft (S103) of the engine (ICE101) and the load side shaft (S104).

37. A system as claimed in claim 4, further comprising an output clutch (CL301) coupled to the output shaft (S103) of the engine (ICE101), and arranged to engage the second centrifugal clutch (FC102).

38. A system as claimed in claim 4, wherein the one-way transmission (SWC101) is coupled between the output shaft (S103) of the engine (ICE101) and the load side shaft (S104), and wherein the primary dynamo-electric unit (E101) is arranged to rotate, and to drive, the load side shaft (S104).

39. A system as claimed in any one of claims 31 to 34, wherein the one-way transmission (SWC101) is coupled between the output shaft (S103) of the engine (ICE101) and the load side shaft (S 104).

## Patentansprüche

1. Drehzahlgeregeltes dynamoelektrisches Hybridsystem mit:
einem Motor (ICE101) mit einer Ausgangswelle (S103);
einer primären dynamoelektrischen Einheit (E102), mit der eine lastseitige Welle (S104) direkt oder über eine Getriebemechanik (T102) drehbar ist;
einer Zentrifugalkupplung (FC101), die mit einer ersten Seite mit der lastseitigen Welle (S104) und mit einer zweiten Seite mit der Ausgangswelle (S103) des Motors verbunden ist;
einer vom Motor angetriebenen Stromgeneratoreinheit (E102);
einer Hand-Steuerschnittstellle (M101), mit der das System über eine zentrale Steuerung (CCU101) steuerbar ist;
einer Speichereinrichtung (ESD101), mit der die Strom-Generatoreinheit zur Abgabe elektrischer Energie zum Antrieb der dynamoelektrischen Einheit (E101) aufladbar ist, wobei ein Drehen der dynamoelektrischen Einheit (E101) mit einer voreingestellten Drehzahl bewirkt, dass die erste Seite der Zentrifugalkupplung (FC101) in den Eingriff mit deren zweiter Seite tritt und so der Motor mit der lastseitigen Welle (S104) verbunden wird;
einer Last, die über eine Ausgangseinrichtung (T103) mit der lastseitigen Welle (S104) verbunden ist; und
einem Einweg-Getriebe (SWC101),
**dadurch gekennzeichnet, dass**
das Einweg-Getriebe (SWC101) eine Kraftübertragung zwischen dem Motor und der lastseitigen Welle (104) bereitstellt und die Anordnung derart ist, dass bei eingerückter Zentrifugalkupplung (FC101) der Motor (IC101) die lastseitige Welle (S104) antreibt und bei ausgerückter Zentrifugalkupplung (FC101) der Motor (IC101) die dynamoelektrische Einheit (E101) über die Stromgeneratoreinheit (E102) antreibt, um Strom zu liefern und/oder die Speichereinrichtung (ESD101) zu laden.

2. System nach Anspruch 1, weiterhin mit einer zweiten Zentrifugalkupplung (FC102), die an der Last einkuppeln kann, wenn die Drehzahl des Motors (ICE101) über einem voreingestellten Wert liegt, und sich von der Last abkuppeln kann, wenn die Motordrehzahl unter dem voreingestellten Wert liegt.

3. System nach Anspruch 2, bei dem die erste und die zweite Zentrifugalkupplung (FC101, FC102) eine dreilagige Struktur mit einer Innenschicht, einer Zwischenschicht und einer Außenschicht bilden, wobei die Zwischenschicht mit dem Motor (ICE101) und die Innenschicht mit der Welle (S104) verbunden sind, die Innenschicht sich auswärts in den Eingriff mit der Zwischenschicht aufweitet, wenn die Drehzahl der dynamoelektrischen Einheit (E101) den voreingestellten Wert übersteigt, und die Zwischenschicht auswärts wirkt, um in den Eingriff mit der Innenfläche der Außenschicht zu treten, wenn die Motordrehzahl den voreingestellten Wert übersteigt.

4. System nach Anspruch 2, bei dem die erste und die zweite Zentrifugalkupplung (FC101, FC102) eine dreilagige Struktur mit einer Innenschicht, einer Zwischenschicht und einer Außenschicht bilden, die Zwischenschicht mit der Welle (S104) und die Innenschicht mit dem Motor (ICE101) verbunden sind, die Innenschicht sich auswärts in den Eingriff mit der Innenschicht aufweitet, wenn die Drehzahl des Motors (ICE101) den voreingestellten Wert übersteigt, die Zwischenschicht auswärts wirkt, um in den Eingriff mit der Innenfläche der Außenschicht zu treten, und die Außenschicht sich mit dem Motor (ICE101) verbindet, wenn die Drehzahl der primären elektrodynamischen Einheit (E101) die voreingestellte Drehzahl übersteigt.

5. System nach einem der Ansprüche 1 bis 4, bei dem die Ausgangseinrichtung (T103) eine Ausgangskupplung aufweist.

6. System nach einem der Ansprüche 1 bis 4, bei dem die Ausgangseinrichtung (T103) eine Ausgangsgetriebemechanik und eine Ausgangskupplung aufweist.

7. System nach einem der Ansprüche 1 bis 6, weiterhin mit einer Welle (S105), die mit der Ausgangseinrichtung (T103) verbunden ist, einem mit dieser Welle verbundenen Differenzialgetriebe (DG) und einer Vielzahl mit dem Differenzialgetriebe verbundener Differenzialwellen (S105R, S105L).

8. System nach einem der Ansprüche 1 bis 7, weiterhin mit einer sekundären dynamoelektrischen Einheit (E102), die mit dem Motor (ICE101) gekoppelt ist; einer elektrischen Energiespeichereinrichtung (ESD101), die mit der sekundären dynamoelektrischen Einheit E102) und der primären dynamoelektrischen Einheit (E101) verbunden ist; und einer Steuerung.

9. System nach Anspruch 8, bei dem die primäre dynamoelektrische Einheit (E101) aus der elektrischen Energiespeichereinrichtung (ESD101) mit Elektrizität gespeist und unter der voreingestellten Drehzahl drehen gelassen wird, die dynamoelektrische Einheit die Welle (S104) antreibt, um die Ausgangseinrichtung (T103) wahlweise anzutreiben, und, wenn die primäre dynamoelektrische Einheit (E101) über der genannten voreingestellten Drehzahl drehen gelassen wird, die erste Zentrifugalkupplung (FC101) antriebsseitig mit der angetriebenen Seite in den Eingriff tritt und so der Motor (ICE101) mit der primären dynamoelektrischen Einheit (E101) verbunden wird.

10. System nach Anspruch 8 oder 9, bei dem die Steuerung eine zentrale Steuereinheit (CCU101), eine an die primäre und die sekundäre dynamoelektrische Einheit (E101, E102) angeschlossene Antriebssteuereinrichtung (CD101) und eine Handsteuer-Schnittstelle (M101) aufweist, wobei mit der Antriebssteuereinrichtung (CD101) die Drehzahl der primären dynamoelektrischen Einheit (E101) sowie weiterhin steuerbar ist, ob die primäre und die sekundäre dynamoelektrische Einheit beide gemeinsam oder jeweils einzeln als Motor oder als Generator arbeiten.

11. System nach einem der Ansprüche 1 bis 10, bei dem die Ausgangseinrichtung eine Ausgangsgetriebemechanik (T103) aufweist.

12. System nach Anspruch 11, bei dem die Ausgangsgetriebemechanik (T103) ein Getriebe aufweist aus der Gruppe der Getriebe mit festem Drehzahl-Übertragungsverhältnis, der Getriebe mit variablem Drehzahl-Übertragungsverhältnis und der Planetengetriebe.

13. System nach einem der Ansprüche 1 bis 10, bei dem die Ausgangseinrichtung eine Ausgangskupplung (CL101) aufweist.

14. System nach einem de Ansprüche 1 bis 10, bei dem die Ausgangseinrichtung eine Ausgangsgetriebemechanik (T103) und eine Ausgangskupplung (CL101) aufweist.

15. System nach einem der Ansprüche 1 bis 14 weiterhin mit einer zwischen der Zentrifugalkupplung (FC101) und dem Motor (ICE101) angeordneten Getriebemechanik (T104).

16. System nach Anspruch 15, bei dem die zwischen der Zentrifugalkupplung (FC101) und dem Motor (ICE101) angeordnete Getriebemechanik (T104) ein Getriebe ist aus der Gruppe der Getriebe mit festem Drehzahl-Übertragungsverhältnis, der Getriebe mit variablem Drehzahl-Übertragungsverhältnis, der variablen Lenkgetriebe, der mehrstufigen Variogetriebe und der stufenlosen Variogetriebe.

17. System nach einem der Ansprüche 1 bis 16, bei dem der Motor (ICE101) ein Verbrennungskraftmotor ist.

18. System nach Anspruch 17, bei dem der Motor (ICE101) weiterhin Anlauf- und Betriebsdrehzahl-Steuer- oder Regeleinrichtungen aufweist.

19. System nach einem der Ansprüche 1 bis 18, bei dem der Motor (ICE101) weiterhin periphere Schnittstelleneinrichtungen einschl. eines Brennstoffsystems, eines Luftzu- und -abführsystems, eines Zündsystems und eines Kühlsystems aufweist.

20. System nach einem der Ansprüche 1 bis 19, bei dem die primäre dynamoelektrische Einheit (E101) eine Charakteristik aufweist, dass die Drehzahl der primären dynamoelektrischen Einheit (E101) bei abnehmender Last steigt.

21. System nach einem der Ansprüche 1 bis 20, bei dem die primäre dynamoelektrische Einheit (E101) im Eingang stromgeregelt ist derart, dass die erzeugte kinetische Rotationsenergie das Drehmoment mit zunehmender Last steigert.

22. System nach einem der Ansprüche 1 bis 21, bei dem die primäre dynamoelektrische Einheit (E101) aus der Gruppe der WS-, GS-, mit Bürsten oder der bürstenlos arbeitenden, der Synchron-, Asynchron, Innen- und Außenrotor-Motoren/Generatoren gewählt ist.

23. System nach Anspruch 8 oder einem der Ansprüche 9 bis 22, wenn abhängig vom Anspruch 8, bei dem die sekundäre dynamoelektrische Einheit (E102) aus der Gruppe der WS-, GS-, mit Bürsten oder der bürstenlos arbeitenden, der Synchron-, Asynchron, Innen- und Außenrotor-Motoren/Generatoren gewählt ist.

24. System nach Anspruch 23, bei dem die sekundäre dynamoelektrische Einheit (E102) ein Startermotor für den Motor (ICE101) ist.

25. System nach einem der Ansprüche 1 bis 18, weiterhin mit einer Getriebemechanik (T102), mit der die primäre dynamoelektrische Einheit (E101) mit der Welle (S104 und/oder S105) verbindbar ist.

26. System nach Anspruch 25, bei dem die zwischen der primären dynamoelektrischen Einheit (E101) und der Welle (S104 und/oder S105) angeordnete Getriebemechanik (T102) aus der Gruppe der Getriebe gewählt ist mit festem Drehzahl-Übertragungsverhältnis, der Getriebe mit variablem Drehzahl-Übertragungsverhältnis, der variablen Lenkgetriebe, der mehrstufig variablen Getriebe und der stufenlos variablen Getriebe.

27. System nach Anspruch 25 oder 26, bei dem die Ausgangseinrichtung eine Ausgangsgetriebemechanik (T103) zwischen der Welle (S104) und der Last aufweist.

28. System nach Anspruch 27, bei dem die Ausgangsgetriebemechanik (T103) ein Getriebe aufweist, das aus der Gruppe der Getriebe mit festem Drehzahl-Übertragungsverhältnis, der Getriebe mit variablem Drehzahl-Übertragungsverhältnis und der Planetengetriebe gewählt ist.

29. System nach Anspruch 1, bei dem ein erstes Ende des Einweg-Getriebes (SWC101) mit der lastseitigen Welle (S104) und ein zweites Ende des Einweg-Getriebes (SWC101) mit der ersten Seite der Zentrifugalkupplung (FC101) gekoppelt sind.

30. System nach Anspruch 4 oder einem der Ansprüche 5 bis 28, wenn vom Anspruch 4 abhängig, bei dem das Einweg-Getriebe (SWC101) über die lastseitige Welle (S104) mit der dynamoelektrischen Einheit (E101) gekoppelt ist.

31. System nach Anspruch 7, wenn abhängig vom Anspruch 4, bei dem die dynamoelektrische Einheit eine erste und eine zweite Komponente (E101 L, E101 R) aufweist, mit deren erster Komponente (E101 L) die Differenzialwelle (S105L) und mit deren zweiter Komponente (E101 R) die Differenzialwelle (S105R) antreibbar sind.

32. System nach Anspruch 29, weiterhin mit einer steuerbaren Kupplung (CL102), die mit der Zentrifugalkupplung (FC101) gekoppelt oder ein Teil derselben ist und mit der ein Eingriff und/oder ein Trennen der Ausgangswelle (S103) des Motors (ICE101) mit dem bzw. von der lastseitigen Welle (S104) steuerbar möglich sind.

33. System nach Anspruch 32, weiterhin mit einer Ausgangswelle (CL101).

34. System nach Anspruch 33, weiterhin mit einer Welle (S105), die mit der Ausgangseinrichtung (T103) verbunden ist, mit einem mit dieser Welle verbundenen Differenzialgetriebe (DG), und mit einer Vielzahl von Differenzialwellen (S105R, S105L), die mit dem Differenzialgetriebe verbunden sind, wobei die dynamoelektrische Einheit eine erste und eine zweite Komponente (E101 L bzw. E101 R) aufweist und mit der ersten Komponente (E101 L) die Differenzialwelle (S105L) und der zweiten Komponente (E101 R) die Differenzialwelle (S105R) antreibbar sind.

35. System nach Anspruch 3 oder 4, bei dem das Einweg-Getriebe (SWC101) zwischen die Ausgangswelle (S103) des Motors (ICE101) und die lastseitige Welle (S104) eingefügt ist.

36. System nach Anspruch 1, bei dem das Einweg-Getriebe (SWC101) zwischen die Ausgangswelle (S103) des Motors (ICE101) und die lastseitige Welle (S104) eingefügt ist.

37. System nach Anspruch 4 weiterhin mit einer Ausgangskupplung (CL301), die mit der Ausgangswelle (S103) des Motors (ICE101) gekoppelt und mit der die zweite Zentrifugalkupplung (FC102) kuppelbar ist.

38. System nach Anspruch 4, bei dem das Einweg-Getriebe (SWC101) zwischen die Ausgangswelle (S103) und den Motor (ICW101) eingefügt und mit der primären elektrodynamischen Einheit (E101) die lastseitige Welle (S104) dreh- und antreibbar ist.

39. System nach einem der Ansprüche 31 bis 34, bei dem das Einweg-Getriebe (SWC101) zwischen die Ausgangswelle (S103) des Motors (ICE101) und die lastseitige Welle (S104) eingefügt ist.

## Revendications

1. Système d'unité dynamo-électrique commandée en vitesse comprenant :
• un moteur (ICE101) comportant un arbre de sortie (S103) ;
• une unité dynamo-électrique primaire (E101) prévue pour entraîner un arbre côté charge (S104) à rotation directement ou par l'intermédiaire d'un mécanisme de transmission (T102) ;
• un embrayage centrifuge (FC101) comportant un premier côté relié à l'arbre côté charge (S104) et un second côté relié à l'arbre de sortie (S103) du moteur;
• une unité de production d'électricité (E102) entraînée par le moteur ;
• une interface manuelle de commande (M101) pour commander le système par l'intermédiaire d'une unité centrale de commande (CCU101) ;
• un dispositif de stockage (ESD101) prévu pour être chargé par l'unité de production d'électricité afin de produire l'énergie électrique pour entraîner l'unité dynamo-électrique (E101) par lequel la rotation de l'unité électrique de dynamo (E101) à une vitesse prédéfinie provoque l'engagement du premier côté de l'embrayage centrifuge (FC101) avec le second côté pour ainsi relier le moteur à l'arbre côté charge (S104) ;
• une charge reliée à l'arbre côté charge (S104) par l'intermédiaire d'un dispositif de sortie (T103) ; et
• une transmission à sens unique (SWC101) ;
**caractérisé en ce que** la transmission à sens unique (SWC101) fournit la transmission de puissance entre le moteur et l'arbre côté charge (104), la disposition étant telle que lorsque l'embrayage centrifuge (FC101) est en engagement, le moteur (IC101) entraîne l'arbre côté charge (S104) ; et, lorsque l'embrayage centrifuge (FC101) est désengagé, le moteur (IC101) entraîne l'unité dynamo-électrique (E101) par l'intermédiaire de l'unité de production d'électricité (E102) pour fournir de l'électricité et/ou charger le dispositif de stockage (ESD101).

2. Système selon la revendication 1, comportant en outre un second embrayage centrifuge (FC102) prévu pour s'engager avec la charge lorsque la vitesse du moteur (ICE101) est supérieure à une valeur prédéfinie, et pour se désengager d'avec la charge lorsque la vitesse du moteur est inférieure à la valeur prédéfinie.

3. Système selon la revendication 2, dans lequel les premier et second embrayages centrifuges (FC101, FC102) forment une structure à trois couches comprenant une couche interne, une couche intermédiaire et une couche externe, et dans lequel la couche intermédiaire est reliée au moteur (ICE101) et la couche interne est reliée à l'arbre (S104), la couche interne se prolongeant vers l'extérieur pour s'engager avec la couche intermédiaire lorsque l'unité dynamo-électrique primaire (E101) dépasse ladite vitesse prédéfinie, et la couche intermédiaire agissant vers l'extérieur pour s'engager avec une face interne de la couche externe lorsque la vitesse dudit moteur excède ladite valeur prédéfinie.

4. Système selon la revendication 2, dans lequel les premiers et seconds embrayages centrifuges (FC101, FC102) forment une structure à trois couches comprenant une couche interne, une couche intermédiaire et une couche externe, et dans lequel la couche intermédiaire est reliée à l'arbre (S104) et la couche interne est reliée au moteur (ICE101), la couche interne se prolongeant vers l'extérieur pour s'engager avec la couche intermédiaire lorsque la vitesse du moteur (ICE101) excède ladite valeur prédéfinie, et la couche intermédiaire agissant vers l'extérieur pour s'engager avec une face interne de la couche externe, la couche externe étant prévue pour se relier au moteur (ICE101) lorsque la vitesse de ladite unité dynamo-électrique primaire (E101) dépasse ladite vitesse prédéfinie.

5. Système selon l'une quelconque des revendications 1 à 4, dans lequel le dispositif de sortie (T103) comporte un embrayage de sortie.

6. Système selon l'une quelconque des revendications 1 à 4, dans lequel le dispositif de sortie (T103) comporte un mécanisme de transmission de sortie et un embrayage de sortie.

7. Système selon l'une quelconque des revendications 1 à 6, comportant en outre un arbre (S105) relié au dispositif de sortie (T103), un ensemble d'engrenage différentiel (DG) relié à cet arbre, et une pluralité d'arbres différentiels (S105R, S105L) reliés à l'ensemble d'engrenage différentiel.

8. Système selon l'une quelconque des revendications 1 à 7, comportant en outre :
• une unité dynamo-électrique secondaire (E102) couplée au moteur (ICE101) ;
• un dispositif de stockage d'énergie électrique (ESD101) relié à l'unité dynamo-électrique secondaire (E102) et à l'unité dynamo-électrique primaire (E101) ; et
• un contrôleur.

9. Système selon la revendication 8, dans lequel, lorsque l'unité dynamo-électrique primaire (E101) est alimentée en électricité à partir du dispositif de stockage d'énergie électrique (ESD101) et entraîné à rotation pour tourner en-dessous de ladite vitesse prédéfinie, l'unité dynamo-électrique entraîne l'arbre (S104) pour entraîner sélectivement le dispositif de sortie (T103) ; et, lorsque l'unité dynamo-électrique primaire (E101) est entraînée à rotation au-dessus de ladite vitesse prédéfinie, le côté entraînement du premier embrayage centrifuge (FC101) s'engage avec le côté entraîné, reliant de ce fait le moteur (ICE101) à l'unité dynamo-électrique primaire (E101).

10. Système selon la revendication 8 ou la revendication 9, dans lequel le contrôleur comporte une unité centrale de commande (CCU101), un dispositif de commande d'entraînement (CD101) reliée aux unités dynamo-électriques primaires et secondaires (E101, E102), et une interface manuelle de commande (M101), le dispositif de commande d'entraînement (CD101) étant prévu pour commander la vitesse de l'unité dynamo-électrique primaire (E101), et pour commander en outre si les unités dynamo-électriques primaires et secondaires fonctionnent en tant que moteurs, en tant que générateurs, ou en tant que chacun des deux.

11. Système selon l'une quelconque des revendications 1 à 10, dans lequel le dispositif de sortie comporte un mécanisme de transmission de sortie (T103).

12. Système selon la revendication 11, dans lequel le mécanisme de transmission de sortie (T103) comporte une transmission choisie dans le groupe constitué par une transmission à rapport fixe de vitesse, une transmission à rapport variable de vitesse, et une transmission planétaire.

13. Système selon l'une quelconque des revendications 1 à 10, dans lequel le dispositif de sortie comporte un embrayage de sortie (CL101).

14. Système selon l'une quelconque des revendications 1 à 10, dans lequel le dispositif de sortie comporte un mécanisme de transmission de sortie (T103) et un embrayage de sortie (CL101).

15. Système selon l'une quelconque des revendications 1 à 14, comportant en outre un mécanisme de transmission (T104) relié entre l'embrayage centrifuge (FC101) et le moteur (ICE101).

16. Système selon la revendication 15, dans lequel le mécanisme de transmission (T104) relié entre l'embrayage centrifuge (FC101) et le moteur (ICE101) est une transmission choisie dans le groupe constitué par une transmission à rapport fixe de vitesse, une transmission à rapport variable de vitesse, une transmission à direction variable, une transmission variable à plusieurs étages, et une transmission variable sans étage.

17. Système selon l'une quelconque des revendications 1 à 16, dans lequel le moteur (ICE101) est un moteur à combustion interne.

18. Système selon la revendication 17, dans lequel le moteur (ICE101) comporte en outre des dispositifs de commande de vitesse de démarrage et de fonctionnement.

19. Système selon l'une quelconque des revendications 1 à 18, dans lequel le moteur (ICE101) comporte en outre des dispositifs d'interface périphériques comprenant un système d'approvisionnement en carburant, une entrée d'air et un dispositif d'échappement, un circuit d'allumage, et un système de refroidissement.

20. Système selon l'une quelconque des revendications 1 à 19, dans lequel l'unité dynamo-électrique primaire (E101) est **caractérisée en ce que** la vitesse de l'unité dynamo-électrique primaire (E101) augmente lorsque la charge diminue.

21. Système selon l'une quelconque des revendications 1 à 20, dans lequel l'unité dynamo-électrique primaire (E101) est prévue pour exécuter un contrôle d'ampérage de l'énergie électrique d'entrée pour produire de l'énergie cinétique de rotation qui augmente le couple à mesure que la charge augmente.

22. Système selon l'une quelconque des revendications 1 à 21, dans lequel l'unité dynamo-électrique primaire (E101) est choisie dans le groupe constitué par un moteur/générateur à courant continu, à courant alternatif, à balais, sans balais, synchrone, asynchrone, à rotor interne et à rotor externe.

23. Système selon la revendication 8 ou selon l'une quelconque des revendications 9 à 22 lorsque dépendantes de la revendication 8, dans lequel l'unité dynamo-électrique secondaire (E102) est choisie dans le groupe constitué par un moteur/générateur à courant continu, à courant alternatif, à balais, sans balais, synchrone, asynchrone, à rotor interne et à rotor externe.

24. Système selon la revendication 23, dans lequel l'unité dynamo-électrique secondaire (E102) est un moteur de démarreur pour le moteur (ICE101).

25. Système selon l'une quelconque des revendications 1 à 18, comportant en outre un mécanisme de transmission (T102) pour relier l'unité dynamo-électrique primaire (E101) à l'arbre (S104 et/ou S105).

26. Système selon la revendication 25, dans lequel le mécanisme de transmission (T102) relié entre l'unité dynamo-électrique primaire (E101) et l'arbre (S104 et/ou S105) est une transmission choisie dans le groupe constitué par une transmission à rapport fixe de vitesse, une transmission à rapport variable de vitesse, une transmission à direction variable, une transmission variable à plusieurs étages, et une transmission variable sans étage.

27. Système selon la revendication 25 ou la revendication 26, dans lequel le dispositif de sortie comporte un mécanisme de transmission de sortie (T103) relié entre l'arbre (S104) et la charge.

28. Système selon la revendication 27, dans lequel le mécanisme de transmission de sortie (T103) comporte une transmission choisie dans le groupe constitué par une transmission à rapport fixe de vitesse, une transmission à rapport variable de vitesse, et une transmission planétaire.

29. Système selon la revendication 1, dans lequel une première extrémité de la transmission à sens unique (SWC101) est couplée à l'arbre côté charge (S104), et dans lequel une second extrémité de la transmission à sens unique (SWC101) est couplée au premier côté de l'embrayage centrifuge (FC101).

30. Système selon la revendication 4, ou l'une quelconque des revendications 5 à 28 lorsque dépendantes de la revendication 4, dans lequel la transmission à sens unique (SWC101) est couplée à l'unité dynamo-électrique (E101) par l'intermédiaire de l'arbre côté charge (S104).

31. Système selon la revendication 7 lorsque dépendante de la revendication 4, dans lequel l'unité dynamo-électrique comporte des composants des première et seconde unités dynamo-électriques (E101L, E101 R), le composant de la première unité dynamo-électrique (E101L) étant prévu pour entraîner l'arbre différentiel (S105L) et le composant de la seconde unité dynamo-électrique (E101R) étant prévu pour entraîner l'arbre différentiel (S105R).

32. Système selon la revendication 29, comportant en outre un embrayage contrôlable (CL102), couplé à ou faisant partie de l'embrayage centrifuge (FC101), pour permettre l'engagement et/ou le désengagement contrôlables de l'arbre de sortie (S103) du moteur (ICE101) avec l'arbre côté charge (S104).

33. Système selon la revendication 32, comportant en outre un embrayage de sortie (CL101).

34. Système selon la revendication 33, comportant en outre un arbre (S105) relié au dispositif de sortie (T103), un ensemble d'engrenage différentiel (DG) relié à cet arbre et une pluralité d'arbres différentiels (S105R, S105L) reliés à l'ensemble d'engrenage différentiel, et dans lequel l'unité dynamo-électrique comporte des composants des première et seconde unités dynamo-électriques (E101L, E101R), le composant de la première unité dynamo-électrique (E101L) étant prévu pour entraîner l'arbre différentiel (S105L) et le composant de la seconde unité dynamo-électrique (E101R) étant prévu pour entraîner l'arbre différentiel (S105R).

35. Système selon la revendication 3 ou la revendication 4, dans lequel la transmission à sens unique (SWC101) est placée entre l'arbre de sortie (S103) du moteur (ICE101) et l'arbre côté charge (S104).

36. Système selon la revendication 1, dans lequel la transmission à sens unique (SWC101) est placée entre l'arbre de sortie (S103) du moteur (ICE101) et l'arbre côté charge (S104).

37. Système selon la revendication 4, comportant en outre un embrayage de sortie (CL301) couplé à l'arbre de sortie (S103) du moteur (ICE101), et prévu pour s'engager avec le second embrayage centrifuge (FC102).

38. Système selon la revendication 4, dans lequel la transmission à sens unique (SWC101) est placée entre l'arbre de sortie (S103) du moteur (ICE101) et l'arbre côté charge (S104), et dans lequel l'unité dynamo-électrique primaire (E101) est prévue pour faire tourner, et pour entraîner, l'arbre côté charge (S104).

39. Système selon l'une quelconque des revendications 31 à 34, dans lequel la transmission à sens unique (SWC101) est placée entre l'arbre de sortie (S103) du moteur (ICE101) et l'arbre côté charge (S104).
